# EUROPEAN PATENT APPLICATION

(11) **EP 1 312 657 A2**
(43) Date of publication of application: **21.05.2003**
(21) Application number: 02292881.6
(22) Date of filing: 20.11.2002
(51) Int. Cl.: C09J 7/02

(54) **Wire harness material and wire harness comprising same**

(30) Priority: 20.11.2001 JP 2001354872; 28.11.2001 JP 2001363084; 12.12.2001 JP 2001378784
(71) Applicant: Sumitomo Wiring Systems, Ltd., Yokkaichi-City, Mie, 510-8503 (JP); SUMITOMO ELECTRIC INDUSTRIES, LTD, Osaka-shi, Osaka-fu 541 (JP)
(72) Inventor: Ishikawa, Masanao, Yokkaichi-city, Mie 510-8503 (JP); Yoshimoto, Jun, Yokkaichi-city, Mie 510-8503 (JP); Kondo, Mamoru, Yokkaichi-city, Mie 510-8503 (JP); Nakamura, Tetsuya, Yokkaichi-city, Mie 510-8503 (JP); Hase, Tatsuya, Yokkaichi-city, Mie 510-8503 (JP); Kawakita, Genya, Yokkaichi-city, Mie 510-8503 (JP); Deguchi, Yoshiharu, Yokkaichi-city, Mie 510-8503 (JP); Yamashita, Takamichi, Yokkaichi-city, Mie 510-8503 (JP); Hayami, Hiroshi, Konohana-ku, Osaka (JP)
(74) Representative: Uchida, Kenji

(57) **Abstract**

A wire harness protective material comprising a tape-like substrate made of a nonhalogen-based resin or vinyl chloride resin coated with an adhesive comprising an acrylic resin as a main component on at least one side thereof. Preferably, the adhesive and/or the substrate comprises an age resistor and/or a copper inhibitor incorporated therein. The content of the age resistor is defined to be from 10% to 500% based on the content of the age resistor in the covering material for the wire coated with a nonhalogen-based resin in the bundle of wires on which the wire harness protective material is wound. The content of the copper inhibitor is defined to be from 0.001 to 5 parts by weight based on 100 parts by weight of the adhesive resin component or from 0.001 to 5 parts by weight based on 100 parts by weight of the substrate resin component.

## Description

### BACKGROUND OF THE INVENTION

The present invention relates to a wire harness protective material and a wire harness comprising such a wire harness protective material and more particularly to a wire harness protective material suitable for the protection of the periphery of a bundle of wires in a wire harness for use in the wiring of automobile, electrical appliances, etc. and a wire harness comprising such a wire harness protective material.

Further, the present invention relates to a wire harness protective material and a wire harness comprising such a wire harness protective material and more particularly to a tape-like, tubular or sheet-like wire harness protective material which is adapted to cover the periphery of a bundle of halogen-free insulated wires (occasionally referred simply to as "HF wires") comprising an electrical conductor (occasionally referred simply to as "bundle of HF wires") coated with a polyolefin-based insulating resin material totally free of halogen element or having a lower content of halogen element than at least vinyl chloride resin or the same bundle of halogen-free insulated wires as mentioned above except that some of the wires are replaced by PVC-insulated wires (occasionally referred simply to as "PVC wire") comprising an electrical conductor (occasionally referred simply to as "bundle of mixed wires" coated with a vinyl chloride resin material and a wire harness obtained by covering a bundle of HF wires or a bundle of mixed wires by this wire harness protective material.

Still further, the present invention relates to a wire harness protective material and a wire harness comprising such a wire harness protective material and more particularly to a tape-like, tubular or sheet-like wire harness protective material which is adapted to cover the periphery of a bundle of halogen-free insulated wires (occasionally referred simply to as "HF wires") comprising an electrical conductor containing copper (occasionally referred simply to as "bundle of HF wires") coated with a polyolefin-based insulating resin material totally free of halogen element or having a lower content of halogen element than at least vinyl chloride resin or the same bundle of halogen-free insulated wires as mentioned above except that some of the wires are replaced by PVC-insulated wires (occasionally referred simply to as "PVC wire") comprising an electrical conductor (occasionally referred simply to as "bundle of mixed wires" coated with a vinyl chloride resin material and a wire harness obtained by covering a bundle of HF wires or a bundle of mixed wires by this wire harness protective material.

### [Related Art]

In recent years, high performance and high function have been rapidly attained mainly in the art of automobile, electrical appliances, etc. At the same time, there is a trend for more automobile and electrical appliances to have various electronic devices incorporated therein. In order to operate these facilities accurately, the inner wiring in automobile and electrical appliances comprises a plurality of wires.

In general, such a plurality of wires are bundled into a bundle which is used in the form of so-called wire harness. This wire harness is also called assembled wire. The wire harness is produced by assembling a plurality of wires into a form required for wiring. The wires thus assembled is then provided with necessary connectors to branches and terminals. A wire harness protective material having a tape-like form, tubular form or sheet-like form is then wound on the bundle of wires to obtain a wire harness.

As a wire to be used in the aforementioned wire harness there has been widely used a wire made of a conductor such as copper coated on the periphery thereof with a vinyl chloride resin such as polyvinyl chloride which has additives such as plasticizer and heat stabilizer incorporated therein for the purpose of providing flexibility, moldability, etc. (hereinafter referred to as "PVC-based wire").

As the tape-like wire harness protective material there has been widely used an adhesive tape comprising a tape-like substrate made of a vinyl chloride resin such as polyvinyl chloride coated with an adhesive comprising a natural rubber, synthetic rubber or the like having a tackfier, plasticizer or the like incorporated therein (hereinafter referred to as "PVC-based adhesive tape").

However, such a vinyl chloride resin which has been widely used as a general-purpose resin has a halogen element in its molecular structure and thus is disadvantageous in that when automobiles catch fire or electrical appliances are combusted and discarded, it emits a harmful halogen-based gas to the atmosphere, causing environmental pollution.

In recent years, therefore, it has been often practiced to replace the vinyl chloride resin for use in PVC-based wires, PVC-based adhesive tapes, etc. by nonhalogen-based resins or the like as a measure for environmental protection.

As such a favorable substitute resin there has been studied, e.g., a nonhalogen-based fire-retardant olefinic resin having a fire retardant, age resistor, copper inhibitor or the like incorporated therein in a specified amount.

Under these circumstances, referring to the wires in wire harness, wires made of a conductor such as copper coated with a nonhalogen-based resin (hereinafter referred to as "HF-based wires") and PVC-based wires can be used in admixture or HF-based wires can be used alone, not to mention the single use of PVC-based wires.

On the other hand, referring to the tape-like wire harness protective material, an adhesive tape comprising a substrate made of a nonhalogen-based resin instead of vinyl chloride resin (hereinafter referred to as "HF-based adhesive tape") and a PVC-based adhesive tape can be used in admixture or an HF-based adhesive tape can be used alone, not to mention the single use of PVC-based adhesive tape.

The wire harness for automobile is used in severe atmospheres such as the surrounding of engine. Therefore, one of important quality factors of the wire harness for automobile is thermal aging resistance.

In general, the thermal aging resistance of a vinyl chloride resin material is governed by a phenomenon that it allows the plasticizer contained therein to vaporize with time and becomes hardened to have a drop of elongation. On the other hand, the thermal aging resistance of an olefinic resin material such as nonhalogen-based fire-retardant olefinic resin is governed by a phenomenon that it allows the age resistor contained therein to be consumed with time and becomes denatured to have a drop of elongation.

However, the inventors made a thermal aging test on a wire harness obtained by winding a PVC-based adhesive tape on the periphery of a bundle of HF-based wires and a wire harness obtained by winding a PVC-based adhesive tape on the periphery of a bundle of HF-based wires and PVC-based wires in admixture. As a result, it is found that the thermal aging resistance of HF-based wires in the various wire harnesses is far poorer than that of HF-based wires.

A thermal aging resistance is also made on a wire harness obtained by winding a HF-based adhesive tape on the periphery of a bundle of HF-based wires and a wire harness obtained by winding a HF-based adhesive tape on the periphery of a bundle of HF-based wires and PVC-based wires in admixture. Similarly to the aforementioned results, it is found that the thermal aging resistance of HF-based wires in the various wire harnesses is far poorer than that of HF-based wires alone.

Then, the inventors makes a study of deterioration of various wires in wire harnesses obtained by winding a tape-like wire harness protective material on various bundles of wires. As a result, it is found that the deterioration of wires might be attributed to the following reasons.

In other words, since a tape-like wire harness protective material has a substrate coated with an adhesive on the surface thereof as mentioned above, the bundles of wires and the adhesive come in direct contact with each other when the tape-like wire harness is wound on the periphery of various bundles of wires. Therefore, migration occurs. In other words, the tackfier, plasticizer, etc. contained in the adhesive migrate, diffuse and penetrate in the covering material for HF-based wire.

In general, the covering material for HF-based wire often comprises an age resistor, copper inhibitor or the like incorporated therein in a predetermined amount such that the performance of the wire cannot be impaired. For example, when the tackfier or plasticizer migrates into the covering material, the age resistor which has previously been incorporated in the covering material is dissolved in and eluted with the tackfier or plasticizer. The tackfier or plasticizer containing the age resistor thus eluted migrates back to the wire harness protective material.

Therefore, the amount of the age resistor contained in the covering material for HF-based wire decreases beyond the level of decrease with time which can be ordinarily anticipated due to the migration of the tackfier or plasticizer. Therefore, the thermal aging resistance of HF-based wire in wire harness is far poorer than that of HF-based wire alone.

Further, the tackfier or plasticizer which has migrated into the covering material acts on copper, if the conductor of HF-based wire is made of a copper-based material, to produce copper ions having a catalytic effect. In general, the copper ions produced in the covering material for HF-based wire are caught as a chelate compound by the copper inhibitor which has previously been contained in the covering material, losing its catalytic effect. When the ionization of copper is accelerated by the tackfier or plasticizer in the adhesive, the copper inhibitor is consumed more than normally anticipated and runs short.

Therefore, the copper ions present in excess with respect to copper inhibitor cannot be stabilized as a chelate compound. Thus, the copper ions having a catalytic effect cause the chemical bond of the nonhalogen-based resin as a covering material to be severed, accelerating the deterioration of the covering material. Accordingly, the thermal aging resistance of HF-based wire in wire harness is far poorer than that of HF-based wire alone.

This kind of deterioration can be caused not only by the tackfier or plasticizer contained in the adhesive but also by other low molecular compounds having an effect of deteriorating the covering material contained in the adhesive or decomposition products produced by the thermal decomposition of the adhesive (hereinafter referred to as "adhesive deterioration accelerating factor"). Accordingly, it can be thought that the adhesive in the tape-like wire harness protective material which comes in direct contact with the surface of the bundle of wires has a great effect particularly on the deterioration of the wires.

In the case where the substrate has a plasticizer or the like incorporated therein as in PVC-based adhesive tape, similar deterioration can occur not a little also when the plasticizer contained in the substrate, other lowmolecular compounds having an effect of deteriorating the covering material contained in the substrate or decomposition products produced by thermal decomposition of the substrate (hereinafter referred to as "substrate deterioration accelerating factor") migrate into the covering material for wire.

Further, the wire harness for use in automobile and other vehicle wiring is also called assembled wire. The wire harness is obtained by selecting wires having a proper specification anddiameter, cutting the wires, bundling the wires into abundle of wires, inserting the bundle of wires in a tube or wrapping the bundle of wires by a sheet, taping the bundle of wires thus covered, and then attaching various parts to the bundle of wires to form an assembled part. As the wire there is normally used PVC wire comprising a bundle of a few copper wires covered by a polyvinyl chloride (PVC) resin coat. As the copper wire there is annealed soft copper wire or tin-plated soft copper wire. As the tape there is widely used a PVC tape comprising a substrate made of PVC resin having a layer of adhesive (adhesive layer) provided thereon. As other outer protective materials there are widely used PVC tube and/or PVC sheet. In other words, in addition to insulating covering material for wire, tape, tube, sheet and other wire protective materials and wire harness protective material are normally made of PVC resin.

A study has recently been made of substitutes for PVC wire, which has bee widely used as insulated wire, as a countermeasure against environmental problems. For example, a halogen-free wire covered by a nonhalogen-based polyolefin comprising a large amount of an inorganic filler incorporated therein as a fire retardant has been proposed.

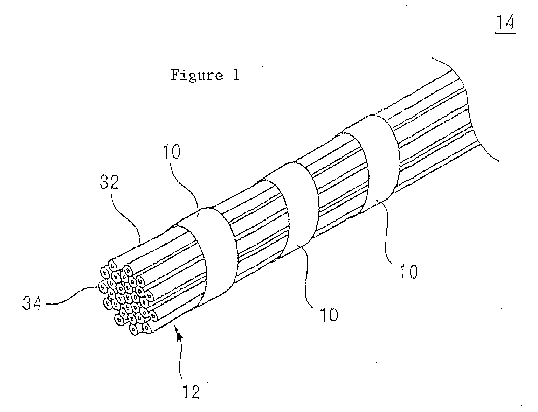

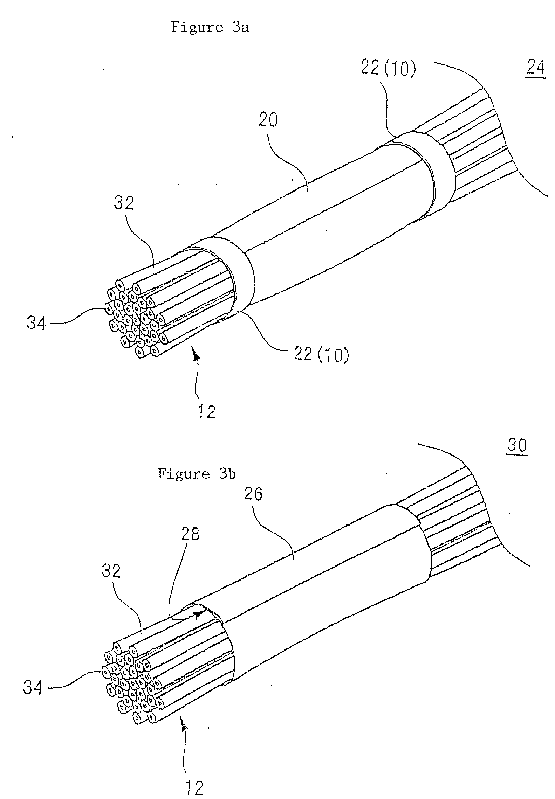

Under these circumstances, the inventors prepared a wire harness comprising a bundle of HF wires having a PVC tube or sheet attached thereto bound by a PVC tape with adhesive at both ends of the PVC tube or sheet and a wire harness comprising a bundle of mixed wires having a PVC tube or sheet attached thereto bound by a PVC tape with adhesive at both ends of the PVC tube or sheet (occasionally referred simply to as "PVC protective material") (see Figs. 1 to 3B) and examined these wire harnesses for thermal aging resistance. As a result, it was found that the thermal aging resistance of the wire harness comprising a bundle of mixed wires is far poorer than that of the wire harness comprising a bundle of HF wires. The inventors studied the cause of the difference in thermal aging resistance. As a result, it was found that the difference in thermal aging resistance might be attributed to the migration of plasticizer.

Firstly, HF wire previously comprises a predetermined amount of an age resistor incorporated therein. When the plasticizer has migrated from the PVC protective material, this age resistor elutes with the plasticizer. The plasticizer returns from HF wire to PVC protective material, which has a low gradient of age resistor concentration, with the age resistor carried thereon. It is thus thought that HF wire shows a drop of age resistor content and hence accelerated aging. Accordingly, it is necessary that the diffusion of the age resistor be prevented. To this end, it is thought effective to prevent the migration of the plasticizer as a carrier.

Secondly, when the plasticizer contained in PVC protective material migrates to HF wire, it reacts with the copper wire to accelerate the ionization of copper, giving one of the causes of copper damage. This is because copper ion acts as a catalyst to severe the chemical bond of the polymer of the covering material for wire, deteriorating the polymer of the covering material for wire. Accordingly, it is necessary that the ionization of copper be inhibited. To this end, it is thought effective to prevent the migration of the plasticizer which reacts with copper.

Thirdly, when the plasticizer contained in PVC protective material migrates to HF wire, it reacts with the copper wire to accelerate the ionization of copper as mentioned above, causing the overconsumption of the copper inhibitor which has previously been incorporated in HF in a predetermined amount. This is because the copper inhibitor which has previously been incorporated in HF wire in a predetermined amount is adapted to "stabilize copper ions produced by the reaction of water content in the air which has penetrated HF wire through PVC protective material with the copper wire" but is not adapted to stabilize copper ions produced by the effect of the plasticizer. Accordingly, it is necessary that the consumption of the copper inhibitor be reduced. To this end, it is thought effective to inhibit the ionization of copper and hence the migration of the plasticizer.

Fourthly, the copper inhibitor contained in HF wire elutes with the plasticizer which has migrated from PVC protective material. The plasticizer returns from HF wire to PVC protective material, which has a low gradient of age resistor concentration, with the age resistor carried thereon. Then, the copper inhibitor is consumed to stabilize copper ions produced by the effect of water content in the air and plasticizer. At the same time, the copper inhibitor diffuses from HF wire into PVC protective material while being carried on the plasticizer. Thus, the content of the copper inhibitor is synergistically reduced, further accelerating the aging of HF wire. Accordingly, it is necessary that the diffusion and reduction of the copper inhibitor be prevented. To this end, it is thought effective to prevent the migration of the plasticizer as a carrier.

The inventors made thermal aging resistance test also on a wire harness comprising a bundle of wires having a tube or sheet made of a nonhalogen-based polyethylene or polypropylene (occasionally referred simply to as "HF protective material") bound by a tape with a nonhalogen-based adhesive (HF protective material). In this case, too, it was found that the thermal aging resistance of the wire harness comprising a bundle of mixed wires is far poorer than that of the wire harness comprising a bundle of HF wires. The cause of this phenomenon is thought that the migration of the plasticizer between PVC wire and HF wire occurs in the bundle of mixed wires as mentioned above. In this case, too, it is necessary that the diffusion of the age resistor or copper inhibitor or the migration of the plasticizer be prevented.

As a result of trials and errors, the inventors reached a conclusion that by incorporating an adsorbent in the substrate of PVC protective material or HF protective material, the plasticizer can be adsorbed by the adsorbent, making it possible to prevent the migration of the plasticizer. Another conclusion was reached on the diffusion of the age resistor or the copper inhibitor that when the concentration of the age resistor or the copper inhibitor is kept properly equilibrated between HF wire and PVC protective material or between HF wire and PVC wire, the diffusion of the age resistor or the copper inhibitor from HF wire into PVC protective material or PVC wire can be prevented even if some migration that cannot prevent the migration of the plasticizer cannot be prevented.

Still further, the wire harness for use in automobile and other vehicle wiring is also called assembled wire. The wire harness is obtained by selecting wires having a proper specification and diameter, cutting the wires, bundling the wires into a bundle of wires, inserting the bundle of wires in a tube or wrapping the bundle of wires by a sheet, taping the bundle of wires thus covered, and then attaching various parts to the bundle of wires to form an assembled part. As the wire there is normally used PVC wire comprising a bundle of a few copper wires covered by a polyvinyl chloride (PVC) resin coat. As the copper wire there is annealed soft copper wire or tin-plated soft copper wire. As the tape there is widely used a PVC tape comprising a substrate made of PVC resin having a layer of adhesive (adhesive layer) provided thereon. Asother outer protective materials there are widely used PVC tube and/or PVC sheet. In other words, in addition to insulating covering material for wire, tape, tube, sheet and other wire protective materials and wire harness protective material are normally made of PVC resin.

A study has recently been made of substitutes for PVC wire, which has bee widely used as insulated wire, as a countermeasure against environmental problems. For example, a halogen-free wire covered by a nonhalogen-based polyolefin comprising a large amount of an inorganic filler incorporated therein as a fire retardant has been proposed.

Under these circumstances, the inventors prepared a wire harness comprising a bundle of HF wires having a PVC tube or sheet attached thereto bound by a PVC tape with adhesive at both ends of the PVC tube or sheet and a wire harness comprising a bundle of mixed wires having a PVC tube or sheet attached thereto bound by a PVC tape with adhesive at both ends of the PVC tube or sheet (occasionally referred simply to as "PVC protective material") and examined these wire harnesses for thermal aging resistance. As a result, it was found, that the thermal aging resistance of the wire harness comprising a bundle of mixed wires is far poorer than that of the wire harness comprising a bundle of HF wires. The inventors studied the cause of the difference in thermal aging resistance. As a result, it was found that the difference in thermal aging resistance might be attributed to the ionization of copper or the migration of plasticizer.

Firstly, the ionization of copper occurs when water content in the air passes through PVC protective material into HF wire to ionize copper constituting the copper wire. It is thought that these copper ions have a high oxidation potential and act as a catalyst that severs the chemical bond of the polymer of the wire covering material, causing the deterioration of the polymer of the wire covering material. The ionization of copper occurs also when the plasticizer incorporated in PVC protective material diffuses into HF wire to react with copper constituting the copper wire and accelerate the ionization of copper. It is thought that these copper ions, too, act as a catalyst that severs the chemical bond of the polymer of the wire covering material, deteriorating the polymer of the wire covering material.

HF wire normally comprises a predetermined amount of a copper inhibitor incorporated therein to complex and stabilize copper ions produced due to the effect of water content in the air. Accordingly, if copper ions are produced also by the reaction of copper with the plasticizer as mentioned above, the predetermined amount of the copper inhibitor runs short.

Further, the copper inhibitor contained in HF wire elutes with the plasticizer which has migrated from PVC protective material. The plasticizer returns from HF wire to PVC protective material, which has a low gradient of concentration (of copper inhibitor). Then, the copper inhibitor is consumed to stabilize not only copper ions produced by the effect of the air but also copper ions produced by the plasticizer. At the same time, the copper inhibitor diffuses from HF wire into PVC protective material while being carried on the plasticizer. Thus, the content of the copper inhibitor is synergistically reduced, further accelerating the aging of HF wire. Moreover, the aging of PVC protective material, too, can be accelerated by the discharge of the plasticizer.

Moreover, HF wire comprises a predetermined amount of an age resistor incorporated therein. The age resistor, too, elutes with the plasticizer which has migrated from PVC protectivematerial. The plasticizer then returns from HF wire to PVC protective material, which has a low gradient of concentration. Thus, the content of the age resistor in HF decreases, accelerating the aging of HF wire. Further, the aging of PVC protective material, too, can be accelerated by the discharge of the plasticizer.

The inventors made thermal aging resistance test also on a wire harness comprising a bundle of wires having a tube or sheet made of a nonhalogen-based polyethylene or polypropylene (occasionally referred simply to as "HF protective material") bound by a tape with a nonhalogen-based adhesive (HF protective material) . In this case, too, it was found that the thermal aging resistance of the wire harness comprising a bundle of mixed wires is far poorer than that of the wire harness comprising a bundle of HF wires. The cause of this phenomenon is thought that the ionization of copper or the migration of the plasticizer between PVC wire and HF wire occurs in the bundle of mixed wires as mentioned above.

Under these circumstances, the inventors made trials and errors on the utilization of the migration of plasticizer. As a result, an idea was obtained that when PVC protective material, too, has a copper inhibitor incorporated therein in a higher concentration than in HF wire, the copper inhibitor can be diffused into HF wire while being carried on the plasticizer which is migrating because the copper inhibitor is dissolved in the plasticizer, making it possible to make up for the consumption of the copper inhibitor.

The inventors also obtained an idea that when an age resistor is incorporated in PVC protective material and HF wire in the same proportion (based on the organic polymer), there occurs the same gradient of concentration of age resistor between adjacent protective materials or wires, making it possible to prevent the mioration of the age resistor even if the plasticizer migrates and hence inhibit the reduction of the content of the age resistor in HF wire.

### SUMMARY OF THE INVENTION

Therefore, an object of the invention is to provide a tape-like wire harness protective material which doesn't remarkably accelerate the deterioration of a wire in a bundle of wires of wire harness, particularly preferably a wire coated with a nonhalogen-based resin, and a wire harness comprising such a wire harness protective material.

In order to solve the aforementioned problem, the wire harness protective material defined in Aspect 1 comprises a tape-like substrate made of a nonhalogen-based resin or vinyl chloride resin having a smaller content of halogen element than vinyl chloride resin compound or free of halogen element coated with an adhesive comprising an acrylic resin as a main component on at least one side thereof.

In accordance with the wire harness protective material defined in Aspect 1, the adhesive with which the tape-like substrate made of a nonhalogen-based resin or vinyl chloride resin is coated on at least one side thereof comprises an acrylic resin as a main component and thus doesn't remarkably accelerate the deterioration of a wire in a bundle of wires.

In other words, an acrylic resin itself is adhesive and flexible. Therefore, unlike the conventional adhesive comprising a rubber-basedresin as a main component, the adhesive comprising an acrylic resin doesn't need to contain a low molecular compound having an effect of deteriorating the covering material such as tackfier and plasticizer. The amount of such a low molecular compound, if any, to be incorporated in the acrylic resin adhesive may be smaller than that in the conventional adhesives. Further, the amount of decomposition products produced when the adhesive itself is heated per unit time is very smaller than that in the conventional adhesives.

In this arrangement, the migration of decomposition products (adhesive deterioration accelerating factor) produced by the thermal decomposition of the adhesive or the low molecular compound having an effect of deteriorating the cover ing material such as tackfier, plasticizer and other adhesive ingredients into the covering material on the wire can be prevented or inhibited. Accordingly, the deterioration of the wire in the bundle of wires due to the migration of the adhesive deterioration accelerating factor cannot be remarkably accelerated.

The wire harness protective material defined in Aspect 2 is a wire harness protective material as defined in Aspect 1, wherein the adhesive and/or the substrate comprises an age resistor and/or copper inhibitor incorporated therein.

In accordance with the wire harness protective material defined in Aspect 2, even when the age resistor in the covering material migrates back toward the wire harness protective material due to the adhesive deterioration accelerating factor or substrate deterioration accelerating factor, if the adhesive and/or the substrate previously comprises an age resistor incorporated therein, the gradient of concentration of age resistor between the wire harness protective material and the covering material can be reduced, making it possible to prevent or inhibit the migration of the age resistor in the covering material toward the wire harness protective material.

Further, in the case where the adhesive and/or the substrate previously comprises a copper inhibitor incorporated therein, the copper inhibitor migrates into the covering material to produce copper ions that can make up for the consumption of the copper inhibitor in the covering material, making it possible to avoid copper damage.

Accordingly, the effect exerted by the use of an acrylic resin as the main component of the adhesive and the effect of avoiding the reduction of the age resistor in the covering material and copper damage in the covering material make a synergism that allows efficient inhibition of deterioration of wire due to migration

The wire harness protective material defined in Aspect 3 is a wire harness protective material defined in Aspect 2, wherein the content of the age resistor in the adhesive and/or the substrate falls within the range of from 10% to 500% based on the content of the age resistor in the covering material for the wire coated with the nonhalogen-based resin containing an age resistor in the bundle of wires wound by the wire harness protective material, the content of the copper inhibitor in the adhesive falls within the range of from 0.001 to 5 parts by weight based on 100 parts by weight of the adhesive resin component and the content of the copper inhibitor in the substrate falls within the range of from 0.001 to 5 parts by weight based on 100 parts by weight of the substrate resin component.

In accordance with the wire harness protective material defined in Aspect 3, the content of the age resistor in the adhesive and/or the substrate falls within the range of from 10% to 500% based on the content of the age resistor in the covering material for the wire coated with the nonhalogen-based resin containing an age resistor in the bundle of wires wound by the wire harness protective material, making it possible to keep the concentration of age resistor equilibrated between the wire harness protective material and the covering material and hence effectively inhibit or prevent the age resistor in the covering material from migrating toward the wire harness protective material.

Further, since the content of the copper inhibitor in the adhesive falls within the range of from 0.001 to 5 parts by weight based on 100 parts by weight of the adhesive resin component and the content of the copper inhibitor in the substrate falls within the range of from 0.001 to 5 parts by weight based on 100 parts by weight of the substrate resin component, the resulting effect of supplying the copper inhibitor into the covering material is drastically exerted and the quality of the wire harness protective material itself cannot be impaired.

Accordingly, the effect exerted by the use of an acrylic resin as the main component of the adhesive and the effect of avoiding the reduction of the age resistor in the covering material and copper damage in the covering material make a synergism that allows efficient inhibition of deterioration of wire due to migration.

The wire harness protective material defined in Aspect 4 is a wire harness protective material defined in Aspect 3, wherein the age resistor incorporated in the adhesive and/or the substrate is of the same kind as that of the age resistor incorporated in the covering material for wire.

In accordance with the wire harness protective material defined in Aspect 4, the age resistor incorporated in the adhesive and/or the substrate is of the same kind as that of the age resistor incorporated in the covering material for wire, the concentration of age resistor can be easily equilibrated between the wire harness protective material and the covering material, making it possible to more effectively inhibit or prevent the age resistor in the covering material frommigrating toward the wire harness protective material.

The wire harness defined in Aspect 5 is a wire harness comprising a wire harness protective material as defined in Aspects 1 to 4 wound on a bundle of wires.

In accordance with the wire harness defined in Aspect 5, a wire harness which can maintain its desired quality over an extended period of time without remarkably deteriorating a wire in a bundle of wires can be obtained.

The wire harness defined in Aspect 6 comprises a wire harness protective material as defined in Aspects 1 to 4 wound on a bundle of wires having at least a wire coated with a nonhalogen-based resin containing an age resistor and having a smaller content of halogen element than vinyl chloride resin compound or free of halogen element.

In accordance with the wire harness defined in Aspect 6, even when a bundle of wires comprises wires coated with a nonhalogen-based resin and wires coated with a vinyl chloride resin in admixture, a wire harness which can maintain a desired quality over an extended period of time without remarkably impairing the wires coated with a nonhalogen-based resin.

Further, an object of the invention is to provide a wire harness protective material which exhibits an excellent thermal aging resistance by preventing the migration of the plasticizer and the diffusion of the age resistor or the copper inhibitor from HF wire into PVC protective material or PVC wire in a wire harness comprising a bundle of HF wires or a bundle of mixed wires obtainedby replacing some of HF wires by PVC wires provided with a tape-like, tubular or sheet-like protective material as a wire harness protective material and a wire harness comprising such a wire harness protective material. In this arrangement, the stabilization of quality of wire in wire harness and the permanent use of wire harness can be attained.

In order to solve the aforementioned problem, the wire harness protective material according to the first invention lies in a tape-like, tubular or sheet-like wire harness protective material which is adapted to cover the periphery of a bundle of halogen-free insulated wires comprising an electrical conductor coated with a halogen-free resin material totally free of halogen element or having a lower content of halogen element than at least vinyl chloride resin or the same bundle of halogen-free insulated wires as mentioned above except that some of the wires are replaced by PVC-insulated wires comprising an electrical conductor coated with a vinyl chloride resin material, wherein the tape-like, tubular and sheet-like substrates with an adhesive comprise an adsorbent incorporated therein as defined in Aspect 7.

Preferred examples of the base polymer to be used in the cove ring material for "halogen-free insulated wire" employable herein include olefinic propylene polymer (homopolymer and propylene random or block copolymer), polyethylene (high density polyethylene, straight-chain low density polyethylene, low density polyethylene, ultralow density polyethylene, etc.), polybutene polymer, ethylene copolymer (ethylene-vinyl acetate copolymer, ethylene-ethyl acrylate copolymer, etc.), olefinic elastomer (polypropylene-ethylene/propylene copolymer, etc.), and copolymers obtained by saturating unsaturated double bond in these copolymers by hydrogenation. These polymers may be used singly or in admixture of two or more thereof. These polymers comprise a fire retardant totally free of metal hydrate such as magnesium hydroxide and aluminum hydroxide incorporated therein as a fire retardant. These polymers may comprise a copper inhibitor, an age resistor and optionally a processing aid or may be crosslinked to enhance its heat resistance. In the invention, it is preferred that these polymers have a copper inhibitor or age resistor incorporated therein. Conceptual examples of the low halogen polymers include those containing a bromine-based fire retardant, and those rendered fire retardant with a halogen-containing resin having a lower halogen content than PVC resin.

In the case of "PVC-insulated wire", PVC resin may be rendered flexible to improve its processability. Alternatively, PVC resin may comprise a plasticizer having a good miscibility with resin and an excellent water resistance and electrical insulation incorporated therein to reduce the material cost. PVC resin may further comprise an age resistor incorporated therein.

Preferred examples of the "electrical conductor" of halogen-free insulated wire and PVC-insulated wire include annealed soft copper wire, and tin-plated soft copper wire.

Tungsten wire. etc. maybeused. However, the electrical conductor of the invention is not limited to these materials.

Preferred examples of the "adsorbent" include carbon black, silica, calcium carbonate, magnesium carbonate, and clay. However, the adsorbent of the invention is not limited to these materials.

In accordance with the wire harness protective material according to Aspect 7 having the aforementioned constitution, the tape-like, tubular and sheet-like substrates with adhesive comprise an adsorbent incorporated therein. Thus, the wire harness protective material can maintain an excellent thermal aging resistance. In this arrangement, the halogen-free insulated wire can be protected, making it possible to prevent the deterioration of thermal aging resistance of the halogen-free insulated wire.

In this case, as the aforementioned substrate there may be used one made of a vinyl chloride resin material as defined in Aspect 8. Preferred examples of the "vinyl chloride resin material" include PVC resin which has been rendered flexible to improve its processability, and PVC resin which comprises a plasticizer having a good miscibility with resin and an excellent water resistance and electrical insulation incorporated therein to reduce the material cost.

In accordance with the wire harness protective material according to Aspect 8 having the aforementioned constitution, the substrate made of a vinyl chloride resin comprises an adsorbent incorporated therein. Thus, the plasticizer is adsorbed by the adsorbent, preventing the migration of the plasticizer from the tape-like, tubular and sheet-like materials with adhesive into the halogen-free insulated wire. In this arrangement, the halogen-free insulated wire can be protected, making it possible to prevent the deterioration of thermal aging resistance of the halogen-free insulated wire.

Alternatively, as defined in Aspect 9, as the substrate there may be used a halogen-free resin material totally free of halogen element or having a lower content of halogen element than at least vinyl chloride resin. As the base polymer of the "halogen-free resin material" there may be used the same material as the base polymer of the covering material for halogen-free insulated wire, The base polymer comprises a low halogen bromine-based fire retardant incorporated therein as a fire retardant. A halogen-free fire retardant such as metal hydrate (e.g., magnesium hydroxide, aluminum hydroxide) may be added.

In accordance with the wire harness protective material according to Aspect 9 having the aforementioned constitution, the substrate made of a halogen-free resin material comprises an adsorbent incorporated therein. Thus, the thermal aging resistance of the plasticizer from the tape-like, tubular and sheet-like materials with adhesive can be improved. In this arrangement, the halogen-free insulated wire can be protected, making it possible to prevent the deterioration of thermal aging resistance of the halogen-free insulated wire.

In any of Aspects 7 to 9, the aforementioned adsorbent may be carbon black or silica as defined in Aspect 4. When the substrate is made of a vinyl chloride resin material, the plasticizer is adsorbed by the adsorbent, preventing the migration of the plasticizer from the tape-like, tubular and sheet-like materials with adhesive into the halogen-free insulated wire. In this arrangement, the halogen-free insulated wire can be protected, making it possible to prevent the deterioration of thermal aging resistance of the halogen-free insulated wire.

In the case where the substrate is made of a halogen-free resin material, the thermal aging resistance of the plasticizer from the tape-like, tubular and sheet-like materials with adhesive can be improved. In this arrangement, the halogen-free insulated wire can be protected, making it possible to prevent the deterioration of thermal aging resistance of the halogen-free insulated wire.

Even in the case where the base polymer of the substrate is not restricted, when the adsorbent is carbon black, the durability of at least the substrate can be enhanced. Alternatively, when the adsorbent is silica, the he at resistance or acid resistance of at least the substrate can be enhanced. In this arrangement, the halogen-free insulated wire can be protected, making it possible to prevent the deterioration of thermal aging resistance of the halogen-free insulated wire.

In the case of Aspect 10, the content of the adsorbent is preferably from 1 to 150 parts by weight based on 100 parts by weight of the base polymer of the substrate as defined in Aspect 5. When the content of the adsorbent falls below 1 part by weight, no effect can be exerted. On the contrary, when the content of the adsorbent exceeds 150 parts by weight, the resulting base polymer exhibits a deteriorated workability. More preferably, the content of the adsorbent is from 5 to 100 parts by weight. When the content of the adsorbent falls below 5 parts by weight, the resulting effect is slightly lower than expected. On the contrary, when the content of the adsorbent exceeds 100 parts by weight, the resulting base polymer exhibits a slightly deteriorated workability.

In the case of Aspects 7 to 12, the aforementioned substrate preferably comprises an age resistor and/or a copper inhibitor incorporated therein as defined in Aspect 6. When the substrate comprises an age resistor and/or a copper inhibitor incorporated therein, the age resistor and/or copper inhibitor in the covering material for halogen-free insulated wire can be prevented from diffusing into the wire harness protective material, making it possible to protect the halogen-free insulated wire and hence prevent the deterioration of thermal aging resistance of the halogen-free insulated wire. Particularly in the case of HF protective material, when the HF protective material comprises an age resistor or copper inhibitor incorporated therein, the HF protective material acts as a barrier to relax the effect of water content in the air or adhesive on the halogen-free insulated wire. In this arrangement, too, the deterioration of thermal aging resistance of HF wire can be prevented.

Further, in the case where the electrical wire is a copper wire, the copper inhibitor in the covering material for halogen-free insulated wire can be effectively consumed to stabilize "copper ions produced by the reaction of water content in the air with the copper wire"/ making it possible to prevent the deterioration of thermal aging resistance of the halogen-free insulated wire.

In the case of Aspect 12, the content of the age resistor in the substrate is preferably such that the proportion of the age resistor in the substrate based on the organic polymer is almost equal to the proportion of the age resistor in the halogen-free insulated wire based on the organic polymer and/or the content of the copper inhibitor in the substrate is such that the proportion of the copper inhibitor in the substrate is such that the proportion of the copper inhibitor in the substrate based on the organic polymer is equal to or half the proportion of the copper inhibitor in the halogen-free insulated wire based on the organic polymer as defined in Aspect 7. In this arrangement, there occurs little or no "concentration gradient causing diffusion" of age resistor and/or copper inhibitor between the halogen-free insulated wire and the wire harness protective material, making it possible to prevent the diffusion of age resistor and/or copper inhibitor.

The term "proportion of age resistor in substrate" as used herein is meant to indicate the percentage (%) of the age resistor in the substrate per organic polymer. The term "proportion of age resistor in wire" as used herein is meant to indicate the percentage (%) of the age resistor in the wire per organic polymer. Similarly, the "proportion of copper inhibitor in substrate" as used herein is meant to indicate the percentage (%) of the copper inhibitor in the substrate per organic polymer. The term "proportion of copper inhibitor in wire" as used herein is meant to indicate the percentage (%) of the copper inhibitor in the wire per organic polymer.

The wire harness protective material according to the second invention lies in a wire harness protective material which is adapted to cover the periphery of a bundle of halogen-free insulated wires comprising an electrical conductor coated with a halogen-free resin material totally free of halogen element or having a lower content of halogen element than at least vinyl chloride resin or the same bundle of halogen-free insulated wires as mentioned above except that some of the wires are replaced by PVC- insulated wires comprising an electrical conductor coated with a vinyl chloride resin material, wherein the tape-like substrate with an adhesive comprises a substrate made of a vinyl chloride resin or a halogen-free resin material totally free of halogen element or having a lower content of halogen element than at least vinyl chloride resin and the substrate and/or the adhesive comprises carbon or silica incorporated therein as an adsorbent in an amount of from 1 to 150 parts by weight based on 100 parts by weight of the base polymer of the substrate as defined in Aspect 14.

In accordance with the wire harness protective material according to Aspect 14 having the aforementioned constitution, the tape-like material with adhesive and/or adhesive comprises silica or carbon black incorporated therein as an adsorbent, making it possible to prevent the halogen-free insulated wire and hence prevent the deterioration of thermal aging resistance of the halogen-free insulated wire. For example, when the substrate is made of a vinyl chloride resin material, the plasticizer is adsorbed by the adsorbent, preventing the migration of the plasticizer from the tape-like, tubular and sheet-like materials with adhesive into the halogen-free insulated wire. In this arrangement, the deterioration of thermal aging resistance of the halogen-free insulated wire can be prevented. Further, when the substrate is made of a halogen-free resin material, the thermal aging resistance of the tape-like material with adhesive can be enhanced, making it possible to prevent the deterioration of thermal aging resistance of the halogen-free insulated wire.

The reason why the content of the adsorbent is defined to be from 1 to 150 parts by weight is that when the content of the adsorbent falls below 1 part by weight, no effect can be exerted, and when the content of the adsorbent exceeds 150 parts by weight, the resulting workability is deteriorated. More preferably, the content of the adsorbent is from 5 to 100 parts by weight. This is because when the content of the adsorbent falls below 5 parts by weight, no effect can be exerted, and when the content of the adsorbent exceeds 100 parts by weight, the resulting workability is deteriorated.

In this case, the tape-like material with an adhesive is preferably arranged such that the content of the age resistor in the substrate is such that the proportion of the age resistor in the substrate based on the organic polymer is almost equal to the proportion of the age resistor in the halogen-free insulated wire based on the organic polymer and/or the content of the copper inhibitor in the substrate is such that the proportion of the copper inhibitor in the substrate is such that the proportion of the copper inhibitor in the substrate based on the organic polymer is equal to or half the proportion of the copper inhibitor in the halogen-free insulated wire based on the organic polymer as defined in Aspect 15. In this arrangement, there occurs little or no "concentration gradient causing diffusion" of age resistor and/or copper inhibitor between the halogen-free insulated wire and the wire harness protectivematerial, making it possible to prevent the diffusion of age resistor and/or copper inhibitor and hence protect the halogen-free insulated wire and prevent the deterioration of thermal aging resistance of the halogen-free insulated wire.

The wire harness according to the third invention lies in a wire harness comprising abundle of halogen-free insulated wires comprising an electrical conductor coated with a halogen-free resin material totally free of halogen element or having a lower content of halogen element than at least vinyl chloride resin or the same bundle of halogen-free insulated wires as mentioned above except that some of the wires are replaced by PVC-insulated wires comprising an electrical conductor coated with a vinyl chloride resin material covered by a wire harness protective material defined in Aspects 7 to 15 on the periphery thereof as defined in Aspect 16.

In accordance with the wire harness defined in Aspect 16 having the aforementioned constitution, the wire harness protective material defined in Aspects 7 to 12 which is adapted to cover the periphery of a bundle of wires comprises an adsorbent incorporated therein, making it possible to prevent the deterioration of thermal aging resistance of the halogen-free insulated wire. For example, when the substrate is made of a vinyl chloride resin material, the plasticizer is adsorbed by the adsorbent, preventing the migration of the plasticizer from the wire harness protective material into the halogen-free insulated wire. In this arrangement, the halogen-free insulated wire can be protected, making it possible to prevent the deterioration of thermal aging resistance of the halogen-free insulated wire. Further, when the substrate is made of a halogen-free resin material, the thermal aging resistance of the tape-like material with adhesive can be enhanced, making it possible to prevent the deterioration of thermal aging resistance of the halogen-free insulated wire.

In this case, the covering material for the various wires in the bundle of halogen-free insulated wires or the same bundle of wires as mentioned above except that some of the wires are preferably replaced by the PVC-insulated wires comprises a copper inhibitor and/or an age resistor incorporated therein as defined in Aspect 17. This is because the copper inhibitor and/or age resistor can be prevented from diffusing from the halogen-free insulated wire into the vinyl chloride resin-insulated wire or wire harness protective material. In this arrangement, the deterioration of thermal aging resistance of the halogen-free insulated wire can be prevented.

The copper inhibitor or age resistor to be incorporated in the various wires and wire harness protective materials are preferably of the same kind. There are various kinds of copper inhibitors and age resistors. However, the use of the same kind of copper inhibitor or age resistor makes it possible to maintain a proper equilibrium of concentration more effectively.

Still further, an object of the invention is to provide a wire harness protective material which exhibits an excellent thermal aging resistance by inhibiting the copper damage of HF wire and the diffusion of the age resistor between HF wire and wire harness protective material or PVC wire in a wire harness comprising a bundle of HF wires or a bundle of mixed wires obtained by replacing some of HF wires by PVC wires provided with a tape-like, tubular or sheet-like protective material as a wire harness protective material and a wire harness comprising such a wire harness protective material. In this arrangement, the stabilization of quality of wire in wire harness and the permanent use of wire harness can be attained,

In order to solve the aforementioned problem, the wire harness protective material according to the first invention lies in a tape-like, tubular or sheet-like wire harness protective material which is adapted to cover the periphery of a bundle of halogen-free insulated wires comprising an electrical conductor containing copper coated with a halogen-free resin material totally free of halogen element or having a lower content of halogen element than at least vinyl chloride resin or the same bundle of halogen-free insulated wires as mentioned above except that some of the wires are replaced by PVC-insulated wires comprising an electrical conductor coated with a vinyl chloride resin material, wherein the tape-like, tubular and sheet-like materials with an adhesive comprise a copper inhibitor incorporated therein.

In the invention, as the copper wire there is annealed soft copper wire or tin-plated soft copper wire. In other words, any wire comprising a coated electrical conductor containing copper may be used in the invention. Preferred examples of the base polymer to be used in the covering material for "halogen-free insulated wire" employable herein include olefinic propylene polymer (homopolymer and propylene random or block copolymer), polyethylene (high density polyethylene, straight-chain low density polyethylene, low density polyethylene, ultralow density polyethylene, etc.), polybutene polymer, ethylene copolymer (ethylene-vinyl acetate copolymer, ethylene-ethyl acrylate copolymer, etc.), olefinic elastomer (polypropylene-ethylene/propylene copolymer, etc. ), and copolymers obtained by saturating unsaturated double bond in these copolymers by hydrogenation. These polymers may be used singly or in admixture of two or more thereof. These polymers comprise a fire retardant totally free of metal hydrate such as magnesium hydroxide and aluminum hydroxide incorporated therein as a fire retardant. These polymers may comprise a copper inhibitor, an age resistor and optionally a processing aid or may be crosslinked to enhance its heat resistance. In the invention, it is preferred that these polymers have a copper inhibitor or age resistor incorporated therein. Conceptual examples of the low halogen polymers include those containing a bromine-based fire retardant, and those rendered fire retardant with a halogen-containing resin having a lower halogen content than PVC resin. In the case of "PVC-insulated wire", PVC resin may be rendered flexible to improve its processability. Alternatively, PVC resin may comprise a plasticizer having a good miscibility with resin and an excellent water resistance and electrical insulation incorporated therein to reduce the material cost. PVC resin may further comprise an age resistor incorporated therein.

In accordance with the invention according to Aspect 18 having the aforementioned constitution, the tape-like, tubular and sheet-like materials with adhesive comprise a copper inhibitor incorporated therein, making it possible to supply the copper inhibitor from the tape-like, tubular and sheet-like materials with adhesive into the halogen-free insulated wire even if the copper inhibitor is consumed in the halogen-free insulated wire. In this arrangement, copper damage can be prevented.

In this case, as the tape-like, tubular and sheet-like substrates with adhesive there may be used substrates made of a vinyl chloride resin material as described in Aspect 19. Preferred examples of the "vinyl chloride resin material" include PVC resin which has been rendered flexible to improve its processability, and PVC resin which comprises a plasticizer having a good miscibility with resin and an excellent water resistance and electrical insulation incorporated therein to reduce the material cost . This is because when the plasticizer migrates from the tape-like, tubular and sheet-like materials with adhesive, the copper inhibitor is supplied into HF wire.

Alternatively, as defined in Aspect 20, as the tape-like, tubular and sheet-like substrates with adhesive there may be used substrates made of a halogen-free resin material totally free of halogen element or having a lower content of halogen element than at least vinyl chloride resin. As the base polymer of the "halogen-free resin material" there may be used the same material as the base polymer of the covering material for halogen-free insulated wire. The base polymer comprises a low halogen bromine-based fire retardant incorporated therein as a fire retardant. A halogen-free fire retardant such as metal hydrate (e.g., magnesium hydroxide, aluminum hydroxide) may be added.

In the case of Aspect 19 or 20, the content of the copper inhibitor in the tape-like, tubular or sheet-like material with adhesive is preferably from 0.001 to 5 parts by weight based on 100 parts by weight of the base polymer of the substrate as described in Aspect 21. This is because when the content of the copper inhibitor falls below 0.001 parts by weight based on 100 parts by weight of the base polymer of the substrate, no effect can be exerted, and when the content of the copper inhibitor exceeds 5 parts by weight based on 100 parts by weight of the base polymer of the substrate, blooming occurs. More preferably, the content of the copper inhibitor is from 0.001 to 3 parts by weight. This is because when the content of the copper inhibitor exceeds 3 parts by weight, a tendency is given that the resulting polymer can be less fairly worked into the desired product.

In this case, the tape-like, tubular or sheet-like material with adhesive preferably comprises an age resistor incorporated therein as described in Aspect 22. In this arrangement, the diffusion of the age resistor in the covering material for halogen-free insulated wire into the wire harness protective material can be prevented, making it possible to prevent the deterioration of thermal aging resistance of the halogen-free insulated wire.

In this case, the content of the age resistor in the tape-like, tubular or sheet-like material with adhesive is preferably such that the proportion of the age resistor in the substrate is almost equal to the proportion of the age resistor in the wire as described in Aspect 23. The term "proportion of the age resistor in the substrate" as used herein is meant to indicate the percentage of the age resistor in the substrate based on the organic polymer. The term "proportion of the age resistor in the wire" as used herein is meant to indicate the percentage of the age resistor in the wire based on the organic polymer. In this arrangement, there occurs no gradient of concentration of age resistor between the halogen-free insulated wire and the wire harness protective material, making it possible to prevent the diffusion of the age resistor.

The wire harness protective material according to the second invention lies in a wire harness protective material which is adapted to cover the periphery of a bundle of halogen-free insulated wires comprising an electrical conductor containing copper coated with a halogen-free resin material totally free of halogen element or having a lower content of halogen element than at least vinyl chloride resin or the same bundle of halogen-free insulated wires as mentioned above except that some of the wires are replaced by PVC-insulated wires comprising an electrical conductor coated with a vinyl chloride resin material, wherein the tape-like material with adhesive comprises a copper inhibitor incorporated therein in an amount of from 0.001 to 5 parts by weight based on 100 parts by weight of the base polymer of the substrate as described in Aspect 24.

In accordance with the wire harness protective material according to Aspect 24 having the aforementioned constitution, the tape-like material with adhesive and/or the adhesive comprises a copper inhibitor incorporated therein, making it possible to supply the copper inhibitor from the tape-like material with adhesive into the halogen-free insulated wire even if the copper inhibitor is consumed in the halogen-free insulated wire. In this arrangement, copper damage can be prevented. The reason why the content of the copper inhibitor is predetermined to be from 0.001 to 5 parts by weight based on 100 parts by weight of the base polymer of the substrate is that when the content of the copper inhibitor falls below 0.001 parts by weight based on 100 parts by weight of the base polymer of the substrate, no effect can be exerted, and when the content of the copper inhibitor exceeds 5parts by weight based on 100 parts by weight of the base polymer of the substrate, blooming occurs. More preferably, the content of the copper inhibitor is predetermined to be from 0,001 to 3 parts by weight. This is because when the content of the copper inhibitor exceeds 3 parts by weight, a tendency is given that the resulting polymer can be less fairly worked into the desired product.

In this case, the tape-like material with adhesive preferably comprises an age resistor incorporated in the substrate and/or adhesive and the content of the age resistor in the substrate and/or adhesive is such that the proportion of the age resistor in the substrate is almost equal to the proportion of the age resistor in the wire as described in Aspect 25. This is because the diffusion of the age resistor in the covering material for halogen-free insulated wire into the wire harness protective material can be prevented, making it possible to prevent the deterioration of thermal aging resistance of the halogen-free insulated wire.

The wire harness according to the third invention lies in a wire harness comprising a bundle of halogen-free insulated wires comprising an electrical conductor containing copper coated with a halogen-free resin material totally free of halogen element or having a lower content of halogen element than at least vinyl chloride resin or the same bundle of halogen-free insulated wires as mentioned above except that some of the wires are replaced by PVC-insulated wires comprising an electrical conductor coated with a vinyl chloride resin material coated with a wire harness protective material defined in Aspects 18 to 25 on the periphery thereof as described in Aspect 26.

In accordance with the wire harness according to Aspect 26 having the aforementioned constitution, the copper inhibitor can be supplied from the wire harness protective material described in Aspects 18 to 25, i.e., the tape-like, tubular or sheet-like material with adhesive into the halogen-free insulated wire even if the copper inhibitor is consumed in the halogen-free insulated wire. In this arrangement, copper damage can be prevented. Further, since the wire harness protective material comprises an age resistor incorporated therein, the diffusion of the age resistor in the covering material for halogen-free insulated wire into the wire harness protective material can be prevented, making it possible to prevent the deterioration of thermal aging resistance of the halogen-free insulated wire. The resulting synergistic effect allows the wire harness to have a stabilized wire quality and hence exhibit a good durability over an extendedperiod of time.

In this case, the covering material for the various wires in the bundle of halogen-free insulated wires or the same bundle of wires as mentioned above except that some of the wires are replaced by the PVC-insulated wires preferably comprises a copper inhibitor and/or an age resistor incorporated therein as described in Aspect 27. This is because the deterioration of thermal aging resistance of the wire can be prevented.

The copper inhibitor or age resistor to be incorporated in the various wires and wire harness protective materials are preferably of the same kind. There are various kinds of copper inhibitors and age resistors. However, the use of the same kind of copper inhibitor or age resistor makes it possible to perform the mutual supply of the copper inhibitor between the halogen-free insulatedwire, PVC insulatedwire and wire harness protective material and the prevention of the elution and migration of the age resistor more effectively.

### BRIEF DESCRIPTION OF THE DRAWINGS

Fig. 1 illustrates the external appearance of a tape with adhesive according to an embodiment of implementation of the invention and a wire harness protective material comprising same;
Figs. 2A and 2B illustrate the external appearance of a tube according to an embodiment of implementation of the invention and a wire harness comprising same; and
Figs. 3A and 3B illustrate the external appearance of a sheet according to an embodiment of implementation of the invention and a wire harness comprising same.

### DETAILED DESCRIPTION OF THE PREFERERED EMBODIMENTS

Embodiment of implementation of the invention will be described in detail hereinafter. The wire harness protective material according to the invention is adapted to be wound on the periphery of a bundle of wire harness wires and comprises a tape-like substrate made of a nonhalogen-based resin or vinyl chloride resin having a smaller content of halogen element than vinyl chloride resin compound or free of halogen element coated with an adhesive comprising an acrylic resin as a main component on at least one side thereof.

The term "acrylic resin which is a main component of adhesive" as used herein is meant to indicate a homopolymer comprising acrylic acid or acrylic acid ester as a main monomer or a copolymer of the main monomer and other monomers. These homopolymers or copolymers may be used singly or in admixture.

Specific examples of the acrylic acid ester include methyl acrylate, ethyl acrylate, propyl acrylate, butyl acrylate, 2-ethylhexyl acrylate, 2-hydroxyethyl acrylate, 2-hydroxypropyl acrylate, tetrafurfuryl acrylate, and isononyl acrylate.

Examples of the other monomers include vinyl acetate, acrylonitrile, acrylamide, styrene, methacrylic acid, methyl methacrylate, ethylmethacrylate, propylmethacrylate, n-butyl methacrylate, isopropyl methacrylate, hydroxyethyl methacrylate, hydroxypropyl methacrylate, dimethylaminoethyl methacrylate, glycidyl methacrylate, maleic anhydride, itaconic acid, 1,3-butanediol diacrylate, 1,4-butanediol diacrylate, 1,6-hexanediol diacrylate, diethylene glycol diacrylate, neopentyl glycol diacrylate, and polyethylene glycol diacrylate.

These acrylic resins may be used in various combinations depending on the purpose taking account the adhesiveness, elasticity, cost, etc. Inparticular, ahomopolymer comprising ethyl acrylate, butyl acrylate and 2-ethylhexyl acrylate as main monomers or a copolymer of these main monomers and vinyl acetate or methyl methacrylate may be preferably used. These acrylic resins may be of emulsion type, solvent type or crosslinking type but are not specifically limited. These acrylic resins may comprise various additives such as tackfier, plasticizer and softener incorporated therein as necessary but are not specifically limited.

As the resin constituting the tape-like substrate to be coated with the aforementioned adhesive there may be used any of nonhalogen-based resin and vinyl chloride resin.

The term "nonhalogen-based resin" as used herein is meant to indicate a resin having a smaller content of halogen element than molding material obtained by mixing a vinyl chloride resin with a plasticizer, stabilizer, filler or the like, kneading the mixture, and then shaping the mixture into a moldable form, i.e., so-called vinyl chloride resin compound or free of halogen element.

In other words, the nonhalogen-based resin of the invention not only includes a resin totally free of halogen element but also conceptually includes a resin comprising a halogen element in its structure in a smaller content than vinyl chloride resin compound or a resin comprising such a resin or halogen-free resin having various additives such as halogen-containing fire retardant incorporated therein, i.e., so-called low halogen-based resin.

Specific preferred examples of such a nonhalogen-based resin include nonhalogen fire retardant olefinic resin obtained by adding a halogen-free fire retardant such as magnesium hydroxide and aluminum hydroxide, a fire retardant containing a halogen element such as bromine, e.g., tetrabromobisphenol A and derivative thereof, an age resistor such as phenol-based age resistor and amine-based age resistor, a copper inhibitor such as triazine-based derivative or the like to an olefinic resin such as polypropylene, polyethylene and propylene-ethylene copolymer. However, other nonhalogen-based resins may be used. The invention is not limited to these nonhalogen-based resins.

On the other hand, the term "vinyl chloride resin" as used herein is meant to indicate a homopolymer of vinyl chloride or a copolymer comprising vinyl chloride as a main component. These homopolymers or copolymers may be used singly or in admixture of two or more thereof. Specific examples of the vinyl chloride resin include polyvinyl chloride, ethylene-vinyl chloride copolymer, and propylene-vinyl chloride copolymer.

The aforementioned adhesive and/or substrate preferably comprises at least age resistor and/or copper inhibitor incorporated therein in a predetermined amount.

The term "wire harness protective material according to the invention comprises an age resistor and/or copper inhibitor incorporated therein" as used herein is meant to indicate that when the various resin to be incorporated in the aforementioned adhesive and/or substrate are normally used in other uses, they comprise an age resistor and/or copper inhibitor incorporated therein even if it is not necessary that the various resins be free of age resistor or copper inhibitor.

In general, for example, a polyvinyl chloride often comprises additives such as plasticizer and heat stabilizer incorporated therein and is free of age resistor or the like. However, when a polyvinyl chloride is used as a substrate for the wire harness protective material according to the invention, it is preferred that the polyvinyl chloride comprise an age resistor or the like incorporated therein in a predetermined amount.

The term "age resistor" as used herein is meant to indicate an organic compound which is added to inhibit or retard the change and deterioration of physical properties and chemical properties of a high molecular material with tine due to environmental factors. Specific examples of the age resistor include phenol-based age resistors such as tetrakis-[methylene-3-(3',5'-di-tert-butyl-4'-hydroxypheny l)propionate]methane and octadecyl-3-(3,5-di-tert-butyl-4-hydroxyphenyl)propionate, and amine-based age resistors such as 4,4'-dioctyldiphenylamine and N-phenyl-N'-1,3-dimethylbutyl-p-phenylenediamine. These age resistors may be added singly or in combination of two or more thereof. The invention is not limited to these age resistors.

The content of the age resistor in the adhesive and/or the substrate preferably falls within the range of from 10% to 500% based on the content of the age resistor in the covering material for the wire coated with the nonhalogen-based resin containing an age resistor in the bundle of wires wound by the wire harness protective material.

When the content of the age resistor in the adhesive and/or the substrate falls below 10%, the resulting tendency is that the effect of the invention cannot be sufficiently exerted. On the contrary, when the content of the age resistor in the adhesive and/or the substrate exceeds 500%, the resulting tendency is that the workability can be deteriorated, rendering the product unpractical to disadvantage. More preferably, the content of the age resistor in the adhesive and/or the substrate falls within the range of from 10% to 150% because the migration of the age resistor in the covering material toward the wire harness protective material can be more effectively inhibited. In this case, it is preferred that the age resistor incorporated in the adhesive and/or the substrate be of the same kind as that of the age resistor incorporated in the covering material for wire.

In the aforementioned description, the content of the age resistor in the covering material for the wire coated with a nonhalogen-based resin containing an age resistor is the ratio of the age resistor to the organic component (excluding the age resistor from the organic components constituting the covering material) constituting the covering material. Accordingly, when the content of the age resistor in the covering material is 3% for example, the age resistor is incorporated in the adhesive and/or substrate in an amount such that the content of the age resistor in the adhesive and/or substrate corresponds to a range of from 0.3% to 15%.

On the other hand, the term "copper inhibitor" as used herein is meant to indicate a material which is normally incorporated in a covering material for wire with which a conductor mainly composed of copper is coated on the periphery thereof to catch and stabilize copper ions having a catalytic effect as a chelate compound, thereby preventing deterioration of the covering material due to copper ions, i.e., so-called copper damage.

Specific examples of the copper inhibitor include 1,2, 3-benzotriazole, tolyl triazole, derivative thereof, tolyl triazoleamine salt, tolyl triazole potassium salt, 3-(N-salycyloyl)amino-1,2,4-triazole, triazine derivative, hydrazide derivative such as decamethylene dicarboxylic acid disalycyloyl hydrazide, oxalic acid derivative, and salicylic acid derivative. This type of a copper inhibitor is preferably of low melting type because it can easily melt and migrate into the covering material when the wire harness protective material is heated. These copper inhibitors may be added singly or in combination of two or more thereof. However, the invention is not limited to these copper inhibitors.

The content of the copper inhibitor in the adhesive preferably falls within the range of from 0.001 to 5 parts by weight based on 100 parts by weight of the adhesive resin component and the content of the copper inhibitor in the substrate preferably falls within the range of from 0.001 to 5 parts by weight based on 100 parts by weight of the substrate resin component.

When the content of the copper inhibitor in the adhesive and/or substrate falls below 0.001 parts by weight, the resulting tendency is that the effect of the invention cannot be sufficiently exerted. On the contrary, when the content of the copper inhibitor in the adhesive and/or substrate exceeds 5 parts by weight, blooming occurs. In other words, the additives separate out on the surface of the resin as a crystal, giving a tendency that the quality of the product is impaired to disadvantage. More preferably, the content of the copper inhibitor in the adhesive and/or substrate preferably falls within the range of from 0.01 to 5 parts by weight from the standpoint of further enhancement of the effect of supplying a copper inhibitor into the covering material.

The effect of the wire harness protective material according to the invention will be described hereinafter.

In accordance with the aforementioned wire harness protective material, the adhesive with which the tape-like substrate made of a nonhalogen-based resin or vinyl chloride resin is coated at least on one side thereof comprises an acrylic resin as a main component, preventing the remarkable acceleration of deterioration of the wire in the bundle of wires.

In other words, an acrylic resin itself is adhesive and flexible. Therefore, unlike the conventional adhesive comprising a rubber-basedresin as a main component, the adhesive comprising an acrylic resin doesn't need to contain a low molecular compound having an effect of deteriorating the covering material such as tackfier and plasticizer. The amount of such a low molecular compound, if any, to be incorporated in the acrylic resin adhesive may be smaller than that in the conventional adhesives. Further, the amount of decomposition products produced when the adhesive itself is heated per unit time is very smaller than that in the conventional adhesives.

In this arrangement, the migration of decomposition products (adhesive deterioration accelerating factor) produced by the thermal decomposition of the adhesive or the low molecular compound having an effect of deteriorating the covering material such as tackfier, plasticizer and other adhesive ingredients into the covering material on the wire can be prevented or inhibited. Accordingly, the deterioration of the wire in the bundle of wires due to the migration of the adhesive deterioration accelerating factor cannot be remarkably accelerated.

When the adhesive and/or substrate previously comprises an age resistor incorporated therein, even if the age resistor in the covering material migrates back toward the wire harness protective material due to the adhesive deterioration accelerating factor or substrate deterioration accelerating factor, the gradient of concentration of age resistor between the wire harness protective material and the covering material can be reduced, making it possible to prevent or inhibit the migration of the age resistor in the covering material toward the wire harness protective material.

Specific examples of the aforementioned adhesive deterioration accelerating factor include decomposition products produced by heating a tackfier such as rosin-based resin and terpene-based resin, plasticizer such as phthalic acid ester-based plasticizer (e.g., dioctyl phthalate (DOP), diisononylphthalate (DINP), dibutyl phthalate (DBP)) and resin comprising adhesive as main component. Specific examples of the substrate adhesive deterioration accelerating factor include decomposition products produced by heating a phthalic acid ester-based plasticizer such as dioctyl phthalate (DOP), diisononyl phthalate (DINP) and dibutyl phthalate (DBP) or a substrate such as vinyl chloride resin and olefinic resin.

In particular, when the content of the age resistor in the adhesive and/or substrate falls within the range of from 10% to 500% based on the content of the age resistor in the covering material for the wire coated with the nonhalogen-based resin containing an age resistor in the bundle of wires wound by the wire harness protective material, the concentration of age resistor can be kept equilibrated between the wire harness protective material and the covering material, making it possible to effectively inhibit or prevent the age resistor in the covering material from migrating toward the wire harness protective material.

In addition, when the age resistor incorporated in the adhesive and/or the substrate is of the same kind as that of the age resistor incorporated in the covering material for wire, the concentration of age resistor can be kept equilibrated between the wire harness protective material and the covering material, making it possible to more effectively inhibit or prevent the age resistor in the covering material from migrating toward the wire harness protective material.

On the other hand, when the adhesive and/or substrate previously comprises an age resistor incorporated therein, the copper inhibitor migrates into the covering material to produce copper ions that can make up for the consumption of the copper inhibitor in the covering material, making it possible to avoid copper damage of wire.

In particular, when the content of the copper inhibitor in the adhesive falls within the range of from 0.001 to 5 parts by weight based on 100 parts by weight of the adhesive resin component and the content of the copper inhibitor in the substrate falls within the range of from 0.001 to 5 parts by weight based on 100 parts by weight of the substrate resin component, the resulting effect of supplying the copper inhibitor into the covering material is drastically exerted and the quality of the wire harness protective material itself cannot be impaired.

Accordingly, when the adhesive and/or substrate comprises an age resistor and/or copper inhibitor incorporated therein in an optimum range, the effect exerted by the use of an acrylic resin as the main component of the adhesive and the effect of avoiding the reduction of the age resistor in the covering material and copper damage in the covering material make a synergism that allows further efficient inhibition of deterioration of wire due to migration.

The wire harness comprising the wire harness protective material wound on a bundle of wires will be described hereinafter.

Examples of the bundle of wires in the wire harness according to the invention include a bundle of wires coated with a nonhalogen-based resin containing an age resistor, a bundle of wires coated with a nonhalogen-based resin containing an age resistor and wires coated with a vinyl chloride resin in an arbitrary mixing ratio, and a bundle of wires coated with a vinyl chloride resin. The bundle of wires is not specifically limited. In particular, a bundle of wires containing one or more wires coated with a nonhalogen-based resin containing at least an age resistor is preferred because the effect of the aforementioned wire harness protective material can be sufficiently exerted.

When a bundle of wires coated with a nonhalogen-based resin containing an age resistor and wires coated with a vinyl chloride resin in an arbitrary mixing ratio is used, it is preferred that the covering material for wire coated with a vinyl chloride resin comprise an age resistor incorporated therein in an amount of from 10% to 500% based on the content of age resistor in the covering material for wire coated with a nonhalogen-based resin containing an age resistor. This is to prevent as much as possible the deterioration of wires coated with a nonhalogen-based resin containing an age resistor due to the migration between the wires.

In accordance with the aforementioned wire harness, even when a bundle of wires comprises wires coated with a nonhalogen-based resin and wires coated with a vinyl chloride resin in admixture, a wire harness which can maintain a desired quality over an extended period of time without remarkably impairing the wires coated with a nonhalogen-based resin.

The invention will be further described in the following various examples.

### (Wire)

Firstly, the wire in a bundle of wires on which the adhesive tape as the wire harness protective material according to an embodiment of implementation of the invention is wound will be described. As wires there were prepared the following three kinds of wires.

The first kind of wire is a wire comprising as a covering material a nonhalogen-based resin totally free of halogen element (hereinafter referred to as "HF-based wire"). Referring to the proportion of the covering material in the HF-based wire, the proportion of magnesium hydroxide as fire retardant, age resistor and copper inhibitor are 80 parts by weight, 3 parts by weight and 1 part by weight, respectively, based on 100 parts by weight of polypropylene as set forth in Table 1. The content of the age resistor in the covering material for the HF-based wire is 3 parts by weight based on 100 parts by weight of polypropylene, i.e., 3%.

**Table 1:**

| Compounding of covering material in HF-based wire | | |
|---|---|---|
| Composition | Proportion | Make |
| Polypropylene | 100 | Idemitsu Petrochemical Co., Ltd. |
| Magnesium hydroxide | 80 | Kyowa Chemical Industry Co., Ltd |
| Age resistor | 3 | "Irganox1010", produced by Ciba Specialty Chemicals Co., Ltd. |
| "Content of age resistor" | (3%) | |
| Copper inhibitor | 1 | "CDA-1", produced by ASAHI DENKA KOGYO K.K. |
| Total (parts by weight) | 184 | - |

The second kind of a wire is a wire comprising as a covering material a vinyl chloride resin (hereinafter referred to as "PVC-based wire") . Referring to the proportion of the covering material in the PVC-based wire, the proportion of diisononyl phthalate (DINP) as a plasticizer, calcium carbonate as a filler and a stabilizer are 40 parts by weight, 20 parts by weight and 5 parts by weight, respectively, based on 100 parts by weight of polyvinyl chloride (polymerization degree: 1,300) as set forth in Table 2. The covering material for the PVC-based wire is free of age resistor.

**Table 2:**

| Compounding of covering material in PVC-based wire | | |
|---|---|---|
| Composition | Proportion | Make |
| Polyvinyl chloride (polymerization degree: 1,300) | 100 | TOSOH CORPORATION |
| Diisononyl phthalate | 40 | DAIHACHI CHEMICAL INDUSTRY CO., LTD. |
| Calcium carbonate | 20 | "Super #1700", produced by MARUO CALCIUM CO., LTD. |
| Stabilizer | 5 | "Rup110", produced by ASAHI DENKA KOGYO K.K. |
| Total (parts by weight) | 165 | - |

The third kind of a wire is a wire comprising as a covering material a vinyl chloride resin containing an age resistor (hereinafter referred to as "PVC-based wire (containing an age resistor)"). Referring to the proportion of the covering material in the PVC-based wire (containing an age resistor), the proportion of diisononyl phthalate (DIVA) as a plasticizer, calcium carbonate as a filler, a stabilizer and an age resistor are 40 parts by weight, 20 parts by weight, 5 parts by weight and 4.5 parts by weight, respectively, based on 100 parts by weight of polyvinyl chloride (polymerization degree: 1,300) as set forth in Table 3. The proportion of the age resistor in the PVC-based wire (containing an age resistor) is 4.5 parts by weight based on the sum of 100 parts by weight of polyvinyl chloride and 40 parts by weight of DINP, i.e., 3.2%, that is, about 100% based on the content of the age resistor in the covering material for the HF-based wire, i.e., 3%.

**Table 3:**

| Compounding of covering material in PVC-based wire (containing age resistor) | | |
|---|---|---|
| Composition | Proportion | Make |
| Polyvinyl chloride (polymerization degree: 1,300) | 100 | TOSOH CORPORATION |
| Diisononyl phthalate | 40 | DAIHACHI CHEMICAL INDUSTRY CO., LTD. |
| Calcium carbonate | 20 | "Super #1700", produced by MARUO CALCIUM CO., LTD. |
| Stabilizer | 5 | "Rup110", produced by ASAHI DENKA KOGYO K.K. |
| Age resistor | 4.5 | "Irganox1010", produced by Ciba Specialty Chemicals Co., Ltd. |
| (Content of age resistor) | (3.2%) | |
| Total (parts by weight) | 169.5 | - |

The three kinds of wires are each obtained by twisting 7 soft copper wires having a diameter of 0.32 mm to a twisted copper wire having a section area (outer diameter: 1.0 mm) of 0.5 mm² as a conductor, and then mixing and extruding a covering material having the composition set forth in Tables 1 to 3 through a twin-screw kneader onto the periphery of the conductor to a thickness of 0.3 mm. For the HF-based wire, the mixing temperature and the extrusion temperature were each 250°C. For the PVC-based wire and the PVC-based wire (containing an age resistor), the mixing temperature and the extrusion temperature were each 180°C.

### (Sample adhesive tape as wire harness protective material)

The sample adhesive tape as wire harness protective material according to an embodiment of implementation of the invention will be described hereinafter. As sample adhesive tapes there were prepared the following 6 kinds of adhesive tapes.

The first kind of a sample adhesive tape is a PVC-based adhesive tape of Examples 1 to 5 comprising a substrate made of a vinyl chloride resin containing an age resistor coated with an adhesive comprising as a main component an acrylic resin containing an age resistor on one side thereof (hereinafter referred to as "PVC-based adhesive tape (containing an age resistor)". The formulation of PVC-based adhesive tapes of Examples 1 to 5 (containing an age resistor) will be set forth in Table 4.

In some detail, referring to the formulation of the substrates of Examples 1 to 5, the proportion of dioctyl phthalate (DOP) as a plasticizer are 60 parts by weight, the proportion of calcium carbonate as a filler are 20 parts by weight, the proportion of a stabilizer are 5 parts by weight, and the proportion of an age resistor are 0.5 parts by weight, 5 parts by weight, 7.5 parts by weight, 12.5 parts by weight and 25 parts by weight, respectively, based on 100 parts by weight of polyvinyl chloride (polymerization degree: 1,300). The content of the age resistor in the substrates of Examples 1 to 5 are 0.3%, 3.1%, 4.7%, 7.8% and 15.6%, respectively, that is, about 100%, 100%, 150%, 250% and 500% based on the content of the age resistor in the covering material for HF-based wire, i.e., 3%. The thickness of the substrates were each 0.11 mm.

On the other hand, referring to the formulation of the adhesives of Examples 1 to 5, the proportion of the age resistor are 0.3 parts by weight, 3 parts by weight, 4.5 parts by weight, 7.5 parts by weight and 15 parts by weight, respectively, based on 100 parts by weight of emulsion type acrylic resin. The content of the age resistor in the adhesives of Examples 1 to 5 are 0.3%, 3%, 4.5%, 7.5% and 15%, respectively, that is, 10%, 100%, 150%, 250% and 500% based on the content of the age resistor in the covering material for HF-based wire, i.e., 3%. The thickness of the adhesives were each 0.02 mm.

As opposed to Examples 1 to 5, Comparative Example 1 is a comparative example in which the content of the age resistor in the substrate and adhesive corresponds to about 600% based on the content of the age resistor in the covering material for HF-based wire, i.e., 3%. A conventional product 1 is also given having a substrate totally free of age resistor and comprising an adhesive containing 70 parts by weight of styrene butadiene rubber, 30 parts by weight of natural rubber, 20 parts by weight of zinc oxide and 80 parts by weight of a rosin-based resin instead of emulsion type acrylic resin.

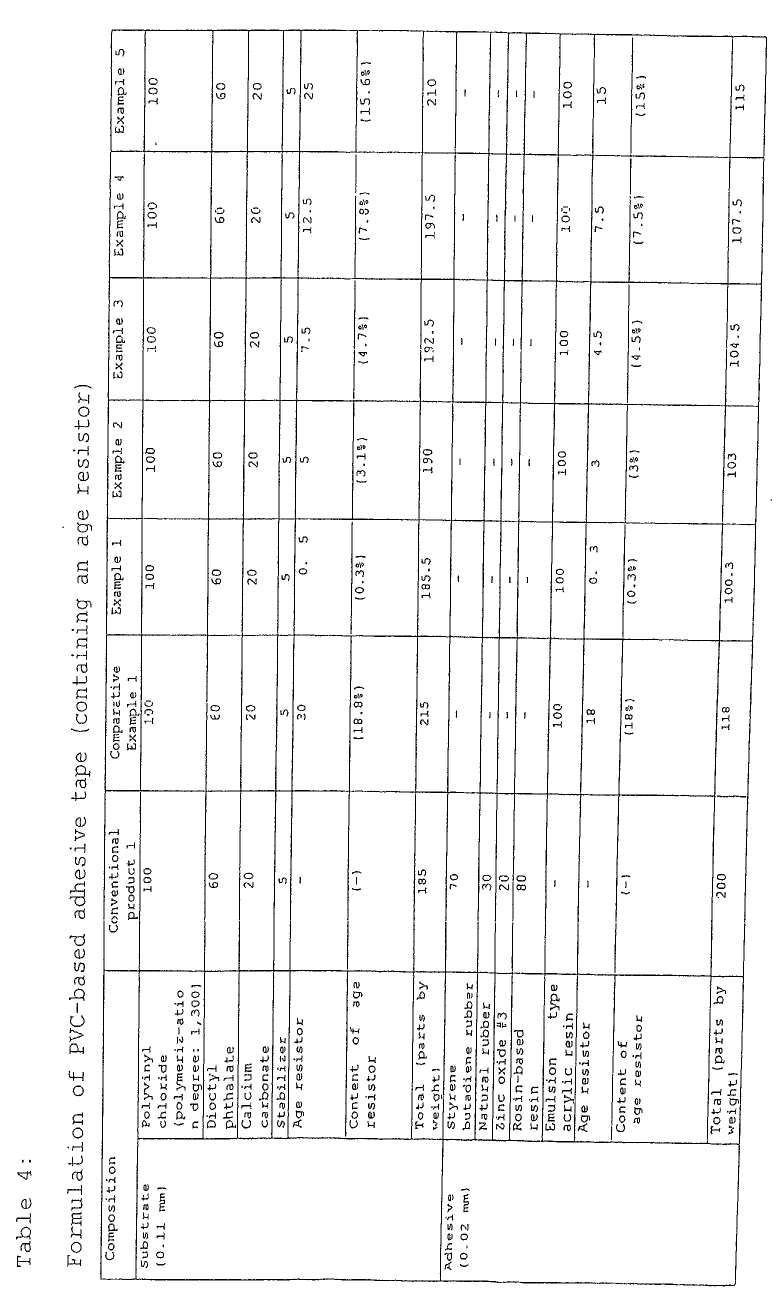

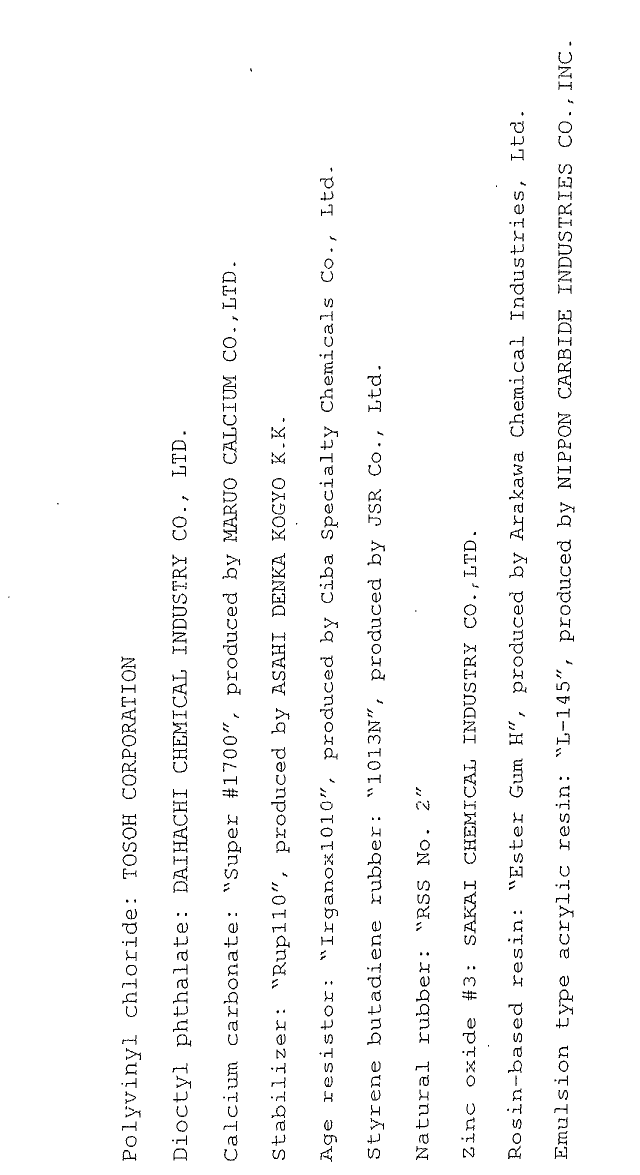

The second kind of adhesive tapes are HF-based adhesive tapes of Examples 6 to 10 comprising a substrate made of a nonhalogen-based resin containing an age resistor coated with an acrylic resin containing an age resistor on one side thereof (hereinafter referred to as "HF-based adhesive tape (containing an age resistor)". The formulation of the HF-based adhesive tapes of Examples 6 to 10 (containing an age resistor) are set forth in Table 5.

In some detail, referring to the formulation of the substrates of Examples 6 to 10, the proportion of a bromine-based fire retardant are 3 parts by weight, the proportion of antimony trioxide are 1.5 parts by weight, and the proportion of an age resistor are 0.4 parts by weight, 3.5 parts by weight, 5.5 parts by weight, 8 parts by weight and 1 6 parts by weight, respectively, based on 100 parts by weight of polyolefin. The content of the age resistor in the substrates of Examples 6 to 10 are 0.4%, 3,4%, 5.3%, 7.8% and 15.5%, respectively, that is, about 100%, 100%, 150%, 250% and 500 % based on the content of the age resistor in the covering material for HF-based wire, i.e., 3%. The thickness of the substrates were each 0.11 mm.

On the other hand, referring to the formulation of the adhesives of Examples 6 to 10, the proportion of the age resistor are 0.3 parts by weight, 3 parts by weight, 4.5 parts by weight, 7.5 parts by weight and 15 parts byweight, respectively, based on 100 parts by weight of emulsion type acrylic resin. The content of the age resistor in the adhesives of Examples 6 to 10 are 0.3%, 3%, 4.5%, 7.5% and 15%, respectively, that is, 10%, 100%, 150%, 250% and 500% based on the content of the age resistor in the covering material for HF-based wire, i.e., 3%. The thickness of the adhesives were each 0.02 mm.

As opposed to Examples 6 to 10, Comparative Example 2 is a comparative example in which the content of the age resistor in the substrate and adhesive corresponds to about 600% based on the content of the age resistor in the covering material for HF-based wire, i.e., 3%. A conventional product 2 is also given having a substrate totally free of age resistor and comprising an adhesive containing 70 parts by weight of styrene butadiene rubber, 30 parts by weight of natural rubber, 20 parts by weight of zinc oxide and 80 parts by-weight of a rosin-based resin instead of emulsion type acrylic resin.

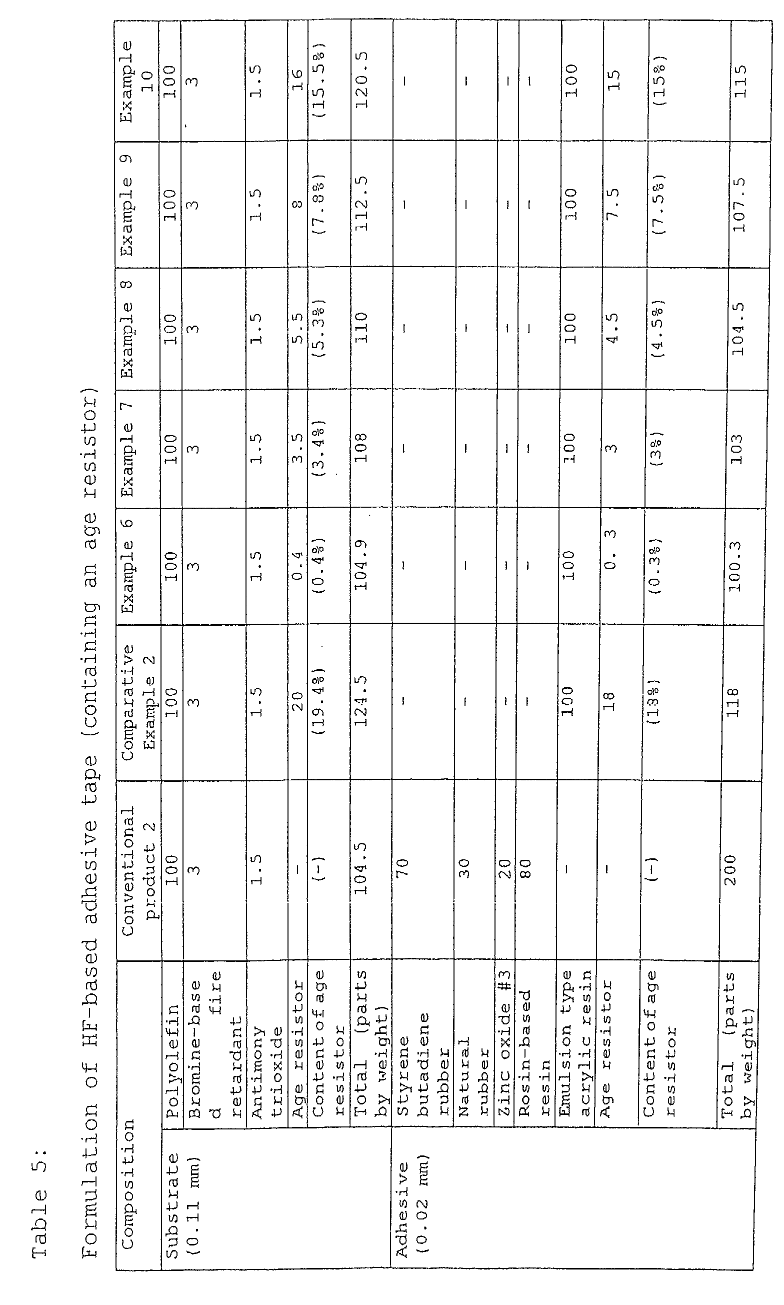

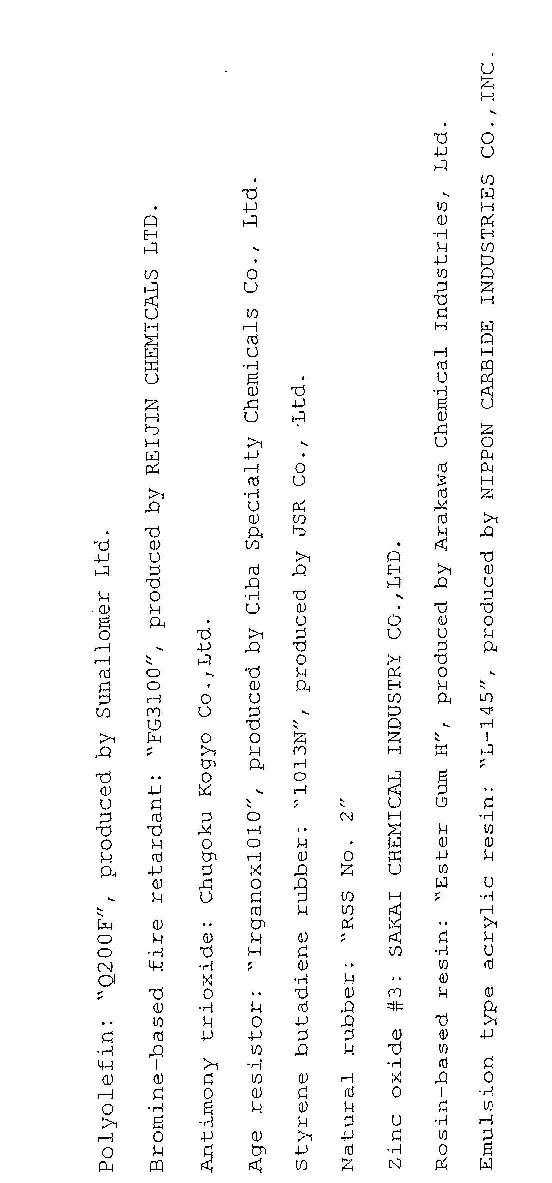

The third kind of adhesive tapes are PVC-based adhesive tapes of Examples 11 to 15 comprising a substrate made of a vinyl chloride resin containing an age resistor coated with an acrylic resin containing an age resistor on one side thereof (hereinafter referred to as "PVC-based adhesive tape (containing an age resistor)". The formulation of the PVC-based adhesive tapes of Examples 11 to 15 (containing an age resistor) are set forth in Table 6.

In some detail, referring to the formulation of the substrates of Examples 11 to 15, the proportion of dioctyl phthalate (DOP) as a plasticizer are 60 parts by weight, the proportion of calcium carbonate as a filler are 20 parts by weight, the proportion of a stabilizer are 5 parts by weight, and the proportion of an age resistor are 0.002 parts by weight, 0.016 parts by weight, 1.6 parts by weight, 4.8 parts by weight and 8 parts by weight, respectively, based on 100 parts by weight of polyvinyl chloride (polymerization degree: 1,300). The content of the age resistor in the substrates of Examples 11 to 15 are 0.001%, 0.01%, 1%, 3% and 5%, respectively, based on 100 parts by weight of the substrate resin components (polyvinyl chloride and DOP) . The thickness of the substrates were each 0.11 mm.

On the other hand, referring to the formulation of the adhesives of Examples 11 to 15, the proportion of the age resistor are 0.001 parts by weight, 0,01 parts by weight, 1 part by weight, 3 parts by weight and 5 parts by weight, respectively, based on 100 parts by weight of emulsion type acrylic resin. The content of the age resistor in the adhesives of Examples 11 to 15 are 0.001 parts by weight, 0.01 parts by weight, 1 part by weight, 3 parts by weight and 5 parts by weight, respectively, based on 100 parts by weight of the adhesive resin component (emulsion type acrylic resin). The thickness of the adhesives were each 0.02 mm.

As opposed to Examples 11 to 15, Comparative Example 3 is a comparative example in which the content of the age resistor in the substrate and adhesive corresponds to 7 parts by weight based on 100 parts by weight of the substrate and adhesive resin component. A conventional product 3 is also given having a substrate totally free of age resistor and comprising an adhesive containing 70 parts by weight of styrene butadiene rubber, 30 parts by weight of natural rubber, 20 parts by weight of zinc oxide and 80 parts by weight of a rosin-based resin instead of emulsion type acrylic resin.

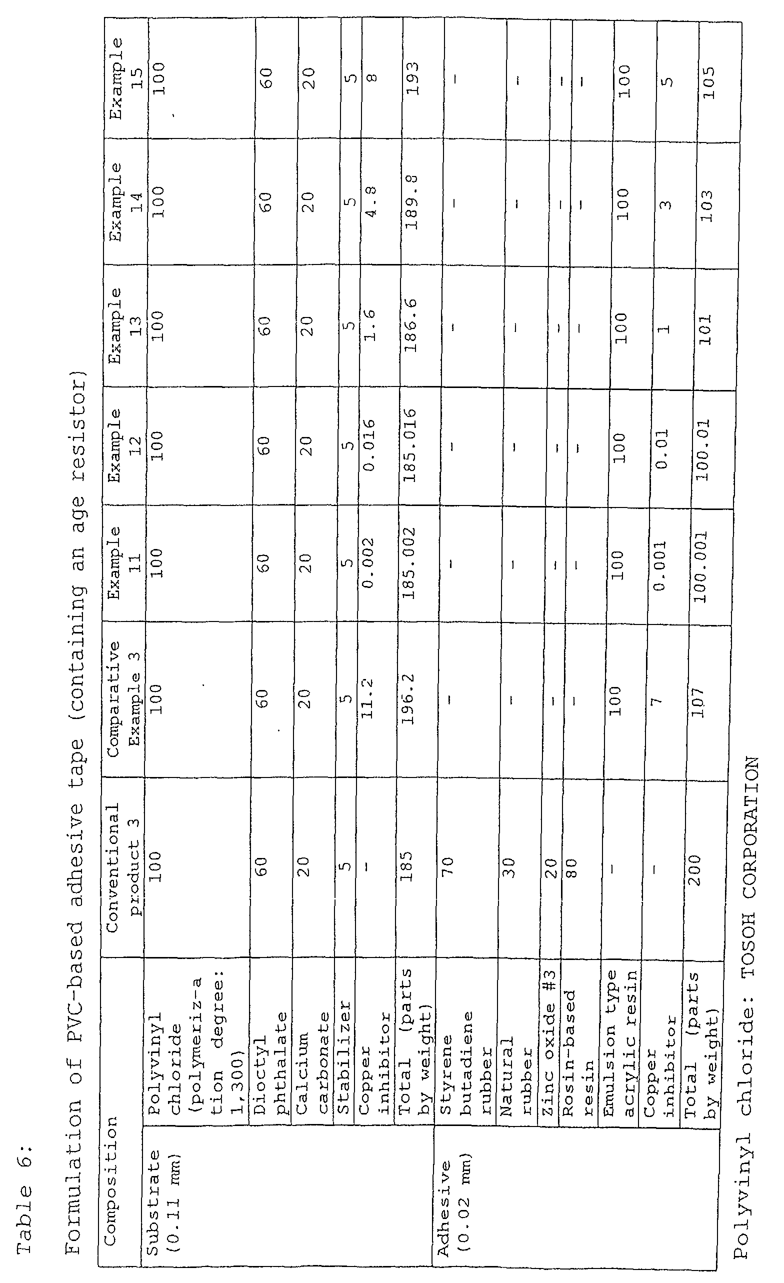

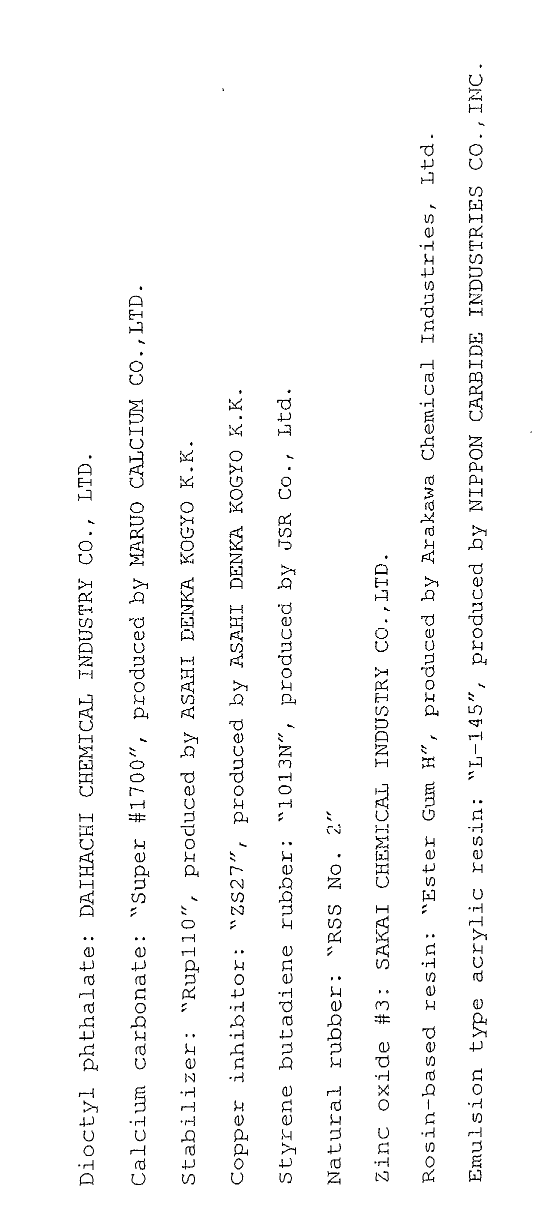

The fourth kind of adhesive tapes are HF-based adhesive tapes of Examples 16 to 20 comprising a substrate made of a nonhalogen-based resin containing an age resistor coated with an acrylic resin containing a copper inhibitor on one side thereof (hereinafter referred to as "HF-based adhesive tape (containing a copper inhibitor)". The formulation of the HF-based adhesive tapes of Examples 16 to 20 (containing a copper inhibitor) are set forth in Table 7.

In some detail, referring to the formulation of the substrates of Examples 16 to 20, the proportion of a bromine-based fire retardant are 3 parts by weight, the proportion of antimony trioxide are 1.5 parts by weight, and the proportion of a copper inhibitor are 0.001 parts by weight, 0.01 parts by weight, 1 part by weight, 3.1 parts by weight and 5.2 parts by weight, respectively, based on 100 parts by weight of polyolefin. The content of the copper inhibitor in the substrates of Examples 16 to 20 are 0.001 parts by weight, 0.01 parts by weight, 1 part by weight, 3 parts by weight and 5 parts by weight, respectively, based on 100 parts by weight of the substrate resin components (polyolefin and bromine-based fire retardant). The thickness of the substrates were each 0.11 mm.

On the other hand, referring to the formulation of the adhesives of Examples 16 to 20, the proportion of the copper inhibitor are 0.001 parts by weight, 0.01 parts by weight, 1 part by weight, 3 parts by weight and 5 parts by weight, respectively, based on 100 parts by weight of emulsion type acrylic resin. The content of the copper inhibitor in the adhesives of Examples 16 to 20 are 0.001 parts by weight, 0.01 parts by weight, 1 part by weight, 3 parts by weight and 5 parts by weight, respectively, based on 100 parts by weight of the adhesive resin component (emulsion type acrylic resin). The thickness of the adhesives were each 0.02 mm.

As opposed to Examples 16 to 20, Comparative Example 4 is a comparative example in which the content of the copper inhibitor in the substrate and adhesive is 7 parts by weight based on 100 parts by weight of the substrate and adhesive resin components. A conventional product 4 is also given having a substrate totally free of copper inhibitor and comprising an adhesive containing 70 parts by weight of styrene butadiene rubber, 30 parts by weight of natural rubber, 20 parts by weight of zinc oxide and 80 parts by weight of a rosin-based resin instead of emulsion type acrylic resin.

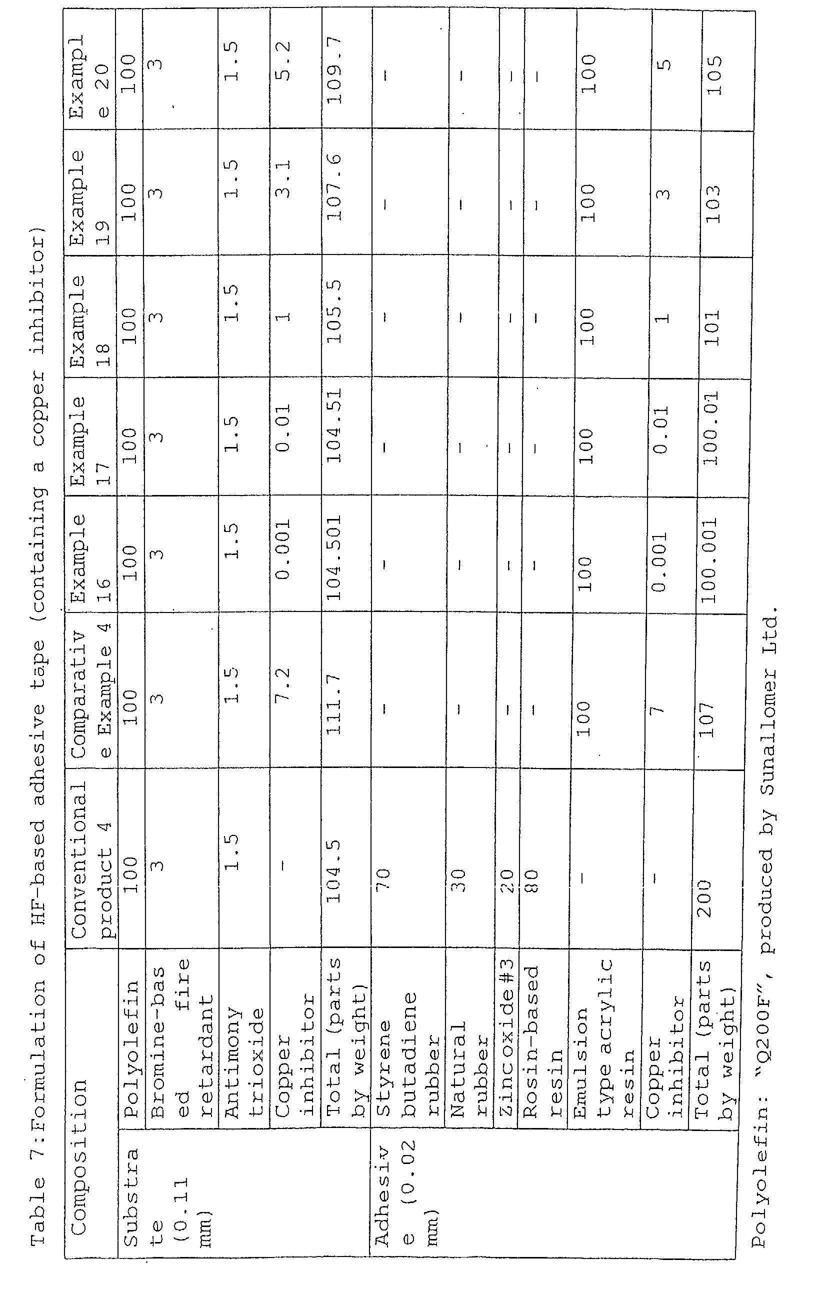

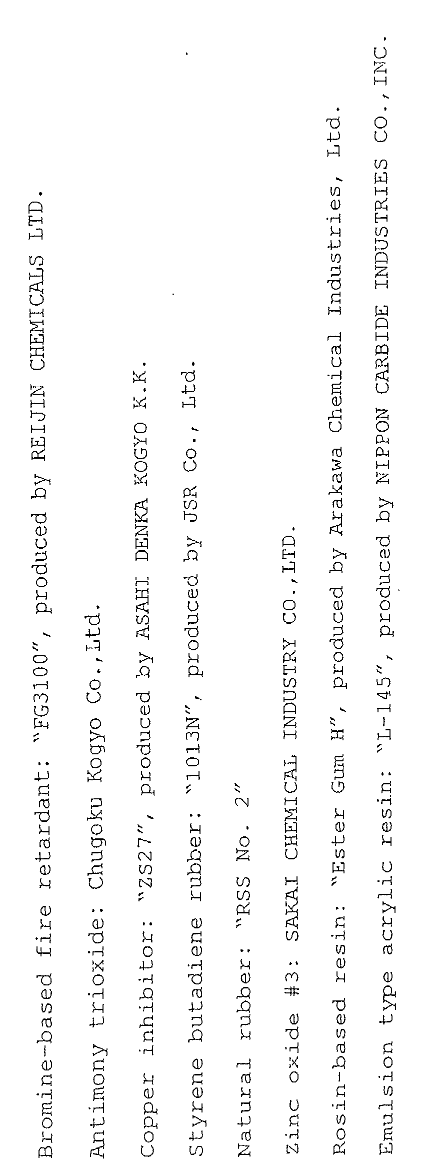

The fifth kind of adhesive tapes are PVC-based adhesive tapes of Examples 21 to 25 comprising a substrate made of a vinyl chloride resin containing an age resistor and a copper inhibitor coated with an adhesive comprising as a main component an acrylic resin containing an age resistor and a copper inhibitor on one side thereof (hereinafter referred to as "PVC-based adhesive tape (containing an age resistor and a copper inhibitor)". The formulation of PVC-based adhesive tapes of Examples 21 to 25 (containing an age resistor and a copper inhibitor) will be set forth in Table 8.

In some detail, referring to the formulation of the substrates of Examples 21 to 25, the proportion of dioctyl phthalate (DOP) as a plasticizer are 60 parts by weight, the proportion of calcium carbonate as a filler are 20 parts by weight, the proportion of a stabilizer are 5 parts by weight, the proportion of an age resistor are 5 parts by weight, and the proportion of a copper inhibitor are 0.002 parts by weight, 0.016 parts by weight, 1 part by weight, 6 parts by weight, 4.8 parts by weight and 8 parts by weight, respectively, based on 100 parts by weight of polyvinyl chloride (polymerization degree: 1,300), The content of the age resistor in the substrates of Examples 21 to 25 each correspond to about 100% based on the content of the age resistor in the covering material for HF-bssed wire, i.e., 3%. The content of the copper inhibitor in the substrates of Examples 21 to 25 are 0.001 parts by weight, 0.01 parts by weight, 1 part by weight, 3 parts by weight and 5 parts by weight, respectively, based on 100 parts by weight of the substrate resin components (polyvinyl chloride and DOP). The thickness of the substrates were each 0.11 mm.

On the other hand, referring to the formulation of the adhesives of Examples 21 to 25, the proportion of the age resistor are 0.001 parts by weight, 0.01 parts by weight, 1 part by weight, 3 parts by weight and 5 parts by weight, respectively, based on 100 parts by weight of emulsion type acrylic resin. In other words, the content of the age resistor in the adhesives of Examples 21 to 25 each correspond to about 100% based on the content of the age resistor in the covering material for HF-based wire, i.e., 3%. The content of the copper inhibitor in the adhesives of Examples 21 to 25 are 0.001 parts by weight, 0.01 parts by weight, 1 part by weight, 3 parts by weight and 5 parts by weight, respectively, based on 100 parts by weight of the adhesive resin component (emulsion type acrylic resin). The thickness of the adhesives were each 0.02 mm.

As opposed to Examples 21 to 25, Comparative Example 5 is a comparative example in which the content of the copper inhibitor in the substrate and adhesive is 7 parts by weight based on 100 parts by weight of the substrate and adhesive resin components. A conventional product 5 is also given having a substrate totally free of age resistor and copper inhibitor and comprising an adhesive containing 70 parts by weight of styrene butadiene rubber, 30 parts by weight of natural rubber, 20 parts by weight of zinc oxide and 80 parts by weight of a rosin-based resin instead of emulsion type acrylic resin.

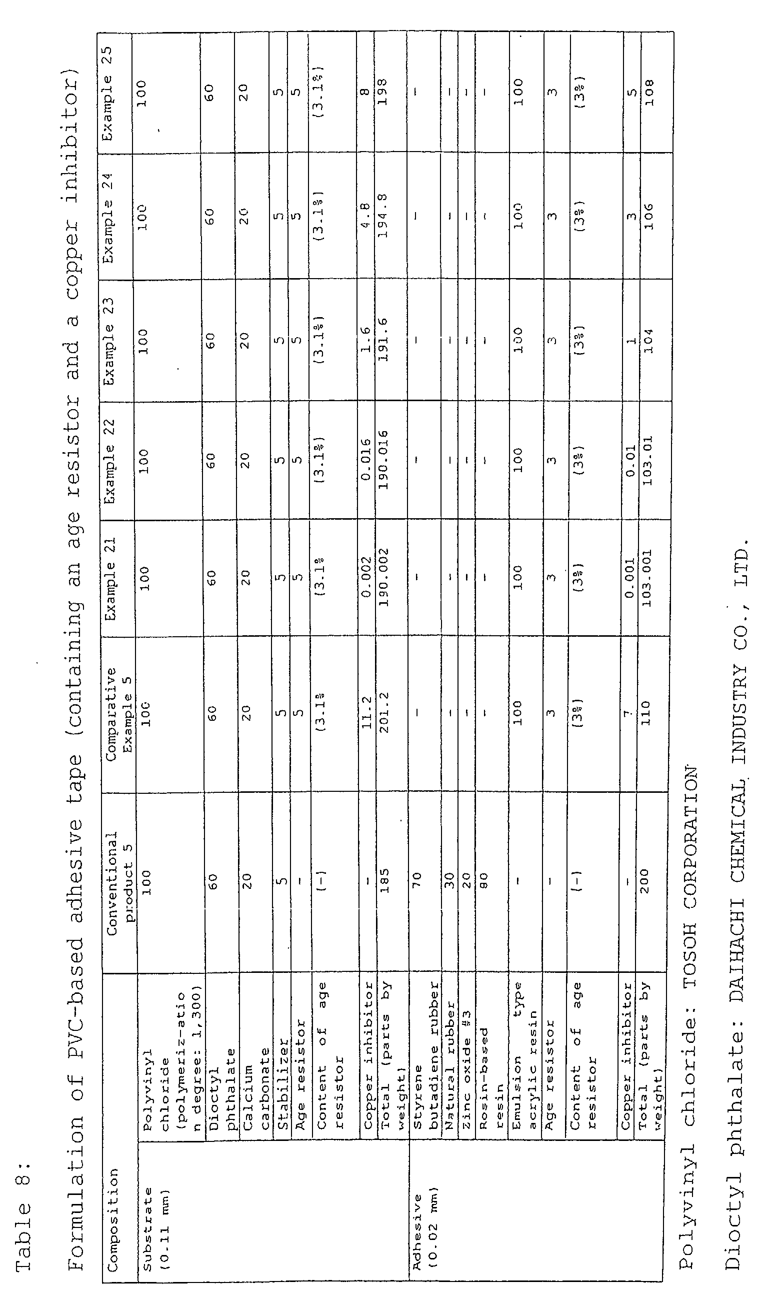

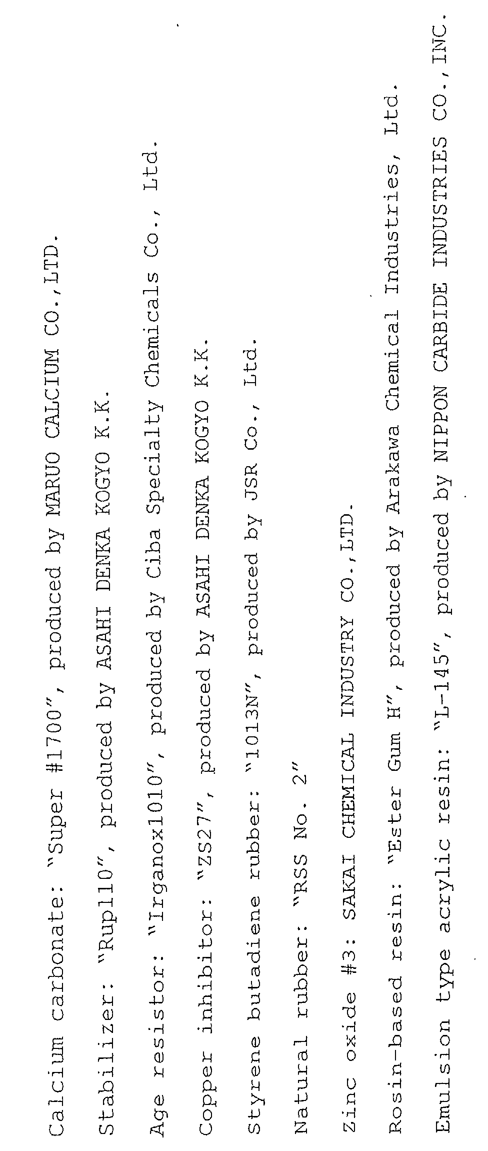

The sixth kind of adhesive tapes are HF-based adhesive tapes of Examples 26 to 30 comprising a substrate made of a nonhalogen-based resin containing an age resistor and a copper inhibitor coated with an adhesive comprising as a main component an acrylic resin containing an age resistor and a copper inhibitor on one side thereof (hereinafter referred to as "HF-based adhesive tape (containing an age resistor and a copper inhibitor)". The formulation of HF-based adhesive tapes of Examples 26 to 30 (containing an age resistor and a copper inhibitor) will be set forth in Table 9.

In some detail, referring to the formulation of the substrates of Examples 26 to 30, the proportion of a bromine-based fire retardant are 3 parts by weight, the proportion of antimony trioxide are 1.5 parts by weight, the proportion of an age resistor are 3.5 parts by weight, and the proportion of a copper inhibitor are 0.001 parts by weight, 0.01 parts by weight, 1 part by weight, 3.1 parts by weight and 5.2 parts by weight, respectively, based on 100 parts by weight of polyolefin. In other words, the content of the age resistor in the adhesives of Examples 26 to 30 each correspond to about 100% based on the content of the age resistor in the covering material for HF-based wire, i.e., 3%. The content of the copper inhibitor in the substrates of Examples 26 to 30 are 0.001 parts by weight, 0.01 parts by weight, 1 part by weight, 3 parts by weight and 5 parts by weight, respectively, based on 100 parts by weight of the substrate resin components (polyolefin and bromine-based fire retardant). The thickness of the substrates were each 0,11 mm.

On the other hand, referring to the formulation of the adhesives of Examples 26 to 30, the proportion of the age resistor are 3 parts by weight, and the content of the copper inhibitor are 0.001 parts by weight, 0.01 parts by weight, 1 part by weight, 3 parts by weight and 5 parts by weight, respectively, based on 100 parts by weight of emulsion type acrylic resin. In other words, the content of the age resistor in the adhesives of Examples 26 to 30 each correspond to about 100% based on the content of the age resistor in the coveringmaterial for HF-based wire, i.e., 3%. The content of the copper inhibitor in the adhesives of Examples 26 to 30 are 0.001 parts by weight, 0.01 parts by weight, 1 part by weight, 3 parts by weight and 5 parts by weight, respectively, based on 100 parts by weight of the adhesive resin component (emulsion type acrylic resin). The thickness of the adhesives were each 0.02 mm.

As opposed to Examples 26 to 30, Comparative Example 6 is a comparative example in which the content of the copper inhibitor in the substrate and adhesive is 7 parts by weight based on 100 parts by weight of the substrate and adhesive resin components. A conventional product 6 is also given having a substrate totally free of age resistor and copper inhibitor and comprising an adhesive containing 70 parts by weight of styrene butadiene rubber, 30 parts by weight of natural rubber, 20 parts by weight of zinc oxide and 80 parts by weight of a rosin-based resin instead of emulsion type acrylic resin.

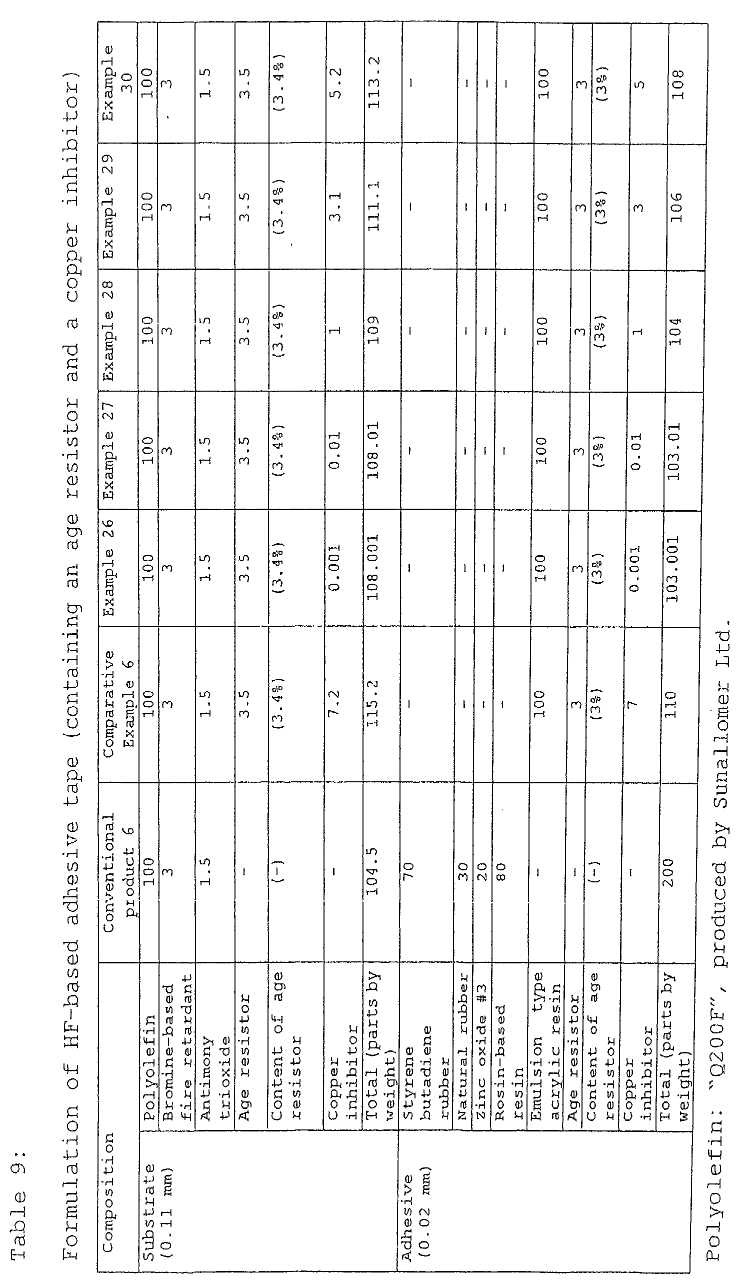

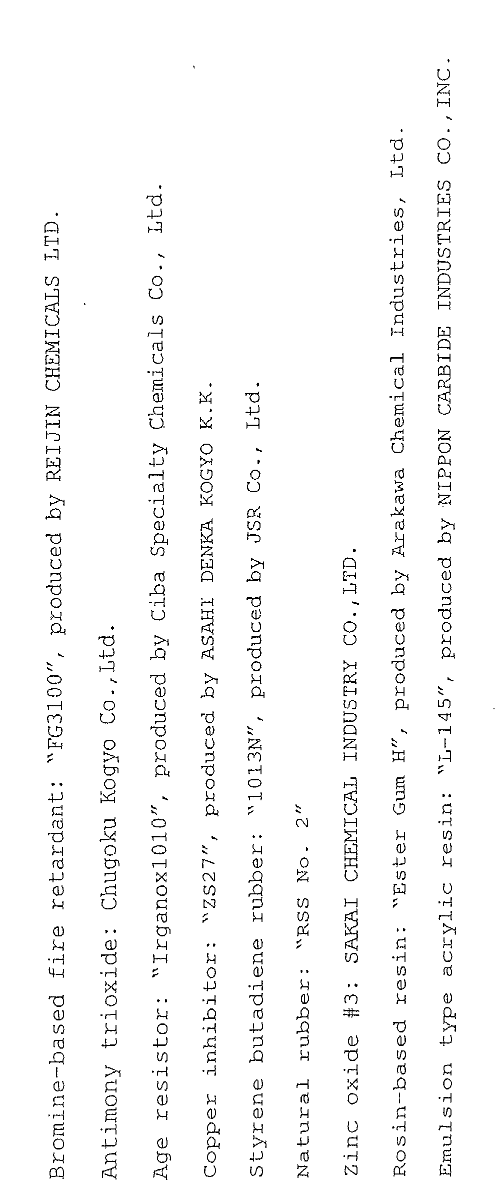

### (Bundle of wires)

The bundle of wires on which the sample adhesive tape as a wire harness protective material according to an embodiment of implementation of the invention is wound will be described hereinafter. As bundles of wires there were prepared the following three kinds of bundles of wires.

The first kind of a bundle of wires is a bundle of wires obtained by bundling 30 HF-based wires coated with the covering material set forth in Table 1 (hereinafter referred to as "bundle of HF-based wires").

The second kind of a bundle of wires is a bundle of wires obtained by bundling PVC-based wires coated with the covering material set forth in Table 2 and HF-based wires coated with the covering material set forth in Table 1 in a predetermined mixing ratio (hereinafter referred to as "bundle of PVC-based wires and HF-based wires in admixture"). As the mixing ratios of PVC-based wires to HF-based wires (by the number of wires) there were used three combinations, i.e., 29 : 1, 20 ; 10 and 1 : 29.

The third kind of a bundle of wires is a bundle of wires obtained by bundling PVC-based wires (containing an age resistor) coated with the covering material set forth in Table 3 and HF-based wires coated with the covering material set forth in Table 1 in a predetermined mining ratio (hereinafter referred to as "bundle or PVC-based wires (containing an age resistor) and HF-based wires in admixture") . As the mixing ratios of PVC-based wires (containing an age resistor) to HF-based wires (by the number of wires) there were used three combinations, i.e., 29 : 1, 20 : 10 and 1 : 29.

Referring to the second and third kinds of bundles of wires, when only one of the wires is different from the others, all the wires were bundled in such an arrangement that the one wire comes in contact with the adhesive of the sample adhesive tape. When the mixing ratio is 20 : 10 (by the number of wires), all the wires were bundled in such an arrangement that the two different kinds of wires are diffused in each other.

### (Sample wire harness)

The sample wire harness comprising a sample adhesive tape as a wire harness protective material according to an embodiment of implementation of the invention wound on the periphery of a bundle of wires will be described hereinafter. As mentioned above, there were prepared 6 kinds of sample adhesive tapes and 3 kinds of bundles of wires. Therefore, there were prepared 18 kinds of sample wire harnesses, which are all the combinations of 6 kinds of sample adhesive tapes and 3 kinds of bundles of wires.

In some detail, wire harnesses of Examples W1 to W5 comprise a bundle of HF-based wires having PVC-based adhesive tapes (containing an age resistor) of Examples 1 to 5 wound thereon, respectively, wire harnesses of Examples W6 to W10 comprise a bundle of HF-based wires having HF-based adhesive tapes (containing an age resistor) of Examples 6 to 10 wound thereon, respectively, wire harnesses of Examples W11 to W15 comprise a bundle of HF-based wires having PVC-based adhesive tapes (containing a copper inhibitor) of Examples 11 to 15 wound thereon, respectively, wire harnesses of Examples W16 to W20 comprise a bundle of HF-based wires having HF-based adhesive tapes (containing a copper inhibitor) of Examples 16 to 20 wound thereon, respectively, wire harnesses of Examples W21 to W25 comprise a bundle of HF-based wires having PVC-based adhesive tapes (containing an age resistor and a copper inhibitor) of Examples 21 to 25 wound thereon, respectively, and wire harnesses of Examples W26 to W30 comprise a bundle of HF-based wires having HF-based adhesive tapes (containing an age resistor ends copper inhibitor) of Examples 26 to 30 wound thereon, respectively; Further, wire harnesses comprising a bundle of HF-based wires having the adhesive tapes of Comparative Examples 1 to 6 and the conventional products 1 to 6 wound thereon, respectively, were used for comparison.

Wire harnesses of Examples W31 to W35 comprise a bundle of PVC-based wires and HF-based wires in admixture having PVC-based adhesive topes (containing an age resistor) of Examples 1 to 5 wound thereon, respectively, wire harnesses of Examples W36 to W40 comprise a bundle of PVC-based wires and HF-based wires in admixture having HF-based adhesive tapes (containing an age resistor) of Examples 6 to 10 wound thereon, respectively, wire harnesses of Examples W41 to W45 comprise a bundle of PVC-based wires and HF-based wires in admixture having PVC-based adhesive tapes (containing a copper inhibitor) of Examples 11 to 15 wound thereon, respectively, wire harnesses of Examples W46 to W50 comprise a bundle of PVC-based wires and HF-based wires in admixture having HF-based adhesive tapes (containing a copper inhibitor) of Examples 16 to 20 wound thereon, respectively, wire harnesses of Examples W51 to W55 comprise a bundle of PVC-based wires and HF-based wires in admixture having PVC-based adhesive tapes (containing an age resistor and a copper inhibitor) of Examples 21 to 25 wound thereon, respectively, and wire harnesses of Examples W56 to W60 comprise a bundle of PVC-based wires and HF-based wires in admixture having HF-based adhesive tapes (containing an age resistor and a copper inhibitor) of Examples 26 to 30 wound thereon, respectively. Further, wire harnesses comprising a bundle of PVC-basedwires and HF-based wires in admixture having the adhesive tapes of Comparative Examples 1 to 6 and the conventional products 1 to 6 wound thereon, respectively, were used for comparison.

Further, wire harnesses of Examples W61 to W65 comprise a bundle of PVC-based wires (containing an age resistor) and HF-based wires in admixture having PVC-based adhesive tapes (containing an age resistor) of Examples 1 to 5 wound thereon, respectively, wire harnesses of Examples W66 to W70 comprise a bundle of PVC-based wires (containing an age resistor) and HF-based wires in admixture having HF-based adhesive tapes (containing an age resistor) of Examples 6 to 10 wound thereon, respectively, wire harnesses of Examples W71 to W75 comprise a bundle of PVC-based wires and HF-based wires in admixture having PVC-based adhesive tapes (containing a copper inhibitor) of Examples 11 to 15 wound thereon, respectively, wire harnesses of Examples W76 to W80 comprise a bundle of PVC-based wires and HF-based wires in admixture having HF-based adhesive tapes (containing a copper inhibitor) of Examples 16 to 20 wound thereon, respectively, wire harnesses of Examples W81 to W85 comprise a bundle of PVC-based wires and HF-based wires in admixture having PVC-based adhesive tapes (containing an age resistor and a copper inhibitor) of Examples 21 to 25 wound thereon, respectively, and wire harnesses of Examples W86 to W90 comprise a bundle of PVC-based wires and HF-based wires in admixture having HF-based adhesive tapes (containing an age resistor and a copper inhibitor) of Examples 26 to 30 wound thereon, respectively. Further, wire harnesses comprising a bundle of PVC-based wires and HF-basedwires in admixture having the adhesive tapes of Comparative Examples to 6 and the conventional products 1 to 6 wound thereon, respectively, were used for comparison.

### (Testing method)

The sample wire harnesses thus prepared were each subjected to various confirmation tests. Referring further to the confirmation tests, the various wire harnesses were each allowed to stand in a 150°C constant temperature tank for 96 hours, and then withdrawn from the constant temperature tank. The sample adhesive tape is then peeled off these sample wire harnesses. The wires of these bundles of wires were each wound on a mandrel having a diameter of 10 mm. These wires were then visually confirmed to see if the covering material thereon underwent cracking. Comprehensive evaluation is made on the wind ability of sample adhesive tape on the bundle of wires during the preparation of sample wire harness and the coatability of the adhesive during the preparation of sample adhesive tape in addition to the test results. Among the sample adhesive tapes, those comprising a copper inhibitor incorporated therein were evaluated also for external appearance.

### (Test results)

### 1. Wire harness comprising a bundle of HF-based wires having a PVC-based adhesive tape (containing an age resistor) wound thereon (hereinafter simply referred to as "bundle of HF-based wires x PVC-based adhesive tape (containing an age resistor)" unless otherwise specified for other same kinds of wire harnesses)

The results of test on bundle of HF-based wires x PVC-based adhesive tape (containing an age resistor) are set forth in Table 10. As a result, in the mandrel winding test, HF-based wire in the wire harness of conventional product W1 underwent. cracking. Thus, the conventional product W1 is judged defective. This can be understood because the adhesive deterioration accelerating factor contained in the adhesive of PVC-based adhesive tape of conventional product 1 and the substrate deterioration accelerating factor contained in the substrate cannot be prevented from migrating into the covering material for HF-based wire.

On the contrary, none of HF-basedwire in the wire harnesses of Examples W1 to W5 underwent cracking in the mandrel winding test. This can be understood because the adhesive of PVC-based tapes (containing an age resistor) of Examples 1 to 5 comprises an emulsion type acrylic resin, preventing the adhesive deterioration accelerating factor contained in the adhesive from migrating into the covering material for HF-based wire. This can also be understood because the adhesive and the substrate previously comprise an age resistor incorporated therein in an optimum amount, making it possible to prevent or inhibit the reduction of the age resistor in the covering material even if the substrate deterioration accelerating factor migrates into the covering material for HF-based wire.

On the other hand, in the tape windability and coatability tests, PVC-based adhesive tape (containing an age resistor) of Comparative Example 1 is judged defective. This can be understood because the age resistor is excessively incorporated in the adhesive. On the contrary, PVC-based adhesive tapes (containing an age resistor) of Examples 1 to 5 were judged acceptable in both tape windability and coatability. This can be understood because the age resistor is incorporated in the adhesive in an optimum amount. Accordingly, the aforementioned inventive products were generally judged good (G) in comprehensive evaluation.

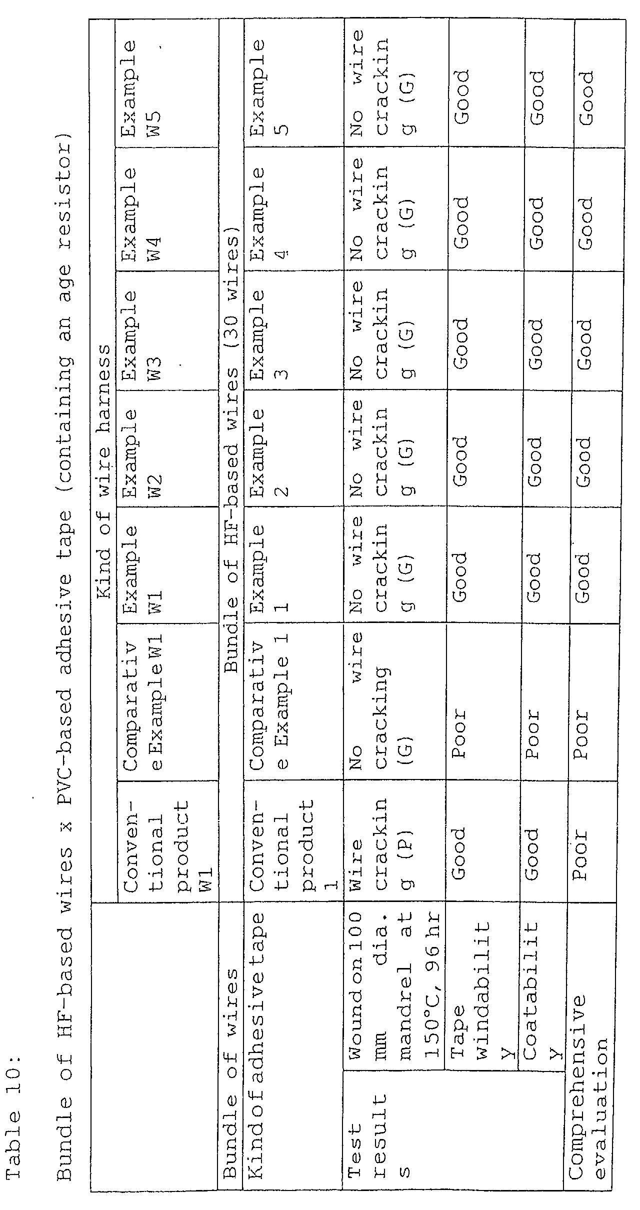

### 2. Bundle of HF-based wires x HF-based adhesive tape (containing an age resistor)

The results of test on bundle of HF-based wires x HF-based adhesive tape (containing an age resistor) are set forth in Table 11. As a result, in the mandrel winding test, HF-based wire in the wire harness of conventional product W2 underwent cracking. Thus, the conventional product W2 is judged defective. This can be understood because the adhesive deterioration accelerating factor contained in the adhesive of HF-based adhesive tape of conventional product 2 cannot be prevented from migrating into the covering material for HF-based wire.

HF-based adhesive tape of conventional product 2, too, underwent cracking and thus is judged defective. This can be understood because the adhesive deterioration accelerating factor contained in HF-based adhesive tape of conventional product 2 migrated into the substrate.

On the contrary, none of HF-based wire in the wire harnesses of Examples W6 to W10 underwent cracking in the mandrel winding test. This can be understood because the adhesive of HF-based adhesive tapes (containing an age resistor) of Examples W6 to W10 comprises an emulsion type acrylic resin, preventing the adhesive deterioration accelerating factor contained in the adhesive from migrating into the covering material for HF-based wire.

On the other hand, in the tape windability and coatability tests, HF-based adhesive tape (containing an age resistor) of Comparative Example 2 is judged defective. This can be understood because the age resistor is excessively incorporated in the adhesive. On the contrary, HF-based adhesive tapes (containing an age resistor) of Examples 6 to 10 were judged acceptable in both tape windability and coatability. This can be understood because the age resistor is incorporated in the adhesive in an optimum amount. Accordingly, the aforementioned inventive products were generally judged good (G) in comprehensive evaluation.

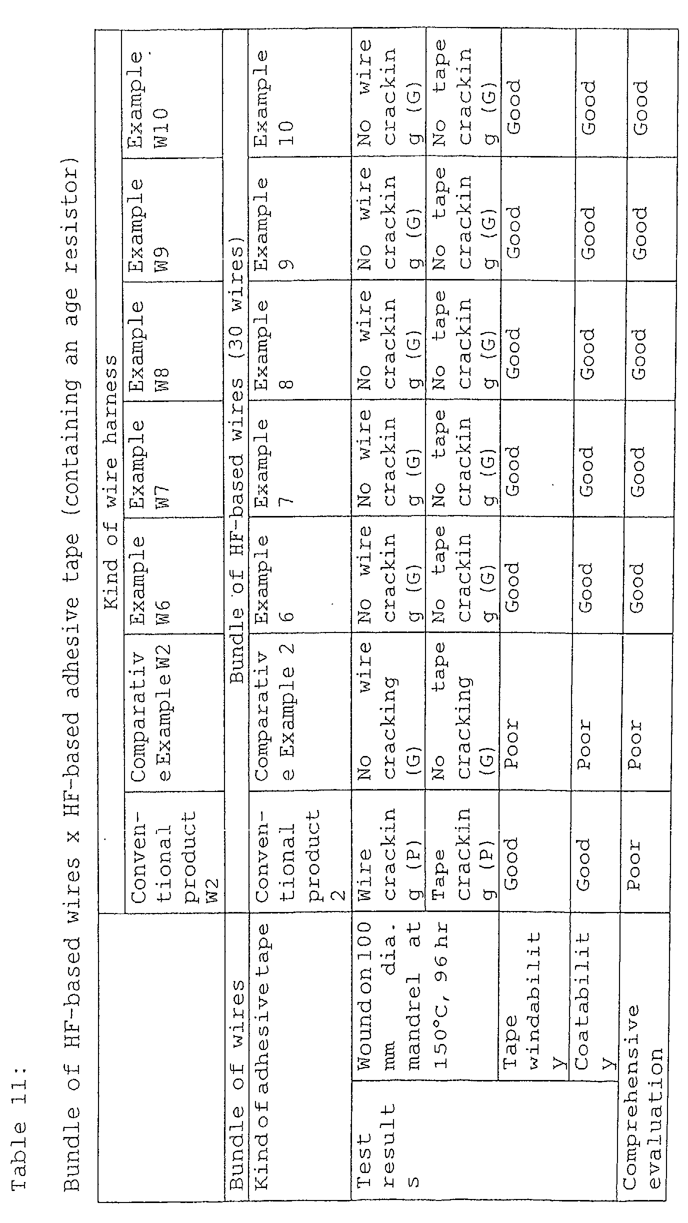

### 3. Bundle of HF-based wires x PVC-based adhesive tape (containing a copper inhibitor)

The results of test on bundle of HF-based wires x PVC-based adhesive tape (containing a copper inhibitor) are set forth in Table 12. As a result, in the mandrel winding test, HF-based wire in the wire harness of conventional product W3 underwent cracking. Thus, the conventional product W3 is judged defective. This can be understood because the adhesive deterioration accelerating factor contained in the adhesive of PVC-based adhesive tape of conventional product 3 and the substrate deterioration accelerating factor contained in the substrate cannot be prevented from migrating into the covering material for HF-based wire.

On the contrary, none of HF-based wire in the wire harnesses of Examples W11 to W15 underwent cracking in the mandrel winding test. This can be understood because the adhesive of PVC-based tapes (containing a copper inhibitor) of Examples 11 to 15 comprises an emulsion type acrylic resin, preventing the adhesive deterioration accelerating factor contained in the adhesive from migrating into the covering material for HF-based wire. This can also be understood because the adhesive and the substrate previously comprise a copper inhibitor incorporated therein in an optimum amount, making it possible to supply a copper inhibitor into the covering material for HF-based wire and hence prevent or inhibit the reduction of the copper inhibitor in the covering material even if the substrate deterioration accelerating factor migrates into the covering material for HF-based wire.

On the other hand, in the tape windability and coatability tests, PVC-based adhesive tape (containing a copper inhibitor) of Comparative Example 3 is judged defective. This can be understood because the copper inhibitor is excessively incorporated in the adhesive. On the contrary, PVC-based adhesive tapes (containing a copper inhibitor) of Examples 11 to 15 were judged acceptable in both tape windability and coatability. This can be understood because the copper inhibitor is incorporated in the adhesive in an optimum amount. Accordingly, the aforementioned inventive products were generally judged good (G) in comprehensive evaluation.

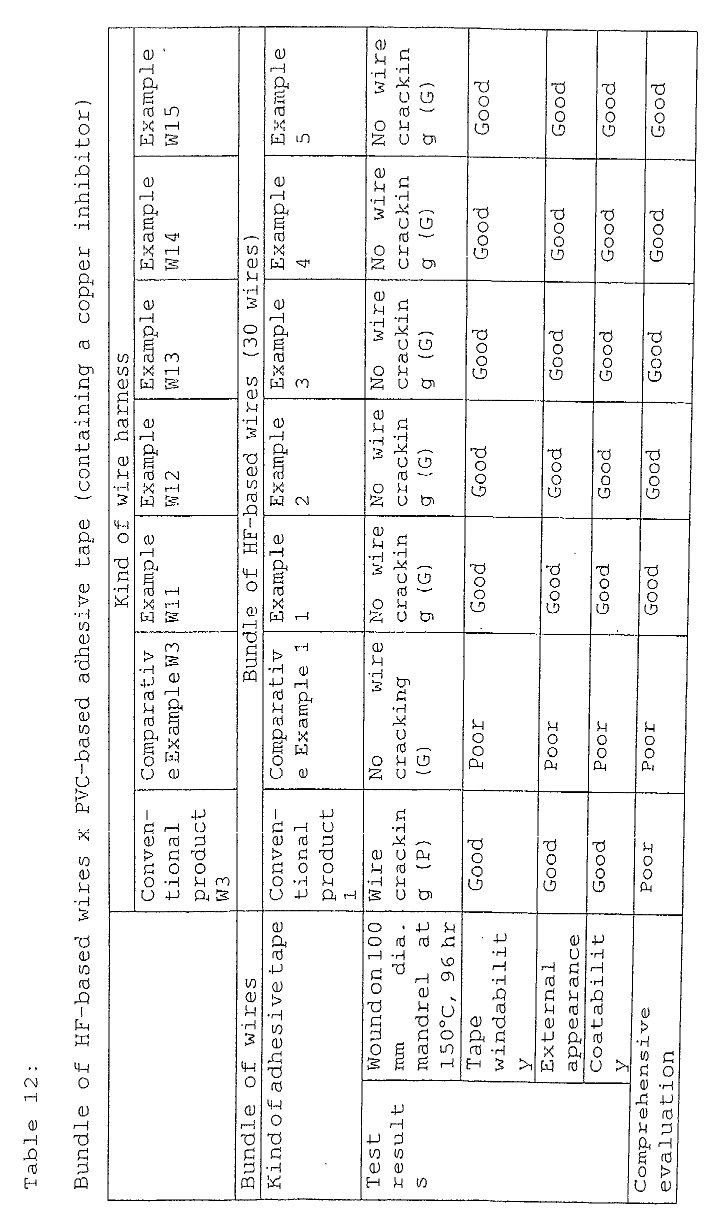

### 4. Bundle of HF-based wires x HF-based adhesive tape (containing a copper inhibitor)

The results of test on bundle of HF-based wires x HP-based adhesive tape (containing a copper inhibitor) are set forth in Table 13. As a result, in the mandrel winding test, HF-based wire in the wire harness of conventional product W4 underwent cracking. Thus, the conventional product W4 is judged defective. This can be understood because the adhesive deterioration accelerating factor contained in the adhesive of HF-based adhesive tape of conventional product 4 cannot be prevented from migrating into the covering material for HF-based wire.

HF-based adhesive tape of conventional product 4, too, underwent cracking and thus is judged defective. This can be understood because the adhesive deterioration accelerating factor contained in HF-based adhesive tape of conventional product 4 migrated into the substrate.

On the contrary, none of HF-based wire in the wire harnesses of Examples W16 to W20 underwent cracking in the mandrel winding test. This can be understood because the adhesive of HF-based adhesive tapes (containing a copper inhibitor) of Examples 16 to 20 comprises an emulsion type acrylic resin, preventing the adhesive deterioration accelerating factor contained in the adhesive from migrating into the covering material for HF-based wire.

On the other hand, in the tape windabllity and coatability tests, HF-based adhesive tape (containing a copper inhibitor) of Comparative Example 4 is judged defective. This can be understood because the copper inhibitor is excessively incorporated in the adhesive. On the contrary, HF-based adhesive tapes (containing a copper inhibitor) of Examples 16 to 20 were judged acceptable in both tape windability and coatability. This can be understood because the copper inhibitor is incorporated in the adhesive in an optimum amount. Accordingly, the aforementioned inventive products were generally judged good (G) in comprehensive evaluation.

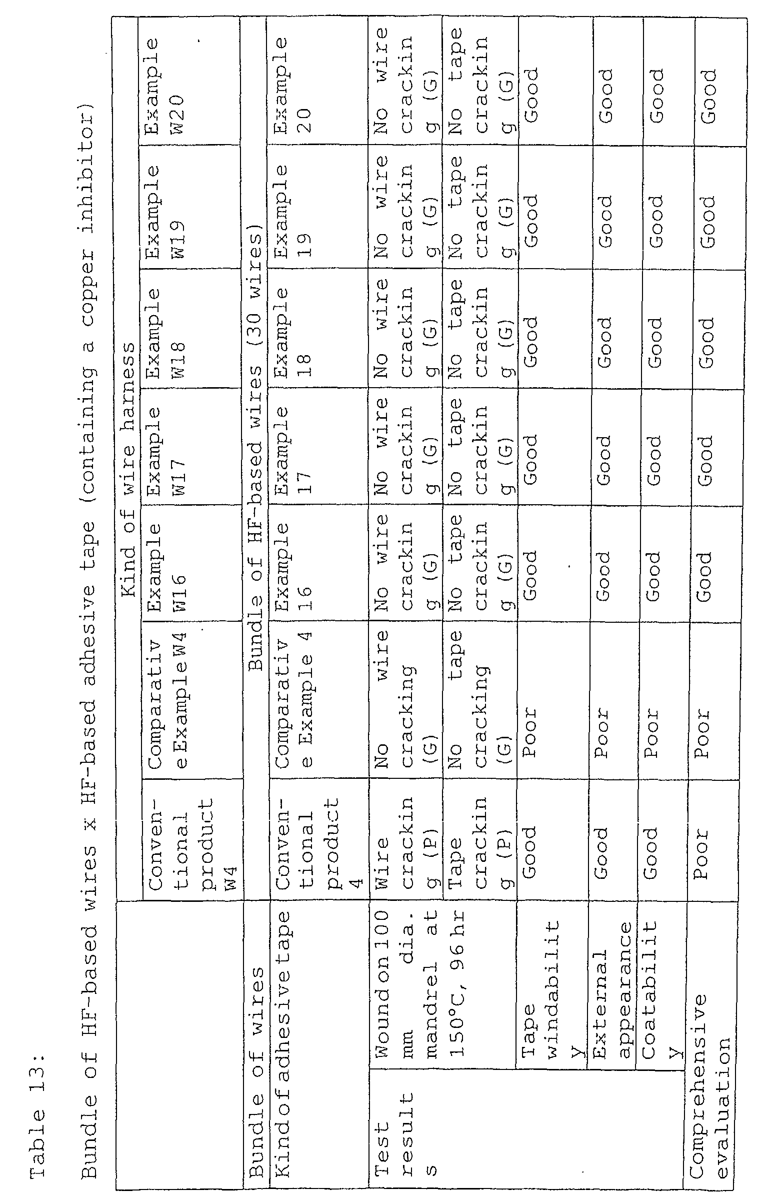

### 5. Bundle of HF-based wires x HF-based adhesive tape (containing an age resistor and a copper inhibitor)

The results of test on bundle of HP-based wires x HF-based adhesive tape (containing an age resistor and a copper inhibitor) are set forth in Table 14. As a result, in the mandrel winding test, HF-based wire in the wire harness of conventional product W5 underwent cracking. Thus, the conventional product W5 is judged defective. This can be understood because the adhesive deterioration accelerating factor contained in the adhesive of HF-based adhesive tape of conventional product 5 and the substrate deterioration accelerating factor cannot be prevented from migrating into the covering material for HF-based wire.

On the contrary, none of HF-based wire in the wire harnesses of Examples W21 to W25 underwent cracking in the mandrel winding test. This can be understood because the adhesive of PVC-based adhesive tapes (containing an age resistor and a copper inhibitor) of Examples 21 to 25 comprises an emulsion type acrylic resin, preventing the adhesive deterioration accelerating factor contained in the adhesive from migrating into the covering material for HF-based wire.

Further, it can be interpreted that since the adhesive and the substrate previously comprise an age resistor and a copper inhibitor incorporated therein in an optimum amount, the reduction of the age resistor in the covering material and the occurrence of copper damage by copper ions can be avoided even if the substrate deterioration accelerating factor migrates into the covering material for HF-based wire.

On the other hand, in the tape windability and coatability tests, PVC-based adhesive tape (containing an age resistor and a copper inhibitor) of Comparative Example 5 is judged defective. This can be understood because the copper inhibitor is excessively incorporated in the adhesive. On the contrary, PVC-based adhesive tapes (containing an age resistor and a copper inhibitor) of Examples 21 to 25 were judged acceptable in tape windability, tape external appearance and coatability. This can be understood because the age resistor and the copper inhibitor are incorporated in the adhesive in an optimum amount. Accordingly, the aforementioned inventive products were generally judged good (G) in comprehensive evaluation.

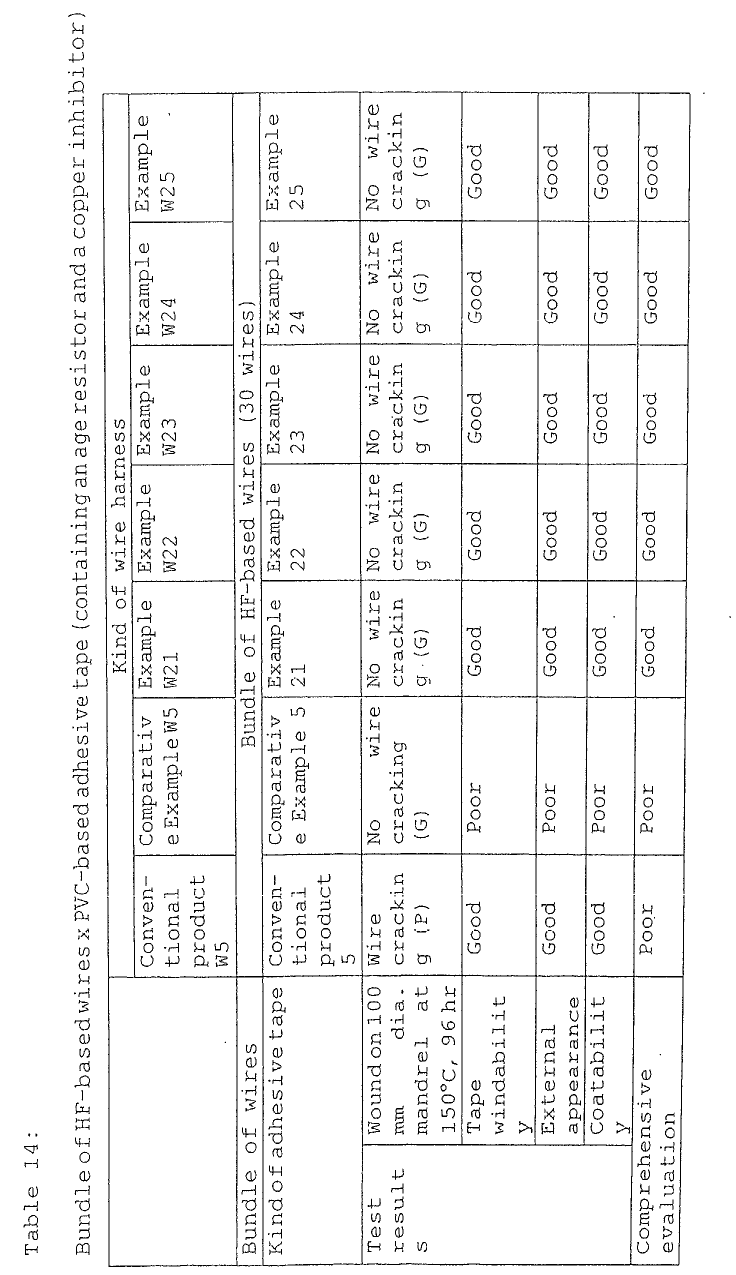

### 6. Bundle of HF-based wires x HF-based adhesive tape (containing an age resistor and a copper inhibitor)

The results of test on bundle of HF-based wires x PVC-based adhesive tape (containing an age resistor and a copper inhibitor) are set forth in Table 15. As a result, in the mandrel winding test, HF-based wire in the wire harness of conventional product W6 underwent cracking. Thus, the conventional product W6 is judged defective. This can be understood because the adhesive deterioration accelerating factor contained in the adhesive of HF-based adhesive tape of conventional product 6 cannot be prevented from ml grating into the covering material for HF-based wire.

HF-based adhesive tape of conventional product 6, too, underwent cracking and thus is judged defective. This can be understood because the adhesive deterioration accelerating factor contained in HF-based adhesive tape of conventional product 6 migrated into the substrate.

On the contrary, none of HF-based wire in the wire harnesses of Examples W26 to W30 underwent cracking in the mandrel winding test. This can be understood because the adhesive of HF-based tapes (containing an age resistor and a copper inhibitor) of Examples 26 to 30 comprises an emulsion type acrylic resin, preventing the adhesive deterioration accelerating factor contained in the adhesive from migrating into the covering material for HF-based wire.

On the other hand, in the tape windability, tape external appearance and coatability tests, HF-based adhesive tape (containing an age resistor and a copper inhibitor) of Comparative Example 6 is judged defective. This can be understood because the copper inhibitor is excessively incorporated in the adhesive. On the contrary, HF-based adhesive tapes (containing an age resistor and a copper inhibitor) of Examples 26 to 30 were judged acceptable in tape windability, tape external appearance and coatability. This can be understood because the age resistor and the copper inhibitor are incorporated in the adhesive in an optimum amount. Accordingly, the aforementioned inventive products were generally judged good (G) in comprehensive evaluation.

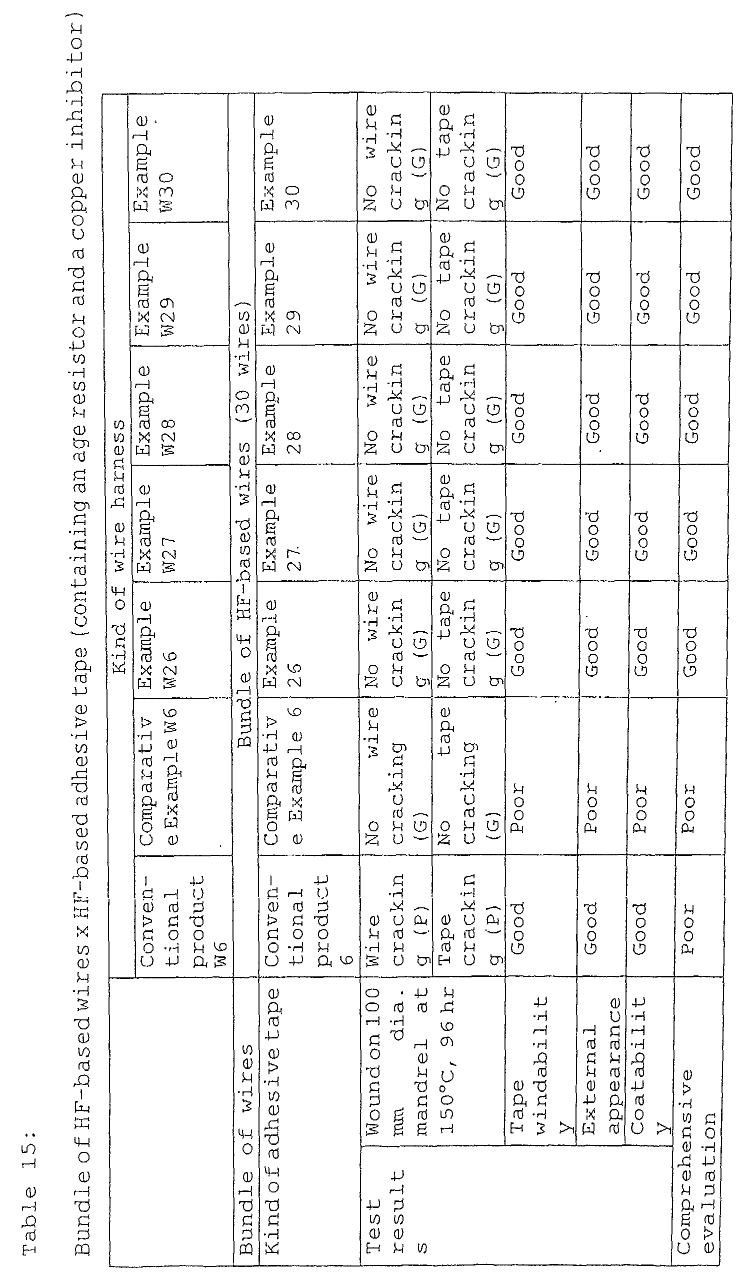

### 7. [Bundle of PVC-based wires and HF-based wires in admixture] x PVC-based adhesive tape (containing an age resistor)

The results of test on [bundle of PVC-based wires and HF-based wires in admixture] x PVC-based adhesive tape (containing an age resistor) are set forth in Table 16. As a result, in the mandrel winding test, HF-based wire in the wire harness of conventional product W7 underwent cracking regardless of the mixing ratio of PVC-based wires to HF-based wires (29 : 1, 20 : 10 or 1 : 29). Thus, the conventional product W7 is judged defective. This can be understood because the adhesive deterioration accelerating factor contained in the adhesive of PVC-based adhesive tape of conventional product 1 and the substrate deterioration accelerating factor contained in the substrate cannot be prevented from migrating into the covering material for HF-based wire.

In particular, the wire harness comprising PVC-based wires and HF-based wires at a mixing ratio of 29 : 1 is confirmed to tend to undergo vigorous deterioration of HF-based wires. This can be understood because the plasticizer, etc. contained in the covering material for PVC-based wires migrated into the covering material for HF-based wires.

On the contrary, none of HF-based wire in the wire harnesses of Examples W31 to W35 underwent cracking in the mandrel winding test. This can be understood because the adhesive of PVC-based adhesive tapes (containing an age resistor) of Examples 1 to 5 comprises an emulsion type acrylic resin, preventing the adhesive deterioration accelerating factor contained in the adhesive from migrating into the covering material for HF-based wire. This can also be understood because the adhesive and the substrate previously comprise an age resistor incorporated therein in an optimum amount, making it possible to prevent or inhibit the reduction of the age resistor in the covering material even if the substrate deterioration accelerating factor migrates into the covering material for HF-based wire.

However, in this case, too, the plasticizer, etc. contained in the covering material for PVC-based wires migrate into the covering material for HF-based wires. Therefore, it is thought that HF-based wires deteriorate due to the migration between the wires. The reason why there occur no problems in any examples can be understood because the age resistor in PVC-based adhesive tape (containing an age resistor) migrate into the covering material for HF-based wires to supply the age resistor into the covering material.

On the other hand, in the tape windability and coatability tests, PVC-based adhesive tape (containing an age resistor) of Comparative Example 1 is judged defective. This can be understood because the age resistor is excessively incorporated in the adhesive. On the contrary, PVC-based adhesive tapes (containing an age resistor) of Examples 1 to 5 were judged acceptable in both tape windability and coatability. This can be understood because the age resistor is incorporated in the adhesive in an optimum amount. Accordingly, the aforementioned inventive products were generally judged good (G) in comprehensive evaluation.

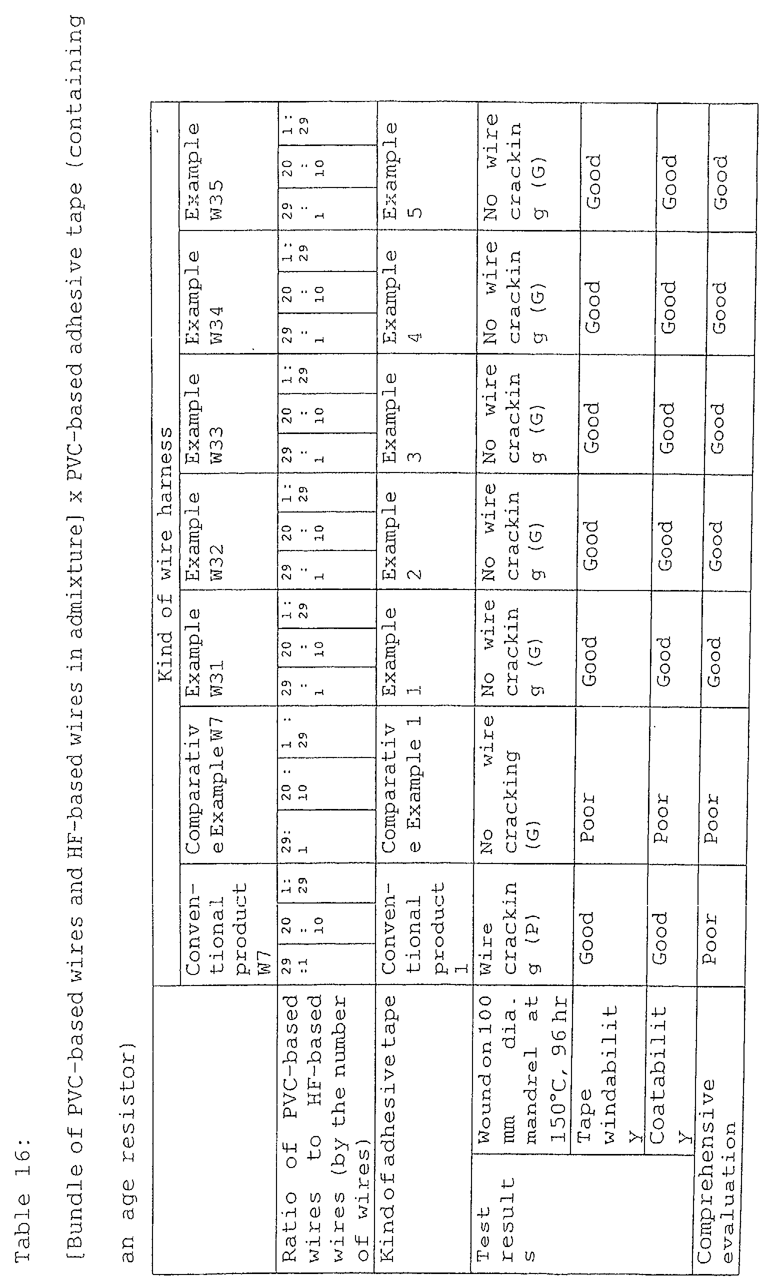

### 8. [Bundle of PVC-based wires and HF-based wires in admixture] x HF-based adhesive tape (containing an age resistor)

The results of test on [bundle of PVC-based wires and HF-based wires in admixture] x HF-based adhesive tape (containing an age resistor) are set forth in Table 17. As a result, in the mandrel winding test, HF-based wire in the wire harness of conventional product W8 underwent cracking regardless of the mixing ratio of PVC-based wires to HF-based wires (29 : 1, 20 : 10 or 1 : 29). Thus, the conventional product W8 is judged defective. This can be understood because the adhesive deterioration accelerating factor contained in the adhesive of HF-based adhesive tape of conventional product 2 cannot be prevented from migrating into the covering material for HF-based wire.

In particular, the wire harness comprising PVC-based wires and HF-based wires at a mixing ratio of 29 : 1 is confirmed to tend to undergo vigorous deterioration of HF-based wires. This can be understood because the plasticizer, etc. contained in the covering material for PVC-based wires migrated into the covering material for HF-based wires.

Further, HF-based wire in the conventional product 2, too, underwent cracking and thus is judged defective. This can be understood because the adhesive deterioration accelerating factor contained in the adhesive of HF-based adhesive tape of the conventional product 2 migrated into the substrate.

On the contrary, none of HP-based wire in the wire harnesses of Examples W36 to W40 underwent cracking in the mandrel winding test. This can be understood because the adhesive of HF-based adhesive tapes (containing an age resistor) of Examples 6 to 10 comprises an emulsion type acrylic resin, preventing the adhesive deterioration accelerating factor contained in the adhesive from migrating into the covering material for HF-based wire.

However, in this case, too, the plasticizer, etc. contained in the covering material for PVC-based wires migrate into the covering material for HF-based wires. Therefore, it is thought that HF-based wires deteriorate due to the migration between the wires. The reason why there occur no problems in any examples can be understood because the age resistor in HF-based adhesive tape (containing an age resistor) migrate into the covering material for HF-based wires to supply the age resistor into the covering material.

On the other hand, in the tape windability and coatability tests, HF-based adhesive tape (containing an age resistor) of Comparative Example 2 is judged defective. This can be understood because the age resistor is excessively incorporated in the adhesive. On the contrary, HF-based adhesive tapes (containing an age resistor) of Examples 6 to 10 were judged acceptable in both tape windability and coatability. This can be understood because the age resistor is incorporated in the adhesive in an optimum amount. Accordingly, the aforementioned inventive products were generally judged good (G) in comprehensive evaluation.

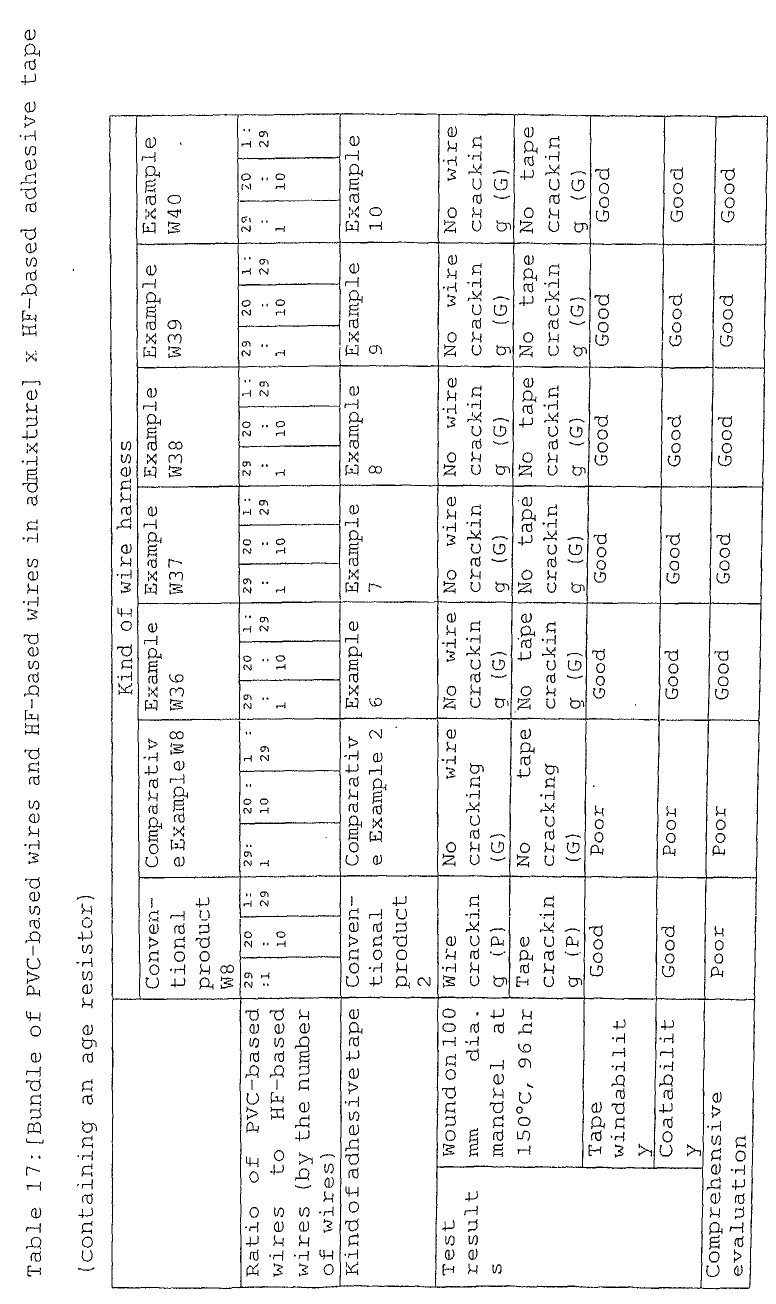

### 9. [Bundle of PVC-based wires and HF-based wires in admixture] x PVC-based adhesive tape (containing a copper inhibitor)

The results of test on [bundle of PVC-based wires and HF-based wires in admixture] x PVC-based adhesive tape (containing a copper inhibitor) are set forth in Table 18. As a result, in the mandrel winding test, HF-based wire in the wire harness of conventional product W9 underwent cracking regardless of the mixing ratio of PVC-based wires to HF-based wires (29 : 1, 20 : 10 or 1 : 29). Thus, the conventional product W9 is judged defective. This can be understood because the adhesive deterioration accelerating factor contained in the adhesive of PVC-based adhesive tape of conventional product 3 and the substrate deterioration accelerating factor contained in the substrate cannot be prevented from migrating into the covering material for HF-based wire.

In particular, the wire harness comprising PVC-based wires and HF-based wires at a mixing ratio of 29 : 1 is confirmed to tend to undergo vigorous deterioration of HF-based wires. This can be understood because the plasticizer, etc. contained in the covering material for PVC-based wires migrated into the covering material for HF-based wires.

On the contrary, none of HF-based wire in the wire harnesses of Examples W41 to W45 underwent cracking in the mandrel winding test. This can be understood because the adhesive of PVC-based adhesive tapes (containing a copper inhibitor) of Examples 11 to 15 comprises an emulsion type acrylic resin, preventing the adhesive deterioration accelerating factor contained in the adhesive from migrating into the covering material for HF-based wire. This can also be understood because the adhesive and the substrate previously comprise a copper inhibitor incorporated therein in an optimum amount, making it possible to prevent or inhibit the reduction of the copper inhibitor in the covering material even if the substrate deterioration accelerating factor migrates into the covering material for HF-based wire.

However, in this case, too, the plasticizer, etc. contained in the covering material for PVC-based wires migrate. into the covering material for HF-based wires, Therefore, it is thought that HF-based wires deteriorate due to the migration between the wires. The reason why there occur no problems in any examples can be understood because the copper inhibitor in PVC-based adhesive tape (containing a copper inhibitor) migrates into the covering material for HF-based wires to supply the copper inhibitor into the covering material.

On the other hand, in the tape windability and coatability tests, PVC-based adhesive tape (containing an age resistor) of Comparative Example 3 is judged defective. This can be understood because the copper inhibitor is excessively incorporated in the adhesive. On the contrary, PVC-based adhesive tapes (containing a copper inhibitor) of Examples 11 to 15 were judged acceptable in tape windability, tape external appearance and coatability. This can be understood because the copper inhibitor is incorporated in the adhesive in an optimum amount. Accordingly, the aforementioned inventive products were generally judged good (G) in comprehensive evaluation.

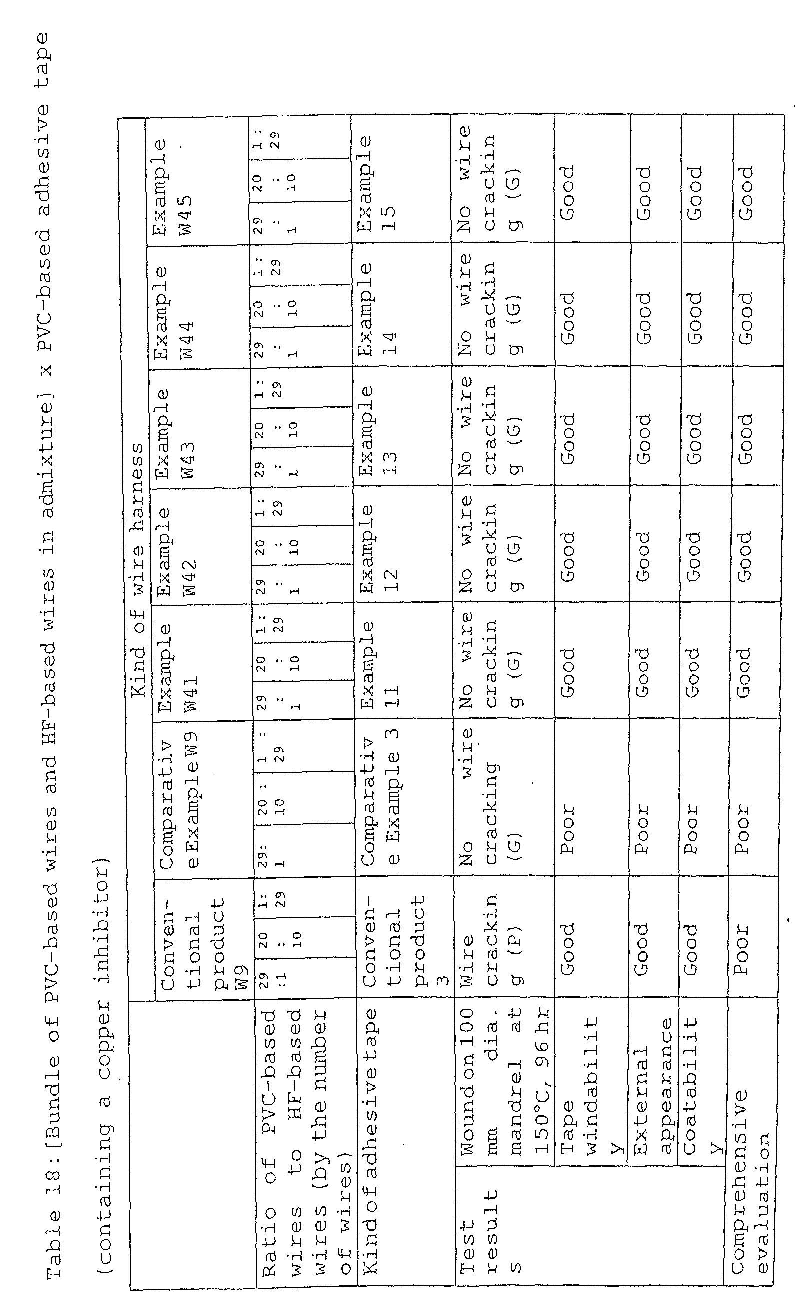

### 10. [Bundle of PVC-based wires and HF-based wires in admixture] x HF-based adhesive tape (containing a copper inhibitor)

The results of test on [bundle of PVC-based wires and HF-based wires in admixture] x HF-based adhesive tape (containing a copper inhibitor) are set forth in Table 19. As a result, in the mandrel winding test, HF-based wire in the wire harness of conventional product W10 underwent cracking regardless of the mixing ratio of PVC-based wires to HF-based wires (29 : 1, 20 : 10 or 1 : 29). Thus, the conventional product W10 is judged defective. This can be understood because the adhesive deterioration accelerating factor contained in the adhesive of HF-based adhesive tape of conventional product 4 cannot be prevented from migrating into the covering material for HF-based wire.

In particular, the wire harness comprising PVC-based wires and HF-based wires at a mixing ratio of 29 : 1 is confirmed to tend to undergo vigorous deterioration of HF-based wires. This can be understood because the plasticizer, etc. contained in the covering material for PVC-based wires migrated into the covering material for HF-based wires.

Further, HF-based wire in the conventional product 4, too, underwent cracking and thus is judged defective. This can be understood because the adhesive deterioration accelerating factor contained in the adhesive of HF-based adhesive tape of the conventional product 4 migrated into the substrate.

On the contrary, none of HF-based wire in the wire harnesses of Examples W46 to W50 underwent cracking in the mandrel winding test. This can be understood because the adhesive of HF-based adhesive tapes (containing a copper inhibitor) of Examples 16 to 20 comprises an emulsion type acrylic resin, preventing the adhesive deterioration accelerating factor contained in the adhesive from migrating into the covering material for HF-based wire.

However, in this case, too, the plasticizer, etc. contained in the covering material for PVC-based wires migrate into the covering material for HF-basedwires. Therefore, it is thought that HF-based wires deteriorate due to the migration between the wires. The reason why there occur no problems in any examples can be understood because the copper inhibitor in HF-based adhesive tape (containing a copper inhibitor) migrates into the covering material for HF-based wires to supply the copper inhibitor into the covering material.

On the other hand, in the tape windability, tape external appearance and coatability tests, HF-based adhesive tape (containing a copper inhibitor) of Comparative Example 4 is judged defective. This can be understood because the copper inhibitor is excessively incorporated in the adhesive. On the contrary, HF-based adhesive tapes (containing a copper inhibitor) of Examples 16 to 20 were judged acceptable in tape windability, tape external appearance and coatability. This can be understood because the copper inhibitor is incorporated in the adhesive in an optimum amount. Accordingly, the aforementioned inventive products were generally judged good (G) in comprehensive evaluation.

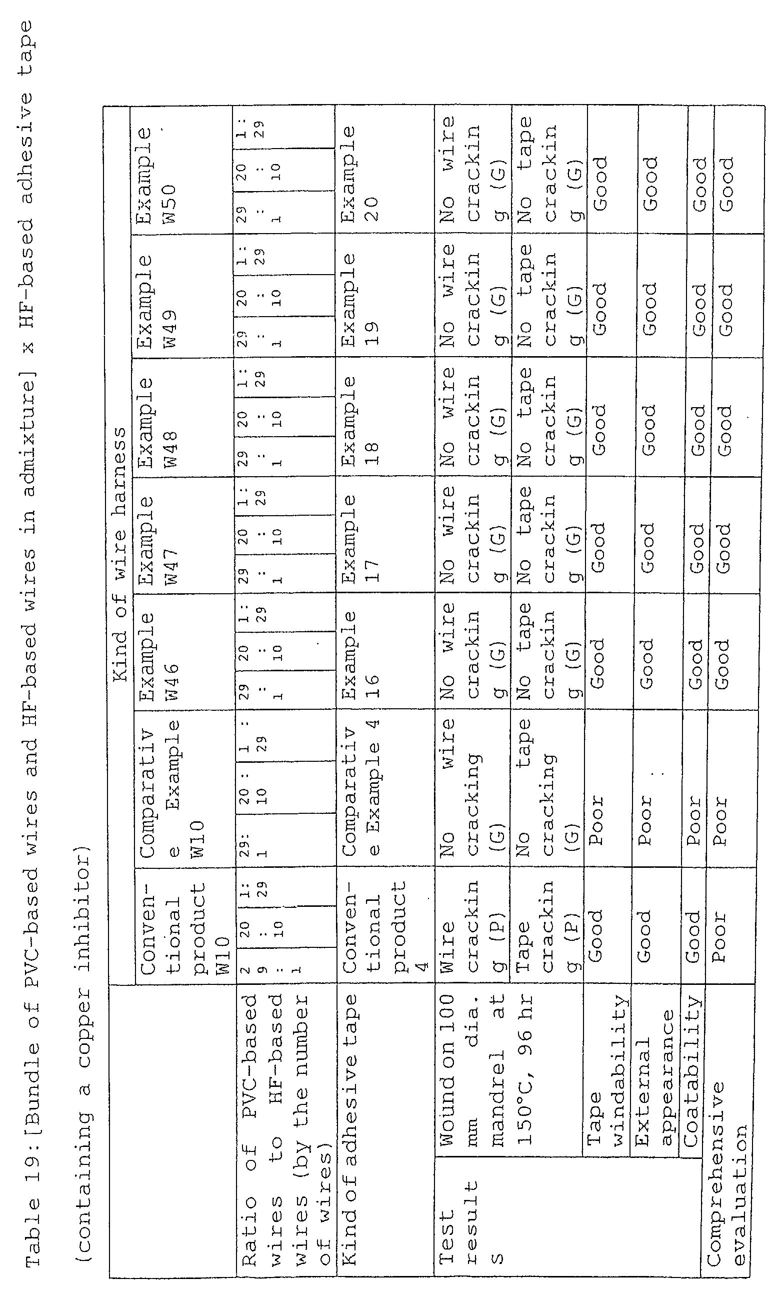

### 11. [Bundle of PVC-based wires and HF-based wires in admixture] x PVC-based adhesive tape (containing an age resistor and a copper inhibitor)

The results of test on [bundle of PVC-based wires and HF-based wires in admixture] x PVC-based adhesive tape (containing an age resistor and a copper inhibitor) are set forth in Table 20. As a result, in the mandrel winding test, HF-based wire in the wire harness of conventional product W11 underwent cracking regardless of the mixing ratio of PVC-based wires to HF-based wires (29 : 1, 20 : 10 or 1 : 29). Thus, the conventional product W11 is judged defective. This can be understood because the adhesive deterioration accelerating factor contained in the adhesive of HF-based adhesive tape of conventional product 15 and the substrate deterioration accelerating factor cannot be prevented from migrating into the covering material for HF-based wire.

In particular, the wire harness comprising PVC-based wires and HF-based wires at a mixing ratio of 29 : 1 is confirmed to tend to undergo vigorous deterioration of HF-based wires. This can be understood because the plasticizer, etc. contained in the covering material for PVC-based wires migrated into the covering material for HF-based wires,

On the contrary, none of HF-based wire in the wire harnesses of Examples W51 to W55 underwent cracking in the mandrel winding test. This can be understood because the adhesive of PVC-based adhesive tapes (containing an age resistor and a copper inhibitor) of Examples 21 to 25 comprises an emulsion type acrylic resin, preventing the adhesive deterioration accelerating factor contained in the adhesive from migrating into the covering material for HF-based wire.

Further, it can be interpreted that since the adhesive and the substrate previously comprise an age resistor and a copper inhibitor incorporated therein in an optimum amount, the reduction of the age resistor in the covering material and the occurrence of copper damage by copper ions can be avoided even if the substrate deterioration accelerating factor migrates into the covering material for HF-based wire.

However, in this case, too, the plasticizer, etc. contained in the covering material for PVC-based wires migrate into the covering material for HF-based wires. Therefore, it is thought that HF-based wires deteriorate due to the migration between the wires. The reason why there occur no problems in any examples can be understood because the age resistor and the copper inhibitor in PVC-based adhesive tape (containing an age resistor and a copper inhibitor) migrate into the covering material for HF-based wires to supply the age resistor and the copper inhibitor into the covering material.

On the other hand, in the tape windability and coatability tests, PVC-based adhesive tape (containing an age resistor and a copper inhibitor) of Comparative Example 5 is judged defective. This can be understood because the copper inhibitor is excessively incorporated in the adhesive. On the contrary, PVC-based adhesive tapes (containing an age resistor and a copper inhibitor) of Examples 21 to 25 were judged acceptable in tape windability, tape external appearance and coatability. This can be understood because the age resistor and the copper inhibitor are incorporated in the adhesive in an optimum amount. Accordingly, the aforementioned inventive products were generally judged good (G) in comprehensive evaluation.

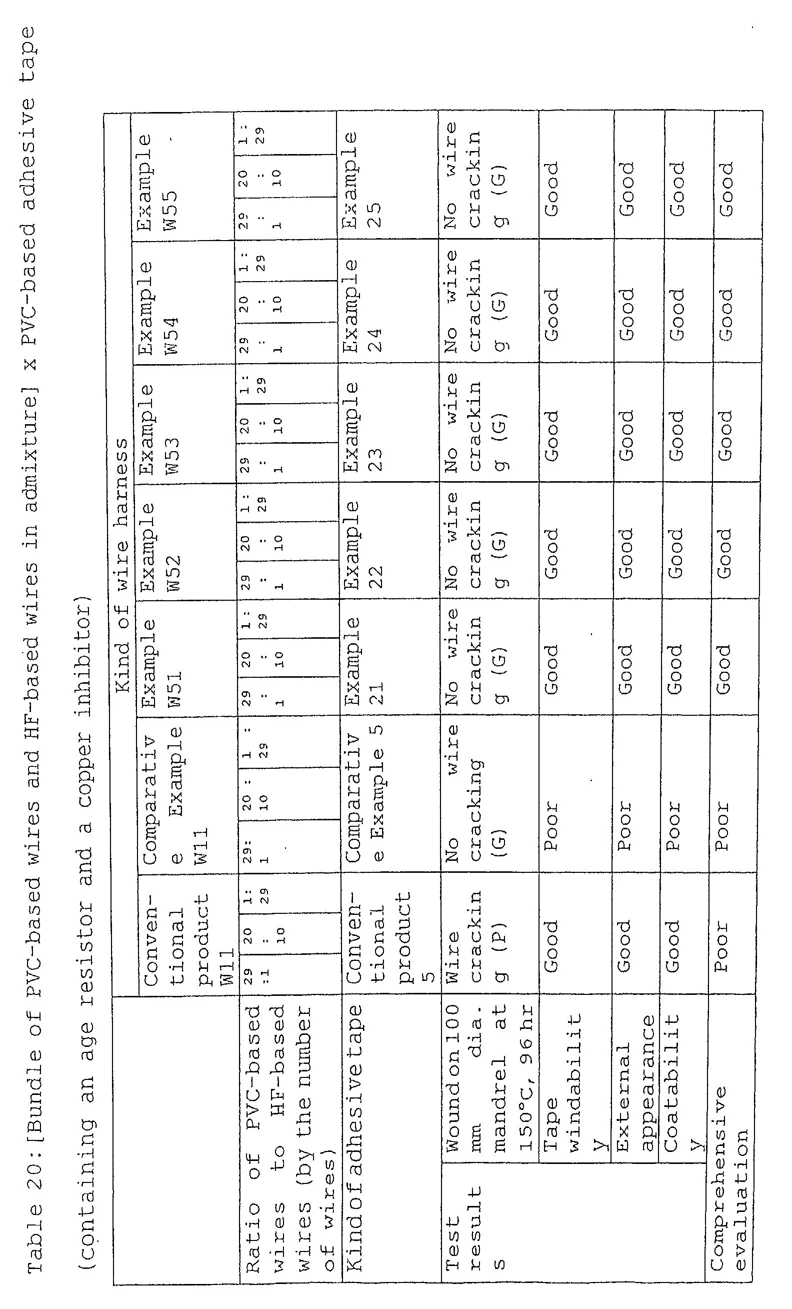

### 12. [Bundle of PVC-based wires and HF-based wires in admixture] x HF-based adhesive tape (containing an age resistor and a copper inhibitor)

The results of test on [bundle of PVC-based wires and HF-based wires in admixture] x HF-based adhesive tape (containing an age resistor and a copper inhibitor) are set forth in Table 21. As a result, in the mandrel winding test, HF-based wire in the wire harness of conventional product W12 underwent cracking regardless of the mixing ratio of PVC-based wires to HF-based wires (29 : 1, 20 10 or 1 : 29). Thus, the conventional product W12 is judged defective. This can be understood because the adhesive deterioration accelerating factor contained in the adhesive of HF-based adhesive tape of conventional product 6 cannot be prevented from migrating into the covering material for HF-based wire.

In particular, the wire harness comprising PVC-based wires and HF-based wires at a mixing ratio of 29 ; 1 is confirmed to tend to undergo vigorous deterioration of HF-based wires. This can be understood because the plasticizer, etc. contained in the covering material for PVC-based wires migrated into the covering material for HF-based wires.

Further, HF-based wire in the conventional product 6, too, underwent cracking and thus is judged defective. This can be understood because the adhesive deterioration accelerating factor contained in the adhesive of HF-based adhesive tape of the conventional product 6 migrated into the substrate.

On the contrary, none of HF-based wire in the wire harnesses of Examples W56 to W60 underwent cracking in the mandrel winding test. This can be understood because the adhesive of HF-based adhesive tapes (containing an age resistor and a copper inhibitor) of Examples 26 to 30 comprises an emulsion type acrylic resin, preventing the adhesive deterioration accelerating factor contained in the adhesive from migrating into the covering material for HF-based wire.

However, in this case, too, the plasticizer, etc. contained in the covering material for PVC-based wires migrate into the covering material for HF-based wires. Therefore, it is thought that HF-based wires deteriorate due to the migration between the wires. The reason why there occur no problems in any examples can be understood because the age resistor and the copper inhibitor in HF-based adhesive tape (containing an age resistor and a copper inhibitor) migrate into the covering material for HF-based wires to supply the copper inhibitor into the covering material.

On the other hand, in the tape windability, tape external appearance and coatability tests, HF-based adhesive tape (containing a copper inhibitor) of Comparative Example 6 is judged defective. This can be understood because the copper inhibitor is excessively incorporated in the adhesive. On the contrary, HF-based adhesive tapes (containing a copper inhibitor) of Examples 26 to 30 were judged acceptable in tape windability, tape external appearance and coatability. This can be understood because the age resistor and the copper inhibitor are incorporated in the adhesive in an optimum amount. Accordingly, the aforementioned inventive products were generally judged good (G) in comprehensive evaluation.

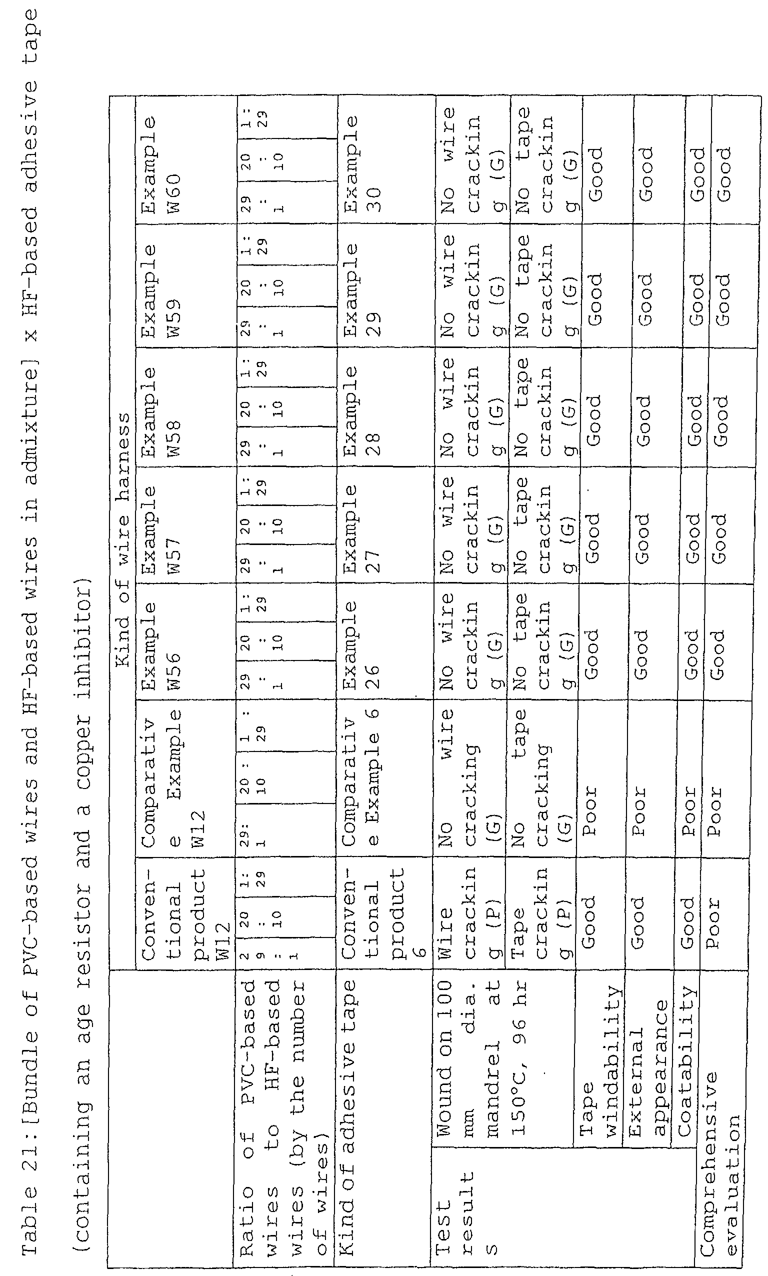

### 13. [Bundle of PVC-based wires (containing an age resistor) and HF-based wires in admixture] x HF-based adhesive tape (containing an age resistor)

The results of test on [bundle of PVC-based wires (containing an age resistor) and HF-based wires in admixture] x HF-based adhesive tape (containing an age resistor) are set forth in Table 22. As a result, in the mandrel winding test, HF-based wire in the wire harness of conventional product W13 underwent cracking regardless of the mixing ratio of PVC-based wires to HF-based wires (29 : 1, 20 : 10 or 1 : 29). Thus, the conventional product W13 is judged defective. This can be understood because the adhesive deterioration accelerating factor contained in the adhesive of HF-based adhesive tape of conventional product 1 and the substrate deterioration accelerating factor contained in the substrate cannot be prevented frommigrating into the coveringmaterial for HF-based wire.

On the contrary, none of HF-based wire in the wire harnesses of Examples W61 to W65 underwent cracking in the mandrel winding test. This can be understood because the adhesive of PVC-based tapes (containing an age resistor) of Examples 1 to 5 comprises an emulsion type acrylic resin, preventing the adhesive deterioration accelerating factor contained in the adhesive from migrating into the covering material for HF-based wire. This can also be understood because the adhesive and the substrate previously comprise an age resistor incorporated therein in an optimum amount, making it possible to prevent or inhibit the reduction of the age resistor in the covering material even if the substrate deterioration accelerating factor migrates into the covering material for HF-based wire.

Further, in addition, PVC-based wires (containing an age resistor) are used in the present examples. Therefore, even when the plasticizer, etc. contained in the covering material for PVC-based wires (containing an age resistor) migrate into the covering material for HF-based wires, the deterioration of the covering material for HF-basedwires due to the migration between the wires can be drastically prevented.

On the other hand, in the tape windability and coatability tests, PVC-based adhesive tape (containing an age resistor and a copper inhibitor) of Comparative Example 1 is judged defective. This can be understood because the age resistor is excessively incorporated in the adhesive. On the contrary, PVC-based adhesive tapes (containing an age resistor) of Examples 1 to 5 were judged acceptable in both tape wind ability and coalability. This can be understood because the age resistor is incorporated in the adhesive in an optimum amount. Accordingly, the aforementioned inventive products were generally judged good (G) in comprehensive evaluation.

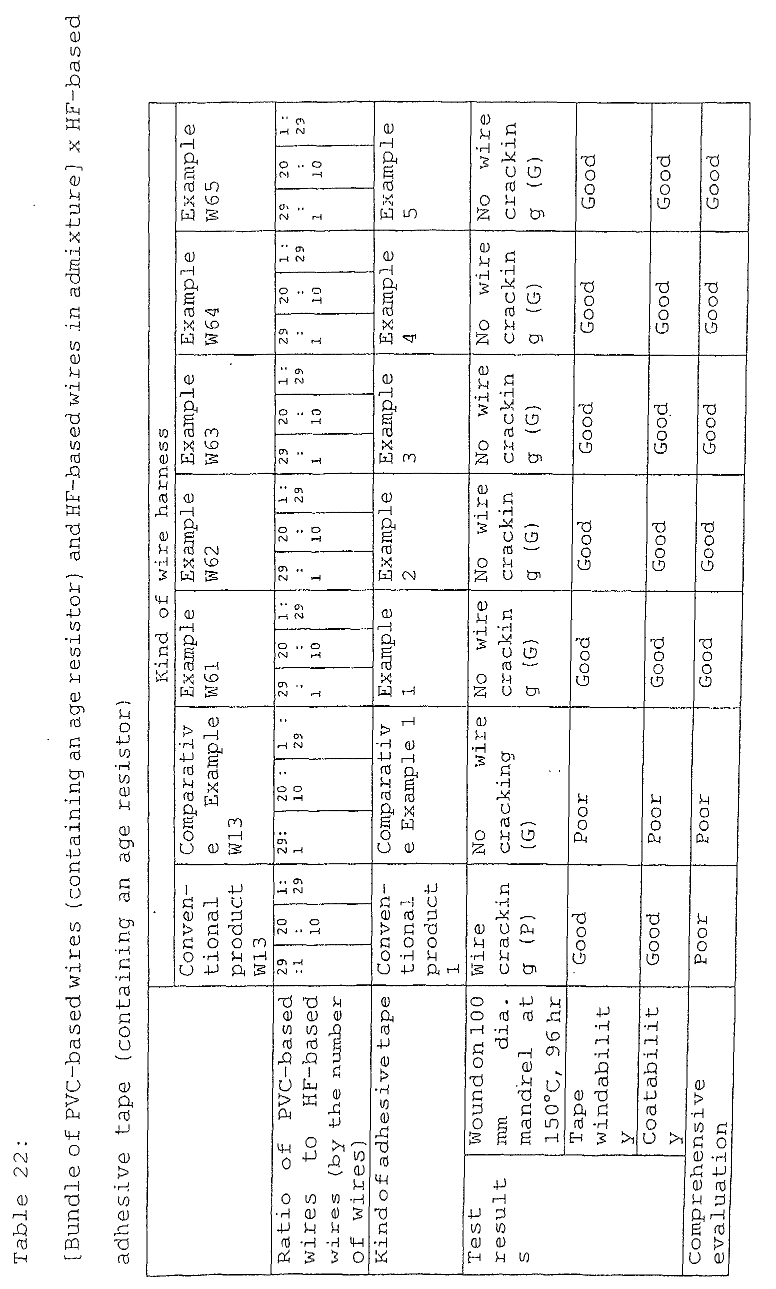

### 14. [Bundle of PVC-based wires (containing an age resistor) and HF-based wires in admixture] x HF-based adhesive tape (containing an age resistor)

The results of test on [bundle of PVC-based wires (containing an age resistor) and HF-based wires in admixture] x HF-based adhesive tape (containing an age resistor) are set forth in Table 23. As a result, in the mandrel winding test, HF-based wire in the wire harness of conventional product W14 underwent cracking regardless of the mixing ratio of PVC-based wires to HF-based wires (29 : 1, 20 : 10 or 1 : 29). Thus, the conventional product W14 is judged defective. This can be understood because the adhesive deterioration accelerating factor contained in the adhesive of HF-based adhesive tape of conventional product 14 cannot be prevented from migrating into the covering material for HF-based wire.

Further, HF-based wire in the conventional product 2, too, underwent cracking and thus is judged defective. This can be understood because the adhesive deterioration accelerating factor contained in the adhesive of HF-based adhesive tape of the conventional product 2 migrated into the substrate.

On the contrary, none of HF-based wire in the wire harnesses of Examples W66 to W70 underwent cracking in the mandrel winding test. This can be understood because the adhesive of HF-based tapes (containing an age resistor) of Examples 6 to 10 comprises an emulsion type acrylic resin, preventing the adhesive deterioration accelerating factor contained in the adhesive from migrating into the covering material for HF-based wire.

Further, in addition, PVC-based wires (containing an age resistor) are used in the present examples. Therefore, even when the plasticizer, etc. contained in the covering material for PVC-based wires (containing an age resistor) migrate into the covering material for HF-based wires, the deterioration of the covering material for HF-basedwires due to the migration between the wires can be drastically prevented.

On the other hand, in the tape windability and coatability tests, PVC-based adhesive tape (containing an age resistor) of Comparative Example 2 is judged defective. This can be understood because the age resistor is excessively incorporated in the adhesive. On the contrary, HF-based adhesive tapes (containing an age resistor) of Examples 6 to 10 were judged acceptable in both tape windability and coatability. This can be understood because the age resistor is incorporated in the adhesive in an optimum amount. Accordingly, the aforementioned inventive products were generally judged good (G) in comprehensive evaluation.

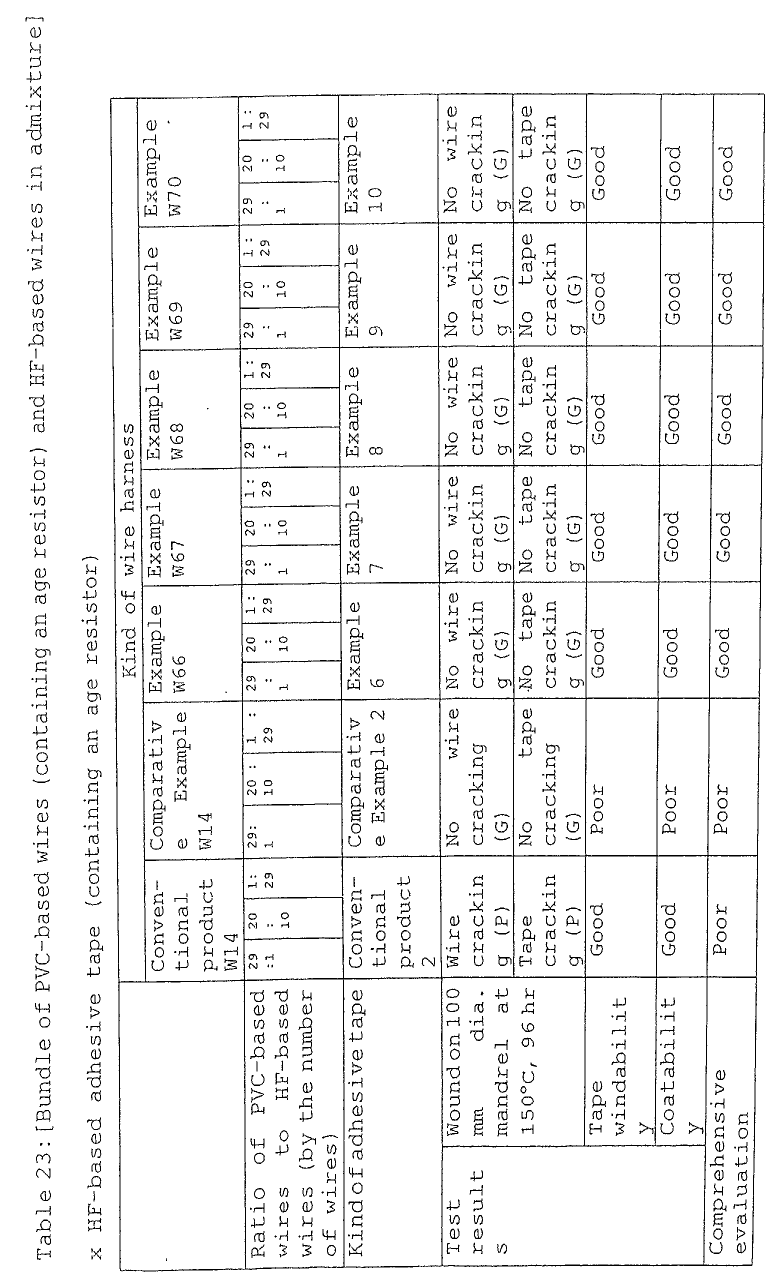

### 15. [Bundle of PVC-based wires (containing an age resistor) and HF-based wires in admixture] x PVC-based adhesive tape (containing a copper inhibitor)

The results of test on [bundle of PVC-based wires (containing an age resistor) and HF-based wires in admixture] x PVC-based adhesive tape (containing a copper inhibitor) are set forth in Table 24. As a result, in the mandrel winding test, HF-based wire in the wire harness of conventional product W15 underwent cracking regardless of the mixing ratio of PVC-based wires to HF-based wires (29 : 1, 20 : 10 or 1 : 29). Thus, the conventional product W15 is judged defective. This can be understood because the adhesive deterioration accelerating factor contained in the adhesive of HF-based adhesive tape of conventional product 3 and the substrate deterioration accelerating factor cannot be prevented from migrating into the covering material for HF-based wire.

On the contrary, none of HF-based wire in the wire harnesses of Examples W71 to W75 underwent cracking in the mandrel winding test. This can be understood because the adhesive of PVC-based tapes (containing a copper inhibitor) of Examples 11 to 15 comprises an emulsion type acrylic resin, preventing the adhesive deterioration accelerating factor contained in the adhesive from migrating into the covering material for HF-based wire. This can also be understood because the adhesive and the substrate previously comprise a copper inhibitor incorporated therein in an optimum amount, making it possible to supply the copper inhibitor into the covering material for HF-based wires and hence prevent or inhibit the reduction of the copper inhibitor in the covering material even if the substrate deterioration accelerating factor migrates into the covering material for HF-based wire.

Further, in addition, PVC-based wires (containing an age resistor) are used in the present examples. Therefore, even when the plasticizer, etc. contained in the covering material for PVC-based wires (containing an age resistor) migrate into the covering material for HF-based wires, the deterioration of the covering material for HF-based wires due to the migration between the wires can be drastically prevented.

On the other hand, in the tape windability, tape external appearance and coatability tests, PVC-based adhesive tape (containing an age resistor) of Comparative Example 3 is judged defective. This can be understood because the copper inhibitor is excessively incorporated in the adhesive. On the contrary, PVC-based adhesive tapes (containing a copper inhibitor) of Examples 11 to 15 were judged acceptable in tape windability, tape external appearance and coatability. This can be understood because the copper inhibitor is incorporated in the adhesive in an optimum amount. Accordingly, the aforementioned inventive products were generally judged good (G) in comprehensive evaluation.

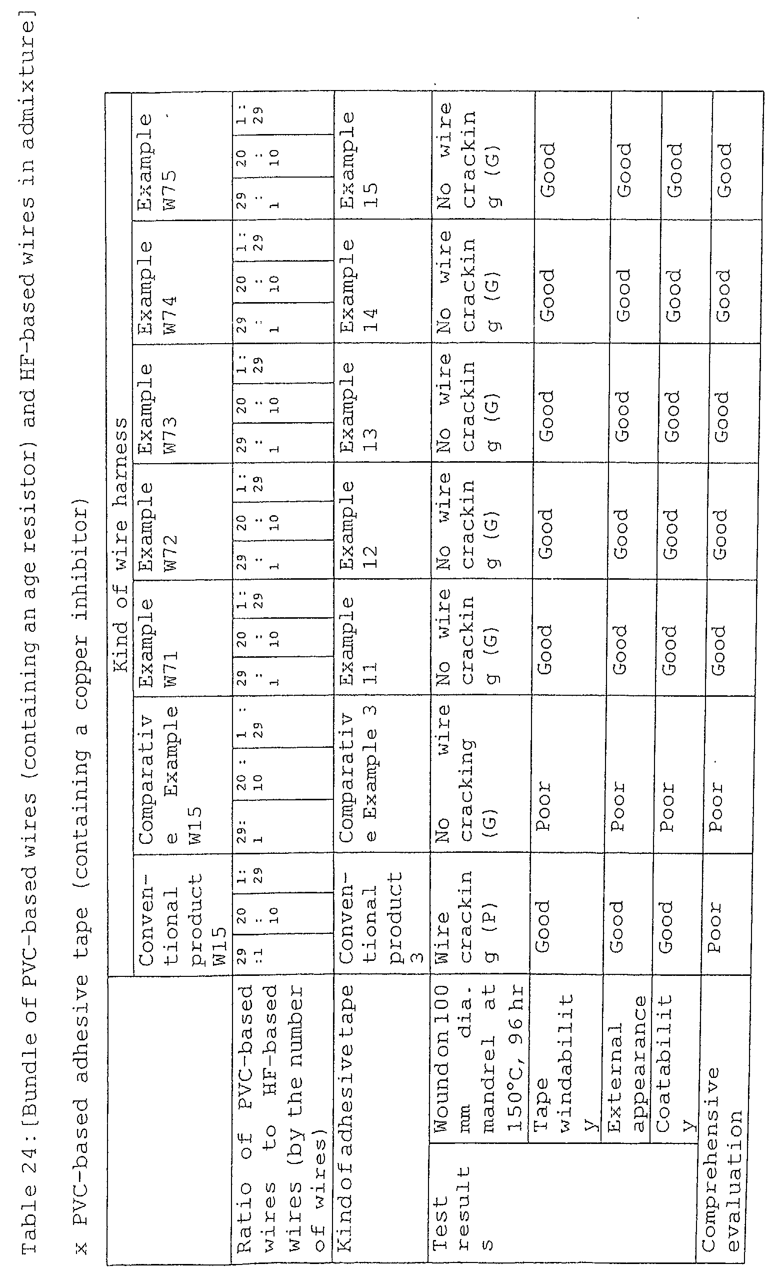

### 16. [Bundle of PVC-based wires (containing an age resistor) and HF-based wires in admixture] x HF-based adhesive tape (containing a copper inhibitor)

The results of test on [bundle of PVC-based wires (containing an age resistor) and HF-based wires in admixture] x HF-based adhesive tape (containing a copper inhibitor) are set forth in Table 25. As a result, in the mandrel winding test, HF-based wire in the wire harness of conventional product W16 underwent cracking regardless of the mixing ratio of PVC-based wires to HF-based wires (29 : 1, 20 : 10 or 1 : 29). Thus, the conventional product W16 is judged defective. This can be understood because the adhesive deterioration accelerating factor contained in the adhesive of HF-based adhesive tape of conventional product 4 cannot be prevented from migrating into the covering material for HF-based wire.

Further, HF-based wire in the conventional product 4, too, underwent cracking and thus is judged defective. This can be understood because the adhesive deterioration accelerating factor contained in the adhesive of HF-based adhesive tape of the conventional product 4 migrated into the substrate.

On the contrary, none of HF-based wire in the wire harnesses of Examples W76 to W80 underwent cracking in the mandrel winding test. This can be understood because the adhesive of HF-based tapes (containing a copper inhibitor) of Examples 16 to 20 comprises an emulsion type acrylic resin, preventing the adhesive deterioration accelerating factor contained in the adhesive from migrating into the covering material for HF-based wire.

Further; in addition, PVC-based wires (containing an age resistor) are used in the present examples. Therefore, even when the plasticizer, etc. contained in the covering material for PVC-based wires (containing an age resistor) migrate into the covering material for HF-based wires, the deterioration of the covering material for HF-based wires due to the migration between the wires can be drastically prevented.

On the other hand, in the tape windability, tape external appearance and coatability tests, HE-based adhesive tape (containing a copper inhibitor) of Comparative Example 4 is judged defective. This can be understood because the copper inhibitor is excessively incorporated in the adhesive. On the contrary, HF-based adhesive tapes (containing an age resistor) of Examples 16 to 20 were judged acceptable in tape wind ability, tape external appearance and coatability. This can be understood because the copper inhibitor is incorporated in the adhesive in an optimum amount. Accordingly, the aforementioned inventive products were generally judged good (G) in comprehensive evaluation.

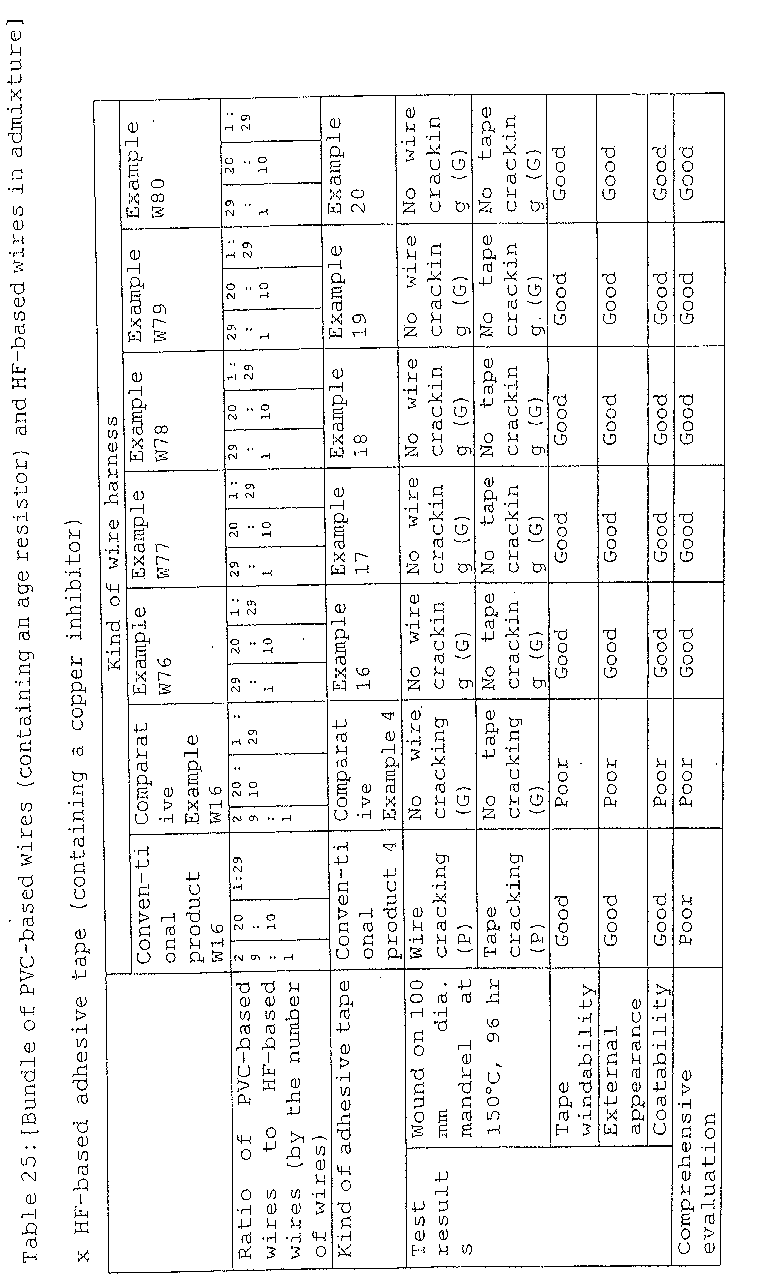

### 17. [Bundle of PVC-based wires (containing an age resistor) and HF-based wires in admixture] x PVC-based adhesive tape (containing an age resistor and a copper inhibitor)

The results of test on [bundle of PVC-based wires (containing an age resistor) and HF-based wires in admixture] x PVC-based adhesive tape (containing an age resistor and a copper inhibitor) are set forth in Table 26. As a result, in the mandrel winding test, HF-based wire in the wire harness of conventional product W17 underwent cracking regardless of the mixing ratio of PVC-based wires to HF-based wires (29 : 1, 20 : 10 or 1 : 29). Thus, the conventional product W17 is judged defective. This can be understood because the adhesive deterioration accelerating factor contained in the adhesive of PVC-based adhesive tape of conventional product 17 and the substrate deterioration accelerating factor contained in the substrate cannot be prevented from migrating into the covering material for HF-based wire.

On the contrary, none of HF-based wire in the wire harnesses of Examples W81 to W85 underwent cracking in the mandrel winding test. This can be understood because the adhesive of PVC-based tapes (containing an age resistor and a copper inhibitor) of Examples 21 to 25 comprises an emulsion type acrylic resin, preventing the adhesive deterioration accelerating factor contained in the adhesive from migrating into the covering material for HF-based wire.

Further, it can be interpreted that since the adhesive and the substrate previously comprise an age resistor and a copper inhibitor incorporated therein in an optimum amount, the reduction of the age resistor in the covering material and the occurrence of copper damage by copper ions can be avoided even if the substrate deterioration accelerating factor migrates into the covering material for HF-based wire.

Further, in addition, PVC-based wires (containing an age resistor) are used in the present examples. Therefore, even when the plasticizer, etc. contained in the covering material for PVC-based wires (containing an age resistor) migrate into the covering material for HF-based wires, the deterioration of the covering material for HF-based wires due to the migration between the wires can be drastically prevented.

On the other hand, in the tape windability, tape external appearance and coatability tests, PVC-based adhesive tape (containing an age resistor and a copper inhibitor) of Comparative Example 5 is judged defective. This can be understood because the copper inhibitor is excessively incorporated in the adhesive. On the contrary, PVC-based adhesive tapes (containing an age resistor and a copper inhibitor) of Examples 21 to 25 were judged acceptable in tape windability, tape external appearance and coatability. This can be understood because the age resistor and the copper inhibitor are incorporated in the adhesive in an optimum amount. Accordingly, the aforementioned inventive products were generally judged good (G) in comprehensive evaluation.

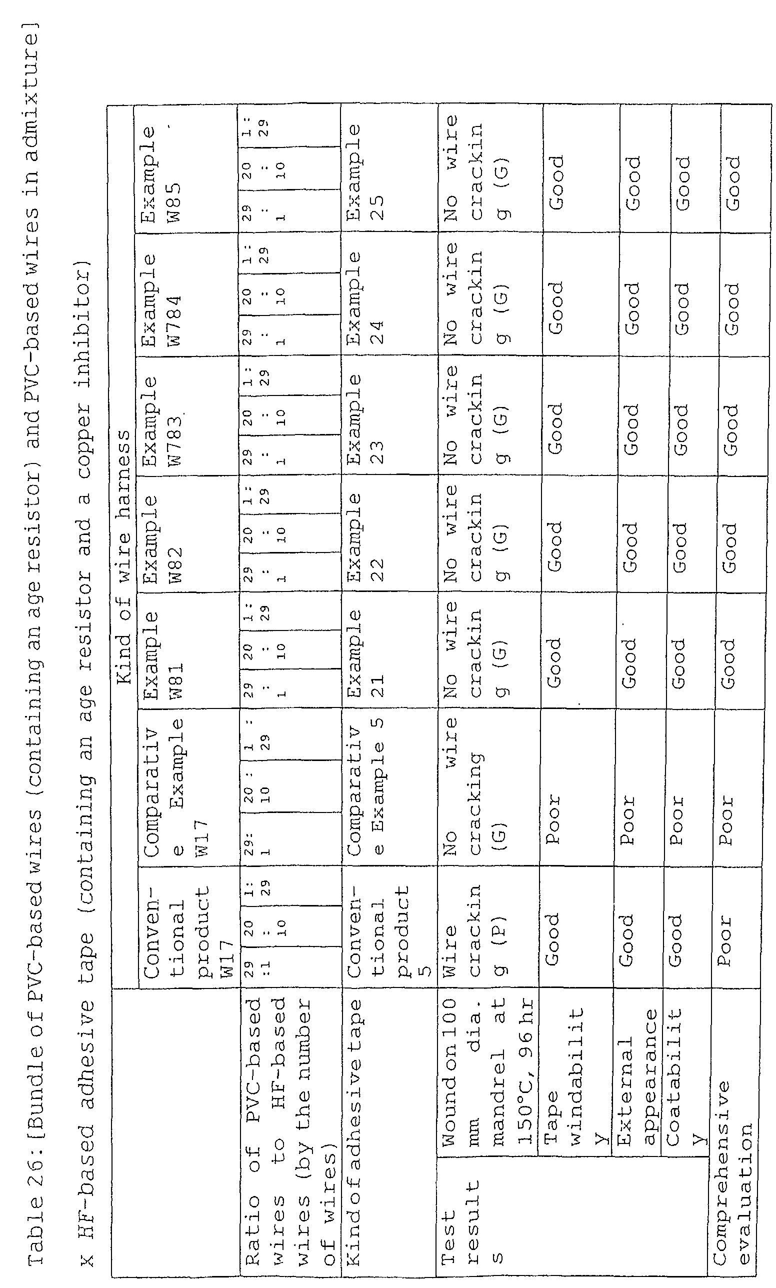

### 18. [Bundle of PVC-based wires (containing an age resistor) and HF-based wires in admixture] x HF-based adhesive tape (containing an age resistor and a copper inhibitor)

The results of test on [bundle of PVC-based wires (containing an age resistor) and HF-based wires in admixture] x HF-based adhesive tape (containing an age resistor and a copper inhibitor) are set forth in Table 27. As a result, in the mandrel winding test, HF-based wire in the wire harness of conventional product W18 underwent cracking regardless of the mixing ratio of PVC-based wires to HF-based wires (29 : 1, 20 : 10 or 1 : 29). Thus, the conventional product W18 is judged defective. This can be understood because the adhesive deterioration accelerating factor contained in the adhesive of HF-based adhesive tape of conventional product 6 cannot be prevented from migrating into the covering material for HF-based wire.

Further, HF-based wire in the conventional product 6, too, underwent cracking and thus is judged defective. This can be understood because the adhesive deterioration accelerating factor contained in the adhesive of HF-based adhesive tape of the conventional product 6 migrated into the substrate.

On the contrary, none of HF-based wire in the wire harnesses of Examples W86 to W90 underwent cracking in the mandrel winding test. This can be understood because the adhesive of HF-based tapes (containing an age resistor and a copper inhibitor) of Examples 26 to 30 comprises an emulsion type acrylic resin, preventing the adhesive deterioration accelerating factor contained in the adhesive from migrating into the covering material for HF-based wire.

Further, in addition, PVC-based wires (containing an age resistor) are used in the present examples. Therefore, even when the plasticizer, etc. contained in the covering material for PVC-based wires (containing an age resistor) migrate into the covering material for HF-based wires, the deterioration of the covering material for HF-basedwires due to the migration between the wires can be drastically prevented.

On the other hand, in the tape windability, tape external appearance and coatability tests, HF-based adhesive tape (containing a copper inhibitor) of Comparative Example 6 is judged defective. This can be understood because the copper inhibitor is excessively incorporated in the adhesive. On the contrary, HF-based adhesive tapes (containing an age resistor and a copper inhibitor) of Examples 26 to 30 were judged acceptable in tape windability, tape external appearance and coatability. This can be understood because the age resistor and the copper inhibitor are incorporated in the adhesive in an optimum amount. Accordingly, the aforementioned inventive products were generally judged good (G) in comprehensive evaluation.

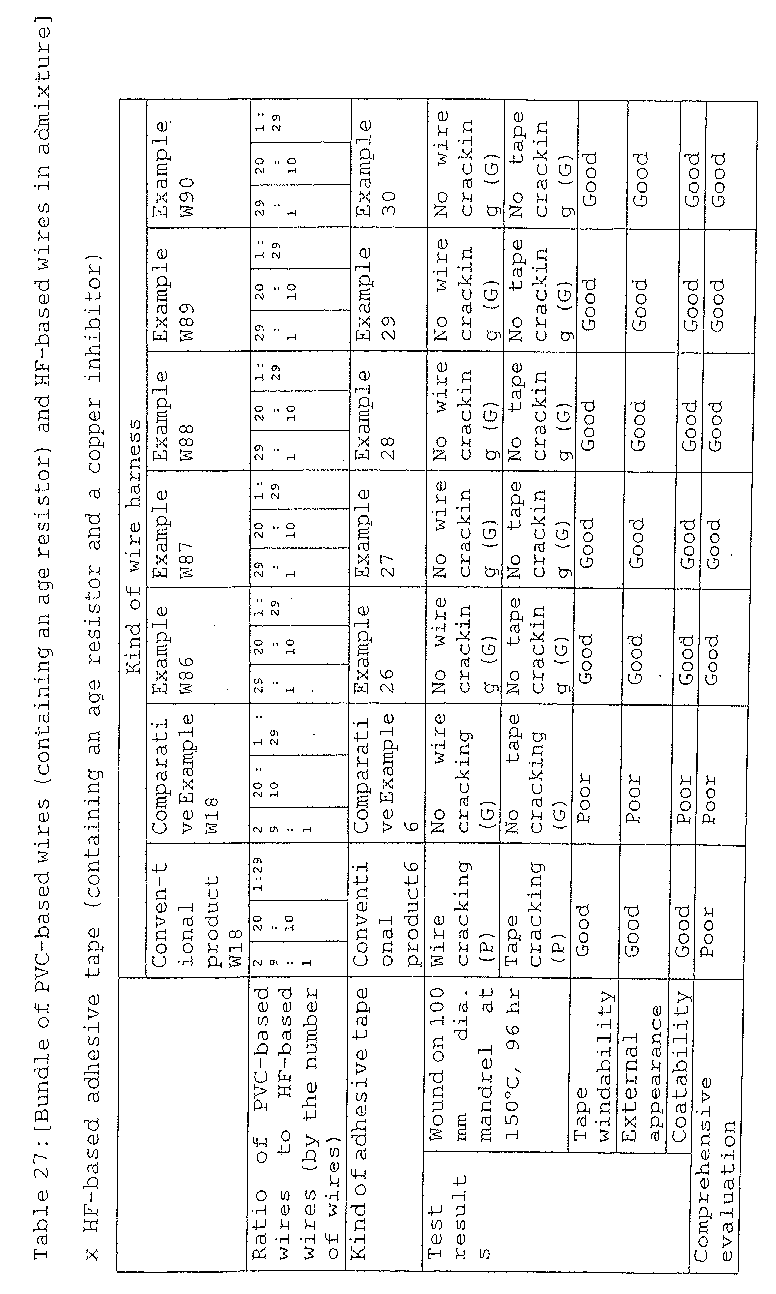

While the invention has been described in detail and with reference to specific embodiments thereof, it will be apparent to one skilled in the art that various changes and modifications can be made therein without departing from the spirit and scope thereof. For example, while the examples have been described with reference to the use of emulsion type acrylic resin as an adhesive, the adhesive may be of solvent type, crosslinked type or mixture thereof and is not specifically limited.

The aforementioned examples have no special reference to wire harness comprising a bundle of wires coated with a vinyl chloride resin. Of course, the wire harness protective material according to the invention can be applied also to this case.

Further, preferred embodiments of implementation of the invention will be described hereinafter.

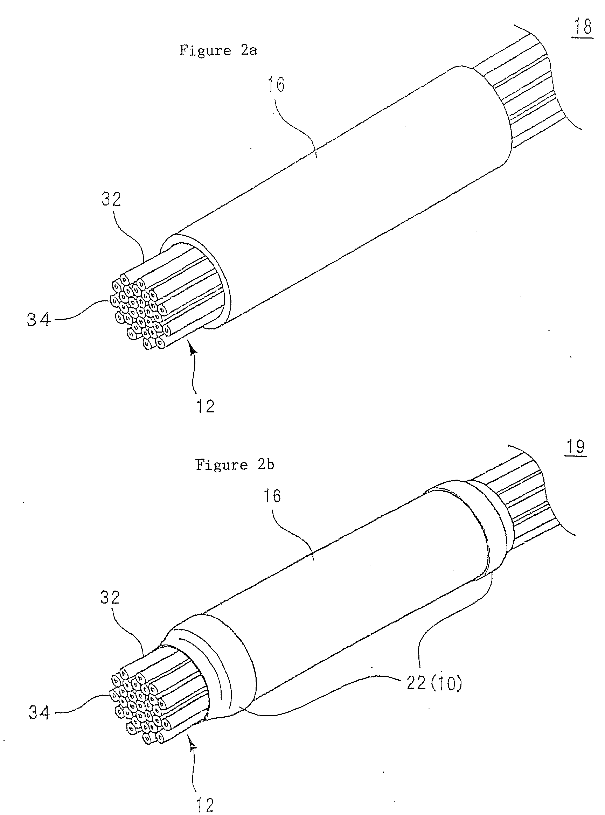

Figs. 1 to 3B each illustrate the external appearance of a wire harness protective material according to an embodiment of implementation of the invention and a wire harness comprising same. Fig. 1 illustrates the external appearance of a wire harness 14 comprising a bundle of wires 12 wound by a tape 10 with an adhesive as a wire harness protective material on the periphery thereof. Figs. 2A and 2B illustrate the external appearance of a wire harness 18 comprising a bundle of wires 12 extending through a tube 16 as a wire harness protective material and a wire harness 19 comprising a bundle of wires 12 extending through a tube 12 as a wire harness protective material wherein a tape 22 is wound on the tube 16 at the ends thereof to bundle the wires 12. Figs, 3A and 3B illustrate a wire harness 24 comprising a bundle of wires 12 covered by a sheet 20 as a wire harness covering material wherein a tape 22 is wound on the sheet 20 at the ends thereof to bundle the wires 12 and a wire harness 30 comprising a bundle of wires 12 covered by a sheet 26 which has previously been provided with an adhesive as a wire harness protective material wherein the wires are bundled at the site provided with the adhesive 28.

As the substrate of the tape 10 with adhesive, tube 16 and sheets 20 and 26 there may be used a PVC resin or a halogen-free resin (HF resin) totally free of halogen element or having a lower content of halogen element than at least PVC resin. The bundle of wires 12 may be a bundle of HF wires or a bundle of HF wires and PVC wires replacing some of the HF wires of the former bundle of HF wires in admixture. The electrical conductor of the wire 32 comprises 7 soft copper wires. In these drawings, a bundle of wires comprising 30 such wires is shown covered by a wire harness protective material,

The external appearance of the wire harness protective material and wire harness prepared in the following examples can be schematically illustrated by the form shown in any or part of Figs. 1 to 3B.

### [Example]

Preferred embodiments of implementation of the invention will be further described hereinafter.

Firstly, as insulating material-covered wires to be used in various bundles of wires to which the wire harness protective material according to the present example is applied there were prepared the following three kinds of insulating material-covered wires. The first kind of an insulating material-covered wire was HF wire comprising a wire covering material totally free of halogen element as set forth in Table A. The HF wire used comprises a wire covering material mainly composed of apolyolefinic polypropylene resin having magnesium hydroxide as a fire retardant, an age resistor (phenolic age resistor) and a copper inhibitor incorporated therein in an amount of 80 parts by weight, 3 parts by weight and 1 part by weight, respectively, based on 100 parts by weight of the polypropylene resin as set forth in Table A. The proportion of the age resistor is 1.63% by weight (3/184 x 100 = 1.63%) based on the total weight of the polymer, which is 3% (3/100 x 100 = 3%) based on the organic polymer (polypropylene) in the age resistor to be incorporated in HF wire. The proportion of the copper inhibitor is 0.54% by weight (1/184 x 100=0.54%) based on the total weight of the polymer, which is 1% (1/100 x 100 = 1%) based on the organic polymer (polypropylene) in the age resistor to be incorporated in HF wire.

**Table A:**

| HF(halogen-free) wire | | | |
|---|---|---|---|
| Wire covering material | Resin composition | Added amount (parts by weight) | Trade name/make |
| | Polypropylene | 100 | "RB610A", produced by Idemitsu Petrochemical Co., Ltd. |
| | Fire retardant (magnesium hydroxide) | 80 | "Kisuma5", produced by Kyowa Chemical Industry Co., Ltd. |
| | Age resistor | 3 | "Irganox1010" produced by Ciba Specialty Chemicals Co., Ltd. |
| | Copper inhibitor | 1 | "CDA-1", produced by ASAHI DENKA KOGYO K.K. |
| | Total | 184 | |
| Electrical conductor | Material | | |
| | Soft copper wire | | |

The second kind of an insulating material-covered wire was a PVC wire comprising a covering material totally free of age resistor as set forth in Table B. The PVC wire used comprises a wire covering material having DINP (diisononyl phthalate) as a plasticizer, calcium carbonate as a filler and a zinc/calcium-based stabilizer incorporated therein in an amount of 40 parts by weight, 20 parts by weight and 5 parts by weight, respectively, based on 100 parts by weight of polyvinyl chloride (polymerization degree P: 1,300) asset forth in Table B.

**Table B:**

| PVC (polyvinyl chloride) wire | | | |
|---|---|---|---|
| Wire covering material | Resin composition | Added amount (parts by weight) | Trade name/make |
| | PVC (P = 1,300) | 100 | TOSOH CORPORATION |
| | DINP (plasticizer) | 40 | DAIHACHI CHEMICAL INDUSTRY CO., LTD. |
| | Filler (calcium carbonate) | 20 | "Super #1700", produced by MARUO CALCIUM CO., LTD. |
| | Stabilizer | 5 | "Rup110", produced by ASAHI DENKA KOGYO K.K. |
| | Total | 165 | |
| Electrical conductor | Material | | |
| | Soft copper wire | | |

The third kind of an insulating material-covered wire was a PVC wire comprising a covering material having an age resistor incorporated therein (hereinafter simply referred to as "PVC age resistant wire") as set forth in Table C. The PVC age resistant wire used comprises a wire covering material having DINP (diisononyl phthalate) as aplasticizer, calcium carbonate as a filler, a zinc/calcium-based stabilizer and an age resistor incorporated therein in an amount of 40 parts by weight, 20 parts by weight, 5 parts by weight and 4.5 parts by weight, respectively, based on 100 parts by weight of polyvinyl chloride (polymerization degree P: 1,300) as set forth in Table C. The proportion of the age resistor is 2.65% by weight (4.5/169.5 x 100 = 2.65%) based on the total weight of the polymer, which is 3.21% (4.5/140 x 100 = 3.21%) based on the organic polymer (PVC and DINP) in the age resistor to be incorporated in PVC wire.

**Table C:**

| PVC age-resistant wire | | | |
|---|---|---|---|
| Wire covering material | Resin composition | Added amount (parts by weight) | Trade name/make |
| | PVC (P=1,300) | 100 | TOSOH CORPORATION |
| | DINP (plasticizer) | 40 | DAIHACHI CHEMICAL INDUSTRY CO., LTD. |
| | Filler (calcium carbonate) | 20 | "Super #1700", produced by MARUO CALCIUM CO., LTD. |
| | Stabilizer | 5 | "Rup110", produced by ASAHI DENKA KOGYO K.K. |
| | Age resistor | 4.5 | "Irganox1010" produced by Ciba Specialty Chemicals Co., Ltd. |
| | Total | 169.5 | |
| Electrical conductor | Material | | |
| | Soft copper wire | | |

The three kinds of insulated wires each were obtained by twisting 7 soft copper wires having a diameter of 0.32 mm to a twisted copper wire having an outer diameter of 1.0 mm as an electrical conductor, and then covering the periphery of the electrical conductor by the respective insulating material set forth in Tables A to C. For example, the HF wire as the first kind of insulated wire was obtained by mixing the resin composition set forth in Table A in a twin-screw kneader at a mixing temperature of 250°C, pelletizing the mixture in a pelletizer to obtain a pelletized composition, and then extruding the composition through an extruder into a sheet having a thickness of 0.3 mm which is then formed as a covering material layer on the periphery of the electrical conductor comprising twisted 7 wires. The extrusion temperature was 250°C. The PVC wires as the second and third kinds of insulated wires were each obtained by mixing the resin composition set forth in Table B or C in a twin-screw kneader at a mixing temperature of 180°C, pelletizing the mixture in a pelletizer to obtain a pelletized composition, and then extruding the composition through an extruder into a sheet having a thickness of 0.3 mm which is then formed as a covering material layer on the periphery of the electrical conductor comprising twisted 7 wires. The extrusion temperature was 180°C.

As various bundles of wires to which the wire harness protective material according to the present example is applied there were prepared the following 5 kinds of bundles of wires. One of the 5 kinds of bundles of wires was a bundle of 30 HF wires set forth in Table A. The remaining four bundles of wires each were a bundle of HF wires set forth in Table A and PVC wires set forth in Table Bor C in admixture. The various bundles of wires each had 30 wires in total. In the bundles of mixed wires, PVC wires or PVC age resistant wires and HF wires were mixed at a ratio of 25 : 5, 20 : 10, 10 : 20 and 5 : 25 by the number of wires.

The composition and test results of the wire harness protective materials prepared in the examples will be described hereinafter. Tables 28 to 33 show the composition and test results of tape, tube and sheet with PVC adhesive (occasionally referred simply to as "PVC protective material"). Tables 28 and 29 show the composition and tests results of PVC protective material comprising an adsorbent and an age resistor incorporated therein. Tables 30 and 31 show the composition and tests results of PVC protective material comprising an adsorbent and a copper inhibitor incorporated therein.

Tables 32 and 33 show the composition and tests results of PVC protective material comprising an adsorbent, an age resistor and a copper inhibitor incorporated therein.

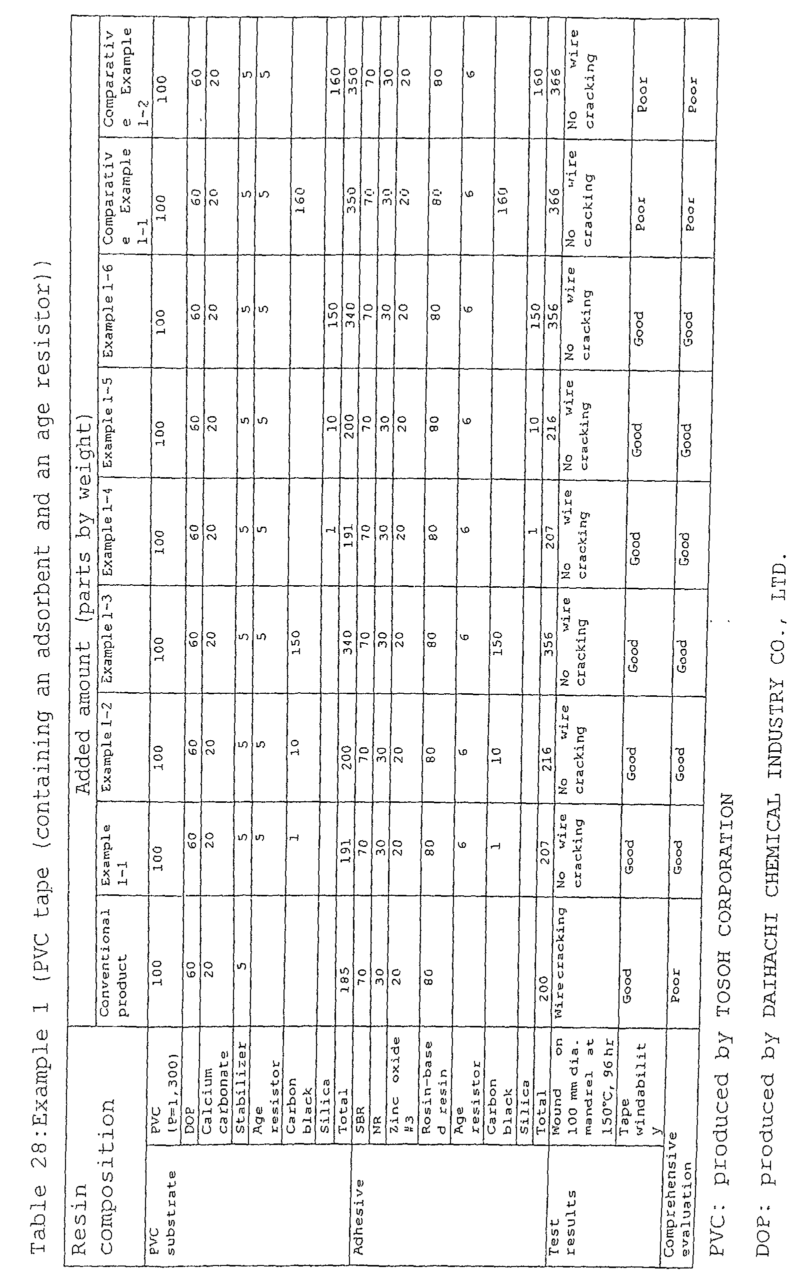

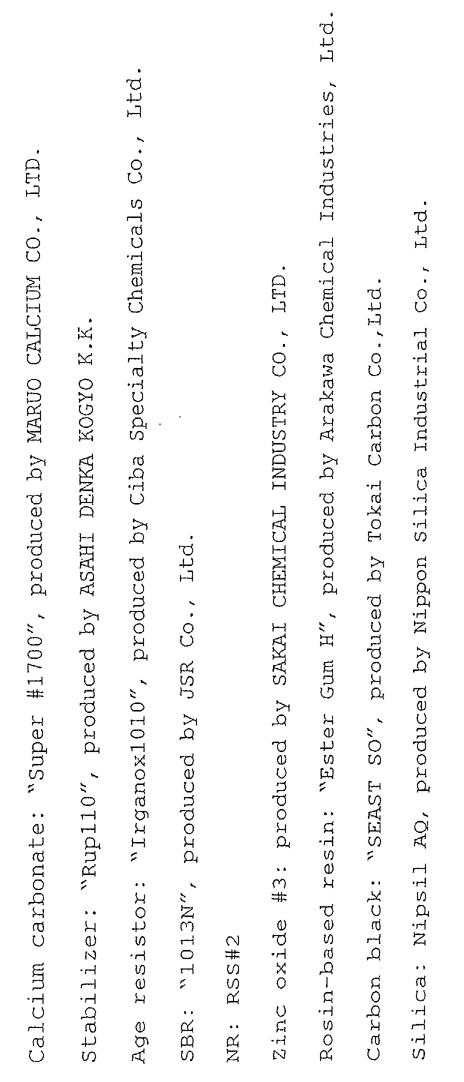

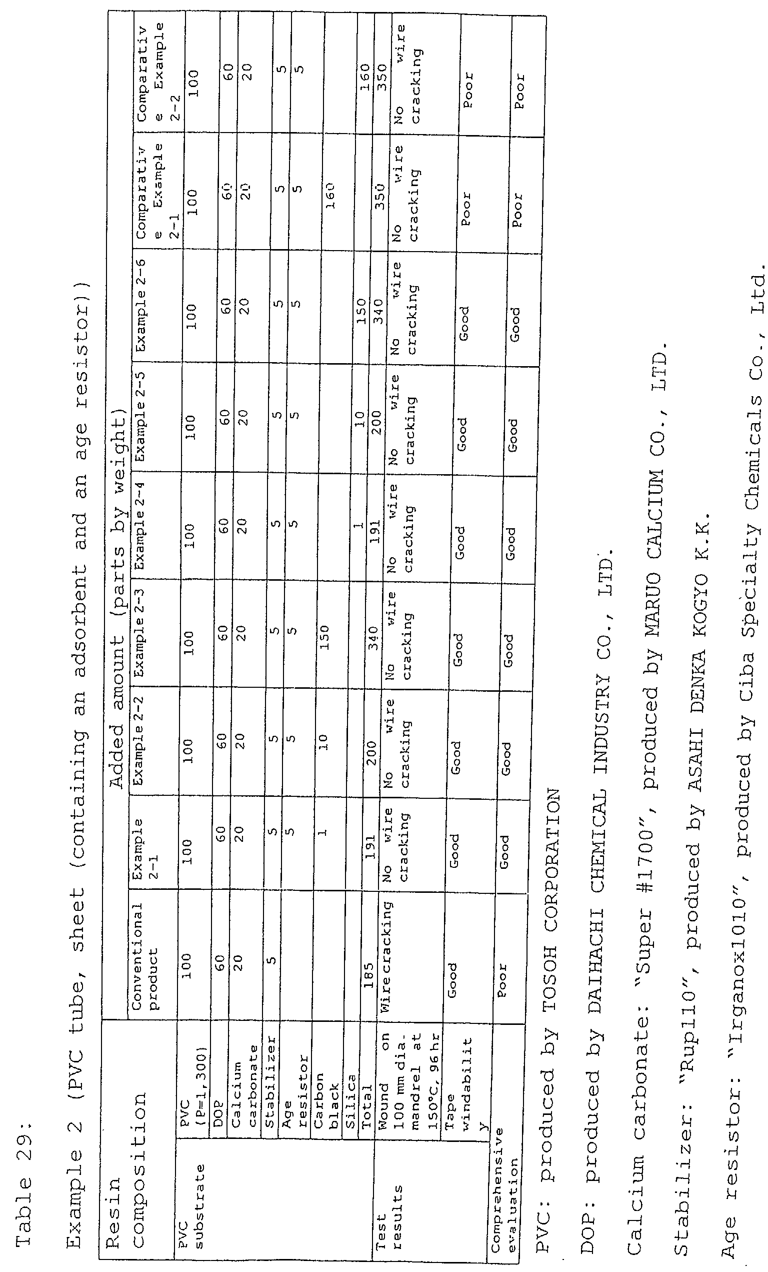

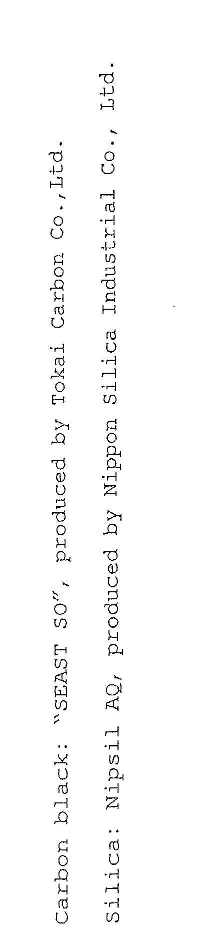

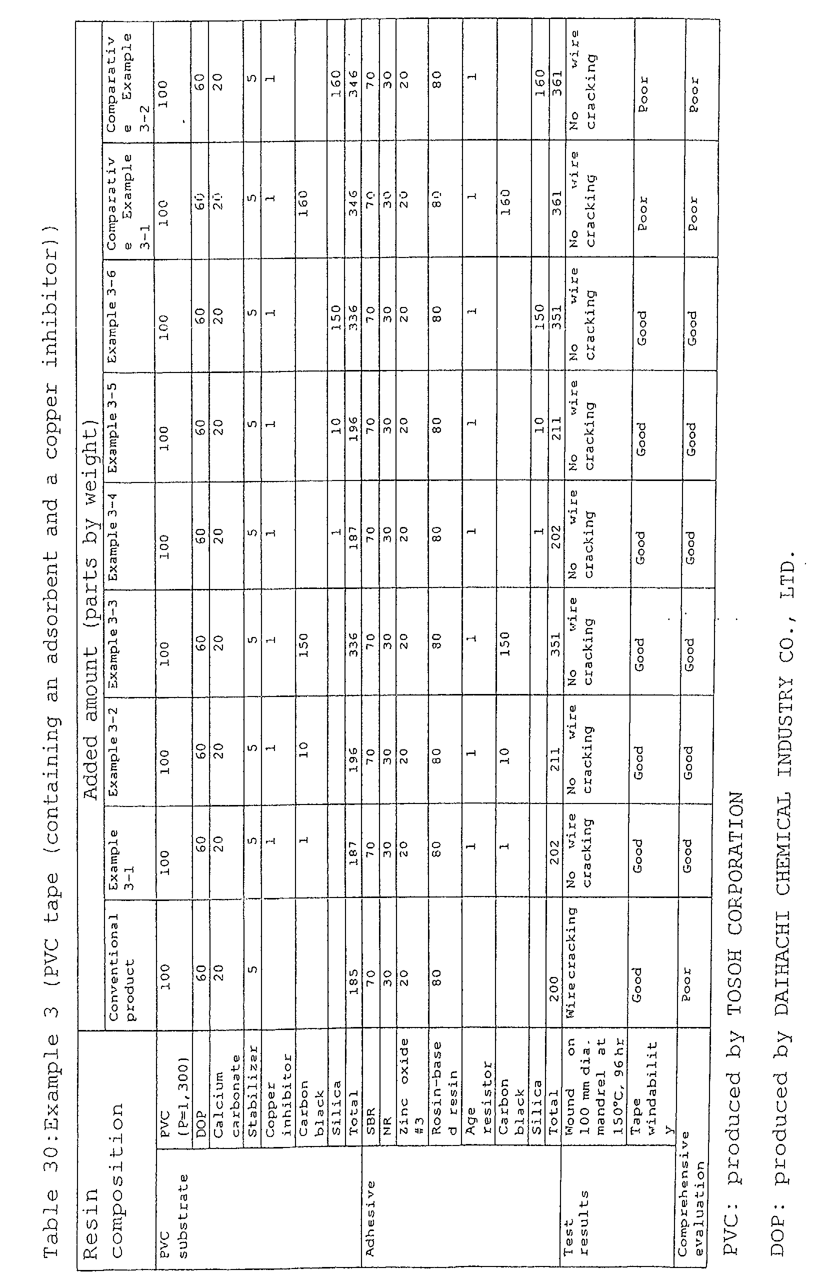

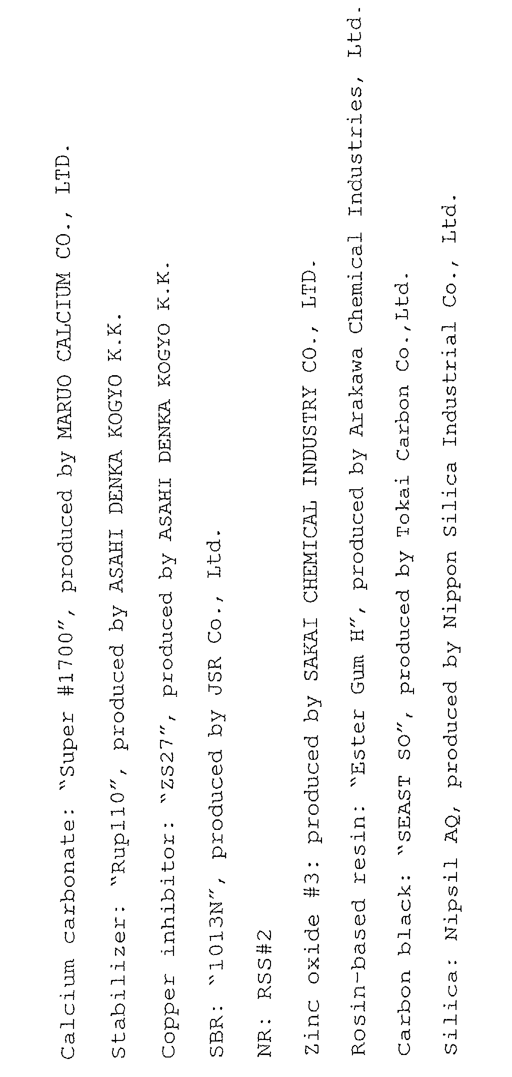

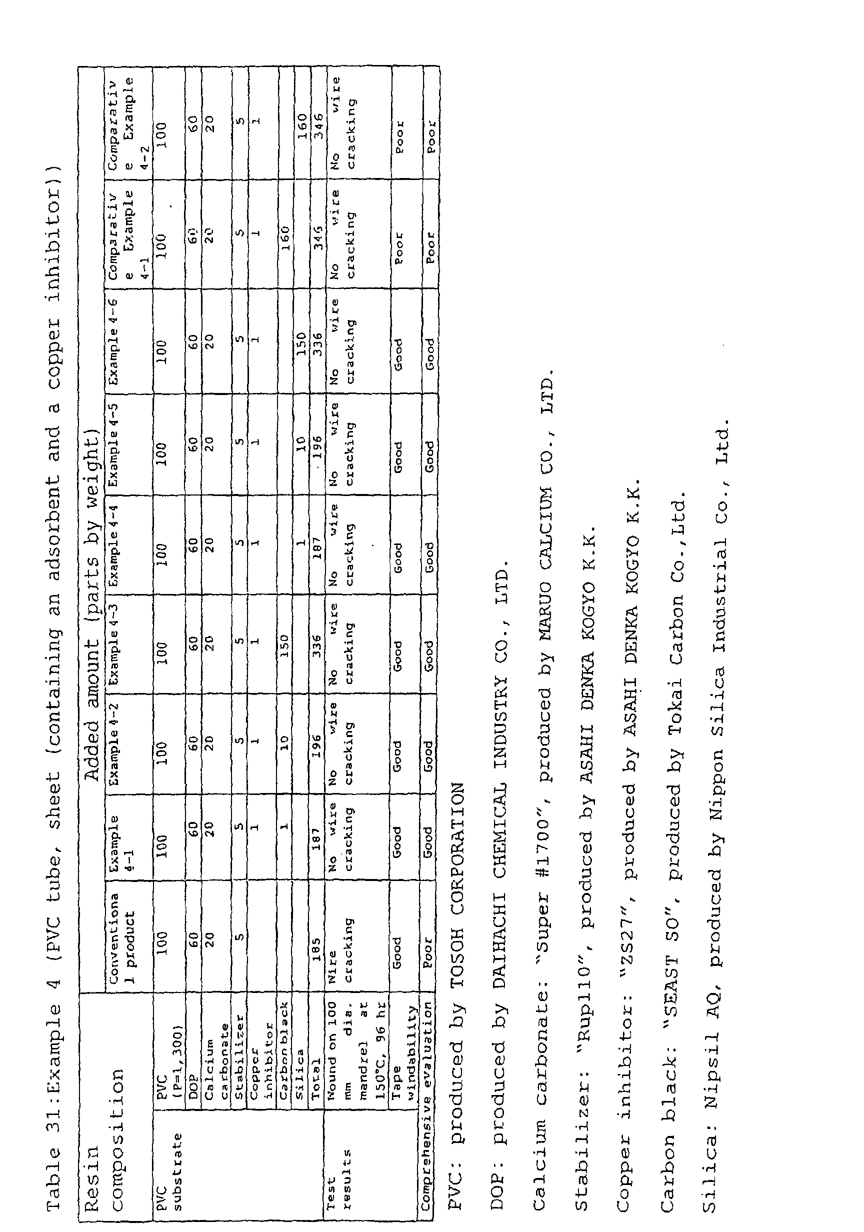

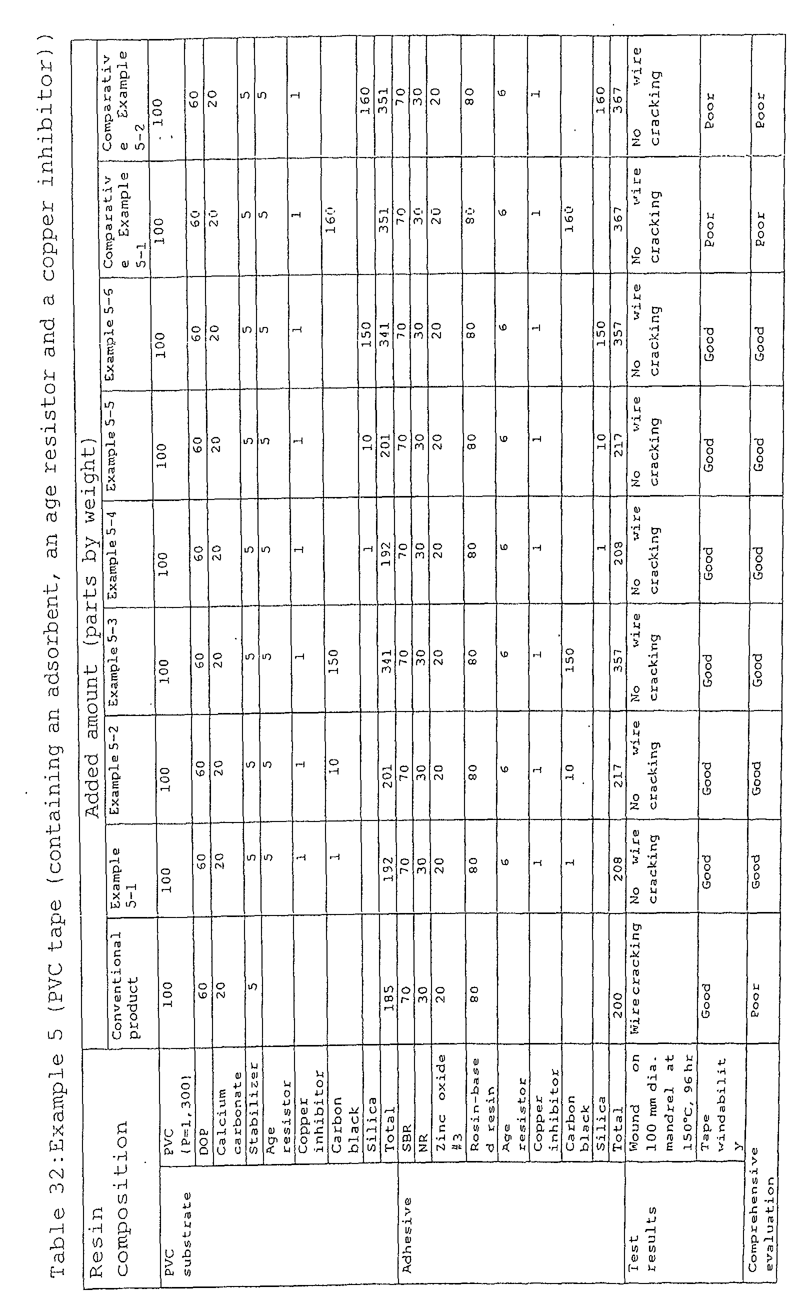

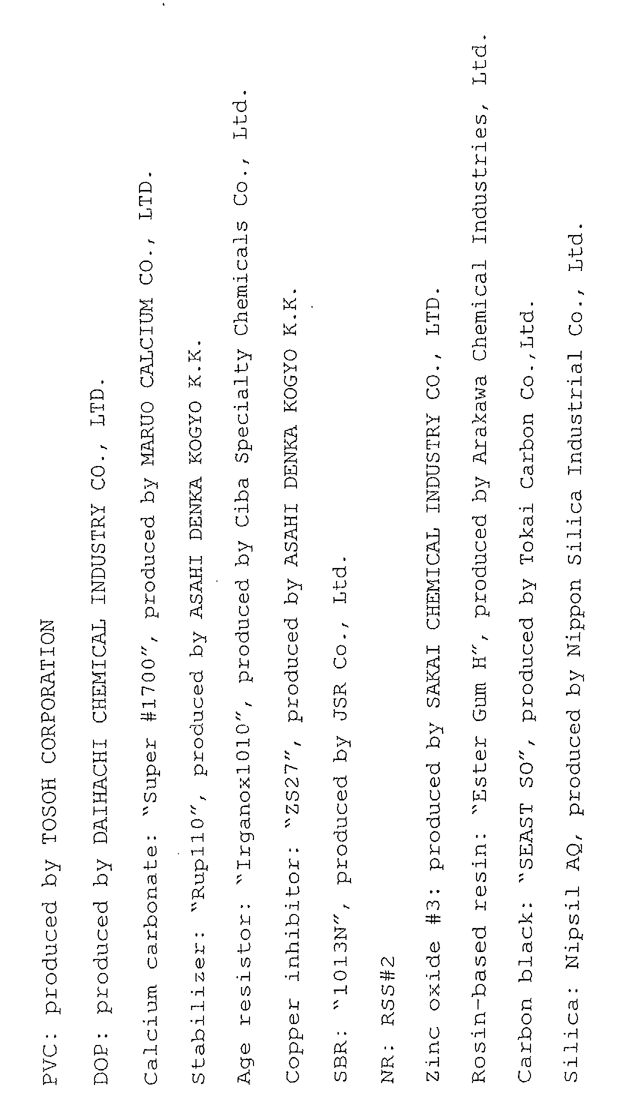

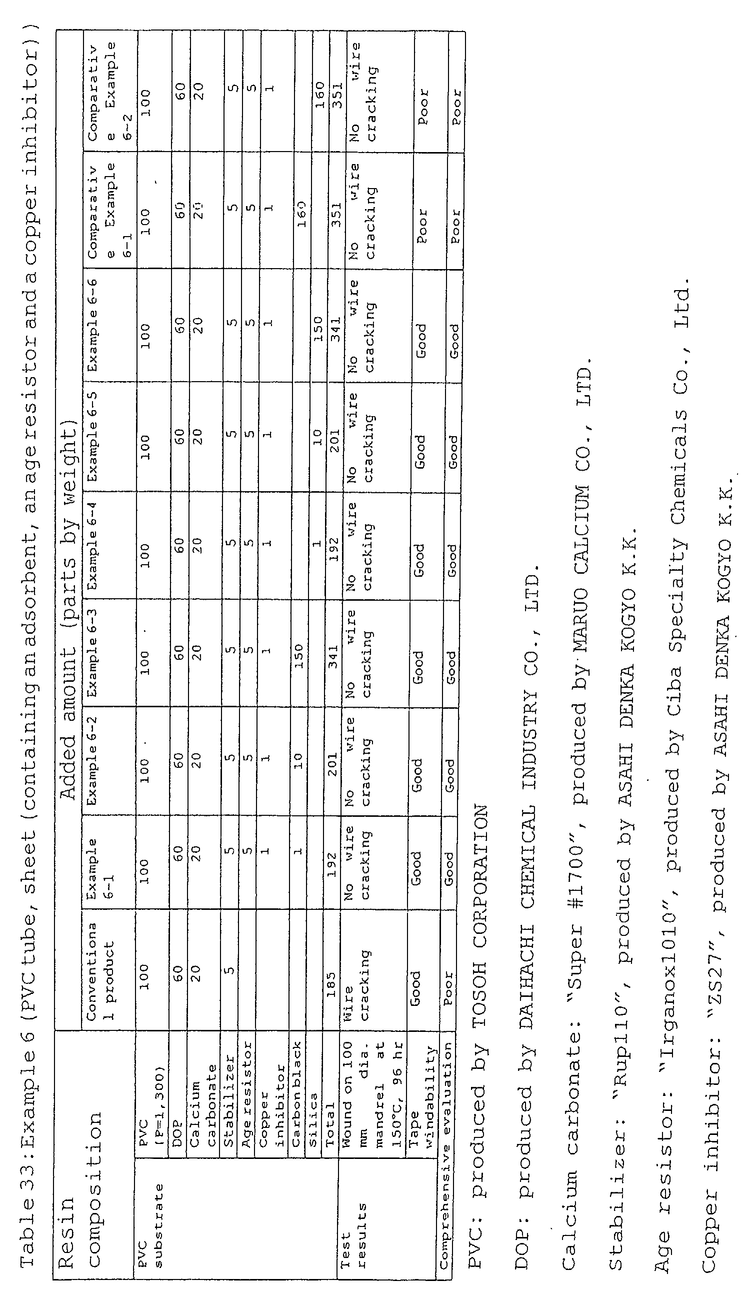

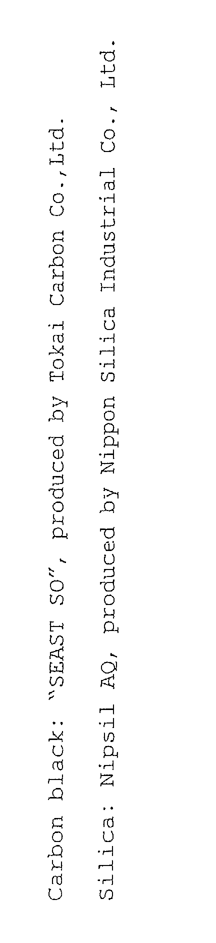

The various compositions will be described hereinafter. The tape, tube and sheet with PVC adhesive of Examples 1 to 6 set forth in Tables 1 to 6 each comprise a substrate comprising a polyvinyl chloride (PVC) resin (polymerization degree P = 1,300) as a base polymer. The substrate comprises DOP (dioctyl phthalate) as a plasticizer, calcium carbonate as a filler and a zinc/calcium-based stabilizer in an amount of 60 parts by weight, 20 parts by weight and 5 parts by weight, respectively, based on 100 parts by weight of PVC resin. The compositions set forth in Tables 28 and 29 include the same composition as mentioned above (conventional product), the same composition as mentioned above but comprising a proper amount of an adsorbent (carbon black or silica) and a proper amount of an age resistor (Examples 1-1 to 1-6 and 2-1 to 2-6) incorporated therein and the same composition as mentioned above but comprising an excessive amount of an adsorbent (carbon black or silica) and a proper amount of an age resistor incorporated therein (Comparative Examples 1-1 and 1-2 and 2-1 and 2-2). The compositions set forth in Tables 30 and 31 include the same composition as mentioned above (conventional product), the same composition as mentioned above but comprising a proper amount of an adsorbent (carbon black or silica) and a proper amount of an age resistor (Examples 3-1 to 3-6 and 4-1 to 4-6) incorporated therein and the same composition as mentioned above but comprising an excessive amount of an adsorbent (carbon black or silica) and a proper amount of a copper inhibitor incorporated therein (Comparative Examples 3-1 and 3-2 and 4-1 and 4-2). The compositions set forth in Tables 32 and 33 include the same composition as mentioned above (conventional product), the same composition as mentioned above but comprising a proper amount of an adsorbent (carbon black or silica) and a proper amount of an age resistor and a copper inhibitor (Examples 1-1 to 1-6 and 2-1 to 2-6) incorporated therein and the same composition as mentioned above but comprising an excessive amount of an adsorbent (carbon black or silica) and a proper amount of an age resistor and a copper inhibitor incorporated therein (Comparative Examples 5-1 and 5-2 and 6-1 and 6-2).

In other words, Examples 1 to 6 set forth in Tables 28 to 33 are common in that the tape-like, tubular and sheet-like substrates with PVC adhesive comprise an adsorbent incorporated therein. Examples 3 and 4 each correspond to Examples 1 and 2 except that the age resistor is replaced by a copper inhibitor. Examples 5 and 6 each correspond to Examples 1 and 2 (or Examples 3 and 4) except that the age resistor (copper inhibitor) is replaced by an age resistor and a copper inhibitor.

The proportion of the age resistor in the substrate of PVC protective material is adjusted almost equal to the aforementioned proportion of the age resistor in HF wire, i.e., 3%. The proportion of the age resistor is defined to be content based on the organic polymer (PVC and DOP). The proportion is adjusted to 3.12% (5/160 x 100 = 3.12%). The proportion of the copper inhibitor in the substrate of PVC protective material is adjusted almost equal to half the aforementioned proportion of the age resistor in HF wire, i.e., 1%. The proportion of the copper inhibitor is defined to be content based on the organic polymer (PVC and DOP). The proportion is adjusted to 0.63% (1/160 x 100 = 0.63%).

The tapes with PVC adhesive of Examples 1, 3 and 5 set forth in Tables 28, 30 and 32 each comprise the aforementioned substrate having an adhesive comprising a rubber-based material such as styrene butadiene rubber (SBR) and NR provided on the entire one side thereof. As the adhesive to be provided on the surface of the substrate there was used a compound comprising SBR (styrene butadiene rubber), NR (natural rubber), zinc oxide and a rosin-based resin in an amount of 70 parts by weight, 30 parts by weight, 20 parts by weight and 80 parts by weight, respectively. Those set forth in Table 28 include the same compound as mentioned above (conventional product), the same compound as mentioned above but comprising a proper amount of an adsorbent (carbon black and silica) and a proper amount of an age resistor incorporated therein (Examples 1-1 to 1-6), and the same compound as mentioned above but comprising an excessive amount of an adsorbent (carbon black and silica) and a proper amount of an age resistor incorporated therein (Comparative Examples 1-1 to 1-2). Those set forth in Table 30 include the same compound as mentioned above (conventional product), the same compound as mentioned above but comprising a proper amount of an adsorbent (carbon black and silica) and a proper amount of a copper inhibitor incorporated therein (Examples 3-1 to 3-6), and the same compound as mentioned above but comprising an excessive amount of an adsorbent (carbon black and silica) and a proper amount of a copper inhibitor incorporated therein (Comparative Examples 3-1 to 3-2). Those set forth in Table 32 include the same compound as mentioned above (conventional product), the same compound as mentioned above but comprising a proper amount of an adsorbent (carbon black and silica) and a proper amount of an age resistor and a copper inhibitor incorporated therein (Examples 5-1 to 5-6), and the same compound as mentioned above but comprising an excessive amount of an adsorbent (carbon black and silica) and a proper amount of an age resistor and a copper inhibitor incorporated therein (Comparative Examples 5-1 to 5-2). The thickness of the adhesive layer was 0.02 mm, and the total thickness of the substrate and the adhesive layer was 0.13 mm.

In other words, Examples 1, 3 and 5 set forth in Tables 28, 30 and 32 are common in that the adhesive to be provided on the surface of the substrate of tape with PVC adhesive, too, comprises an adsorbent incorporated therein. Example 3 corresponds to Example 1 except that the age resistor is replaced by a copper inhibitor. Examples 5 corresponds to Example 1 (or Example 3) except that the age resistor (copper inhibitor) is replaced by an age resistor and a copper inhibitor.

The proportion of the age resistor in the adhesive of the tape with PVC adhesive is adjusted almost equal to the proportion of the age resistor in HF wire, i.e., 3%. The proportion of the age resistor is defined to be content based on the organic polymer (SBR, NR and rosin-based resin) . The proportion is adjusted to 3.3% (6/180 x 100 = 3.3%). The proportion of the copper inhibitor in the substrate of the tape with PVC adhesive is adjusted almost equal to half the aforementioned proportion of the copper inhibitor in HF wire, i.e., 1%. The proportion of the copper inhibitor is defined to be content based on the organic polymer (SER1 NR and rosin-based resin). The proportion is adjusted to 0.56% (1/180 x 100 = 0.56%).

The conventional products, inventive products and comparative products set forth in Tables 28 to 33 thus prepared were tested and evaluated. The testing methods will be described. As samples there were used those obtained by winding the tapes, tubes and sheets with PVC adhesive on the periphery of the aforementioned 5 kinds of bundles of HF wires and bundles of mixed wires, respectively (see Figs. 1 to 3B). The testing was conducted as follows. In some detail, these samples were each allowed to stand in a 150°C constant temperature tank for 96 hours. Thereafter, HF wires were withdrawn, and then wound on a mandrel having a diameter of 10 mm. These HF wires were then visually confirmed to see if the covered portion underwent cracking and for windability.

The results of test will be described hereinafter. The test results of Tables 28 to 33 give only distinction by the added amount of the resin composition but don't refer to the kind of the bundles of wires. This is because the difference in the kind of the bundles of wires or mixing proportion has no effect on the results of test. Accordingly, referring to the results of test on tape, tube and sheet with PVC adhesive, the various conventional products were judged good in the windability test but underwent cracking on HF wire and judged poor (P). Further, Comparative Examples 1-1 to 1-2, 2-1 to 2-2, 3-1 to 3-2, 4-1 to 4-2, 5-1 to 5-2 and 6-1 to 6-2 underwent no cracking in wires but exhibited deteriorated windability and thus were judged poor (P). Examples 1-1 to 1-6, 2-1 to 2-6, 3-1 to 3-6, 4-1 to 4-6, 5-1 to 5-6 and 6-1 to 6-6 showed no cracking, a good windability and hence a good comprehensive evaluation result.

The foregoing results show that when a wire harness protective material (tape-like material, tubular material and sheet-like material with adhesive) comprising as a main component a PVC resin material comprising a proper amount of an adsorbent (carbon black or silica) and a predetermined amount of an age resistor and/or copper inhibitor incorporated therein is wound on the periphery of a bundle of HF coated soft copper wires or a bundle of mixed coated soft copper wires, HF wires undergo no cracking and the deterioration of thermal aging resistance of HF wires can be prevented.

The reason for this phenomenon can be thought as follows. Firstly, this can be thought because the plasticizer contained in the PVC protective material is adsorbed by the adsorbent, preventing the migration of the plasticizer from the PVC protective material into HF wire.

Secondly, this can be thought because the migration of the plasticizer is prevented, preventing the elution of the age resistor and copper inhibitor which have previously been incorporated in HF wire with the plasticizer and hence the extraction of the age resistor and copper inhibitor in HF wire with PVC protective material.

Thirdly, this can be thought because when PVC protective material comprises either or both of an age resistor and a copper inhibitor incorporated therein in a predetermined proportion, there occurs a predetermined relationship between the proportion of either or both of the age resistor and the copper inhibitor in PVC protective material and the proportion of the age resistor and the copper inhibitor which have previously been contained in HF wire, substantially eliminating "concentration gradient causing diffusion" of the age resistor and/or the copper inhibitor between HF wire and PVC protective material and hence preventing the diffusion of the age resistor and/or the copper inhibitor from HF wire into PVC protective material.

Fourthly, this can be thought because the prevention of migration of plasticizer and the prevention of diffusion of the age resistor and/or the copper inhibitor make a synergistic effect.

It is also made obvious that when a wire harness protective material (tape-like material, tubular material and sheet-like material with adhesive) comprising as a main component a PVC resin material comprising a proper amount of an adsorbent (carbon black or silica) and a predetermined amount of an age resistor and/or copper inhibitor incorporated therein is wound on the periphery of a bundle of HF coated soft copper wires or a bundle of mixed coated soft copper wires, the excellent thermal aging resistance of PVC protective material itself can be maintained. This is because the plasticizer contained in PVC protective material is adsorbed by the adsorbent, preventing the migration of the plasticizer from PVC protective material into HF wire. The maintenance of the excellent thermal aging resistance of PVC protective material itself can be suggested also by the fact that when the plasticizer is incorporated in an excessive amount, the resulting wire harness protective material exhibits a deteriorated windability.

Tables 34 to 39 illustrate the composition and test results of tape, tube and sheet with HF adhesive (occasionally referred simply to as "HF protective material") . Tables 34 and 35 each illustrate the composition and test results of HF protective material comprising an adsorbent and an age resistor incorporated therein. Tables 36 and 37 each illustrate the composition and test results of HF protective material comprising an adsorbent and a copper inhibitor. Tables 38 and 39 each illustrate the composition and test results of HF protective material comprising an adsorbent, an age resistor and a copper inhibitor.

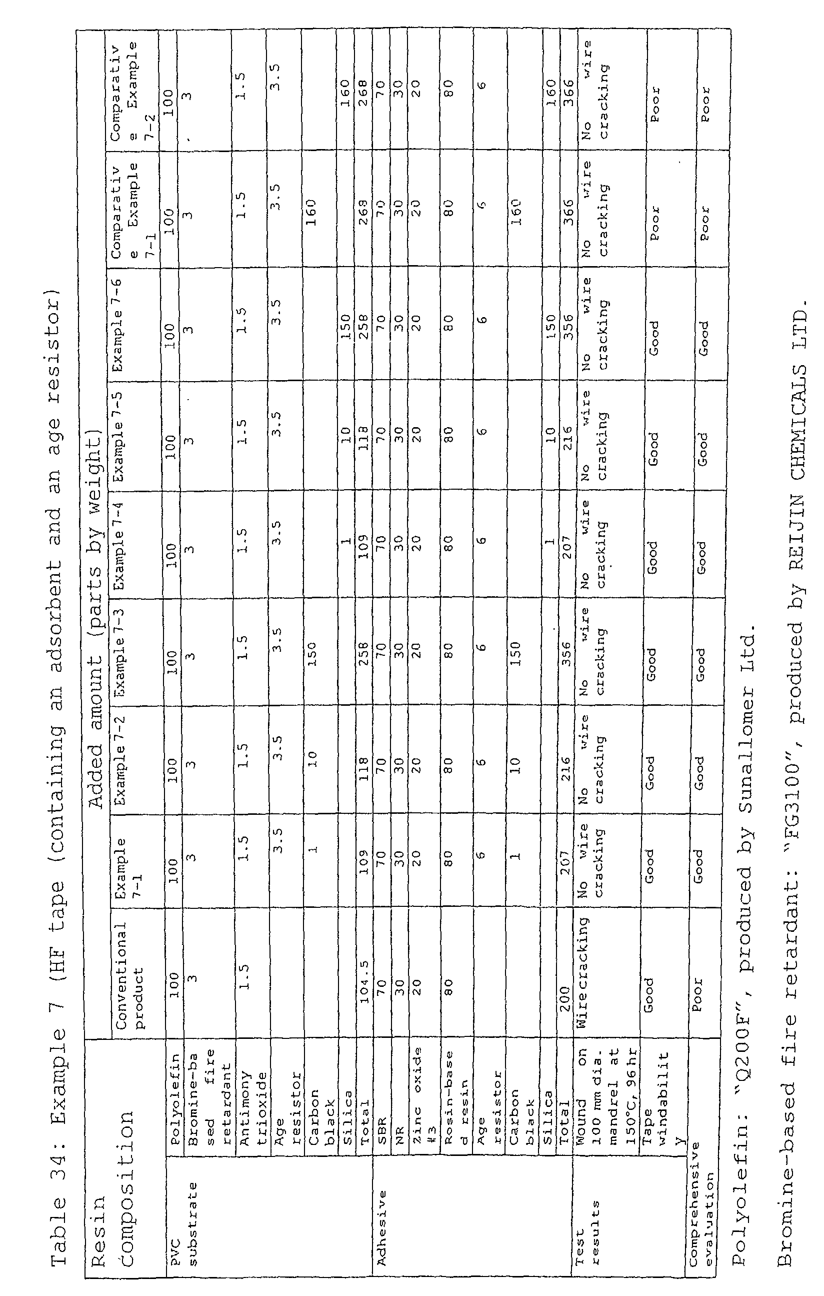

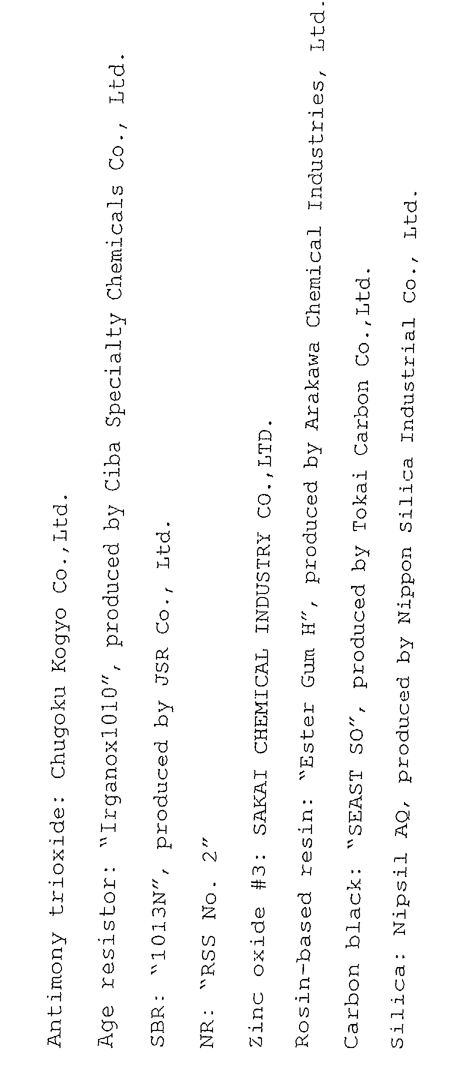

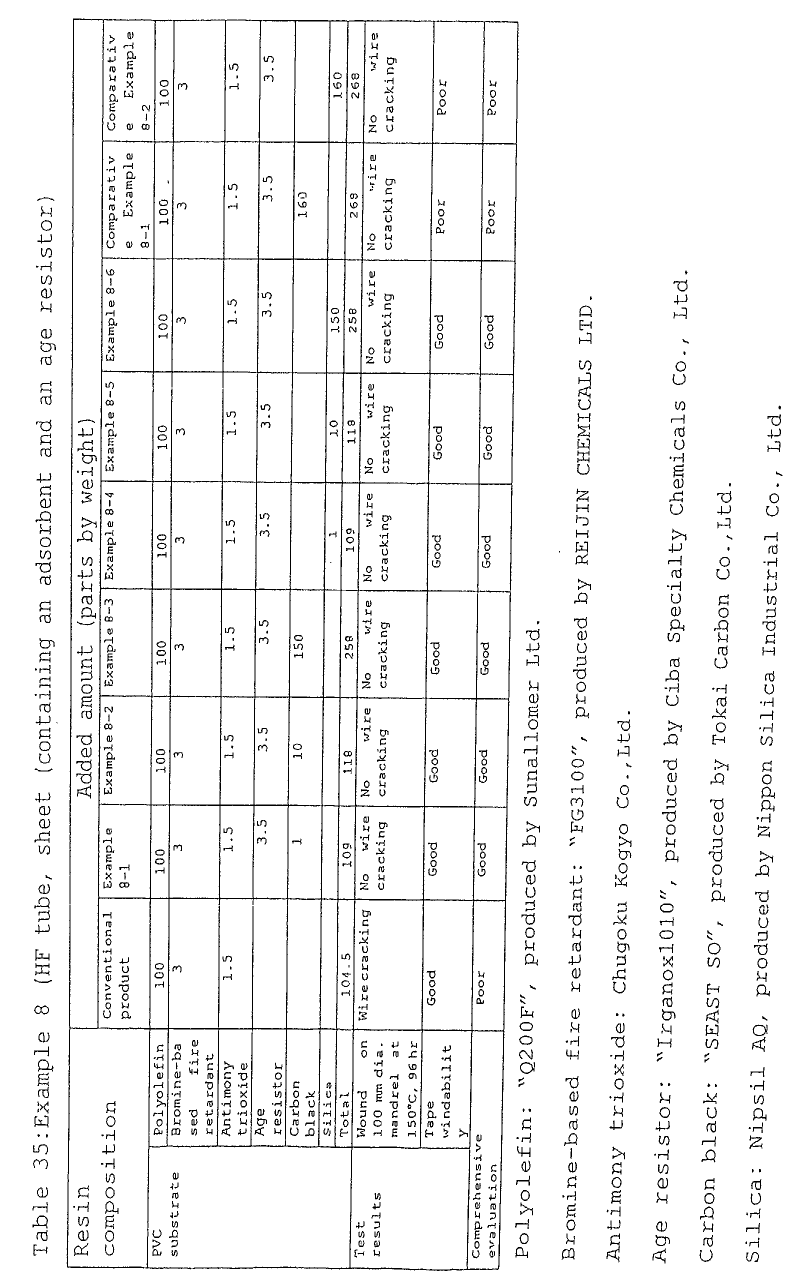

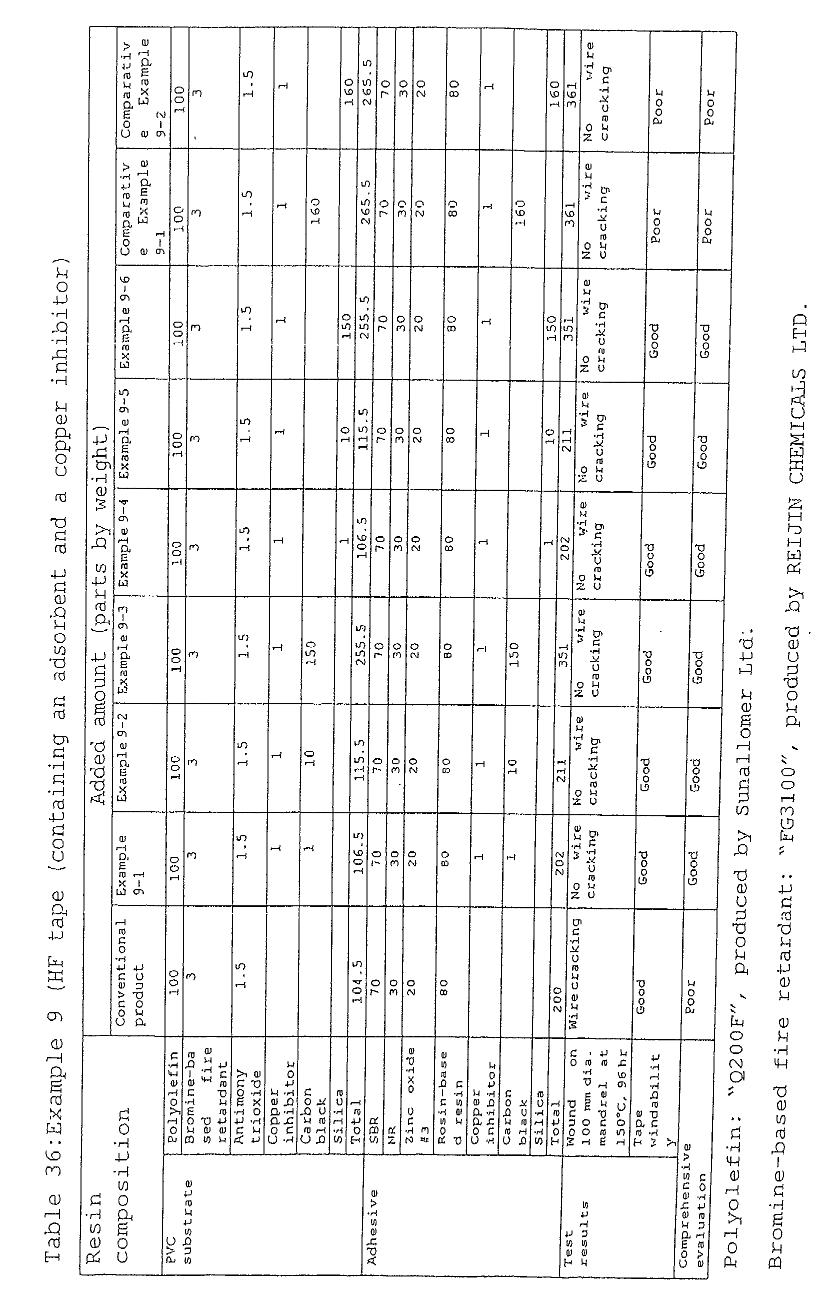

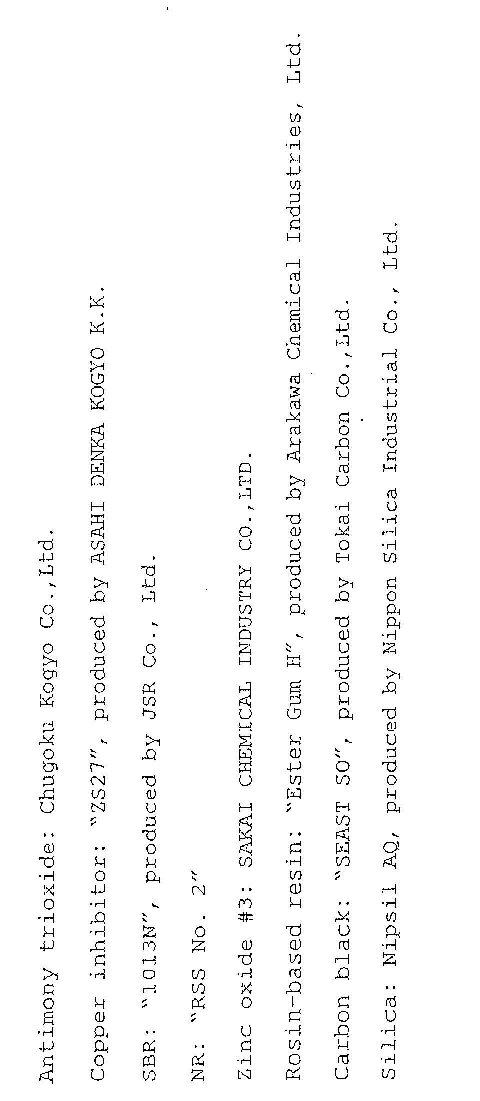

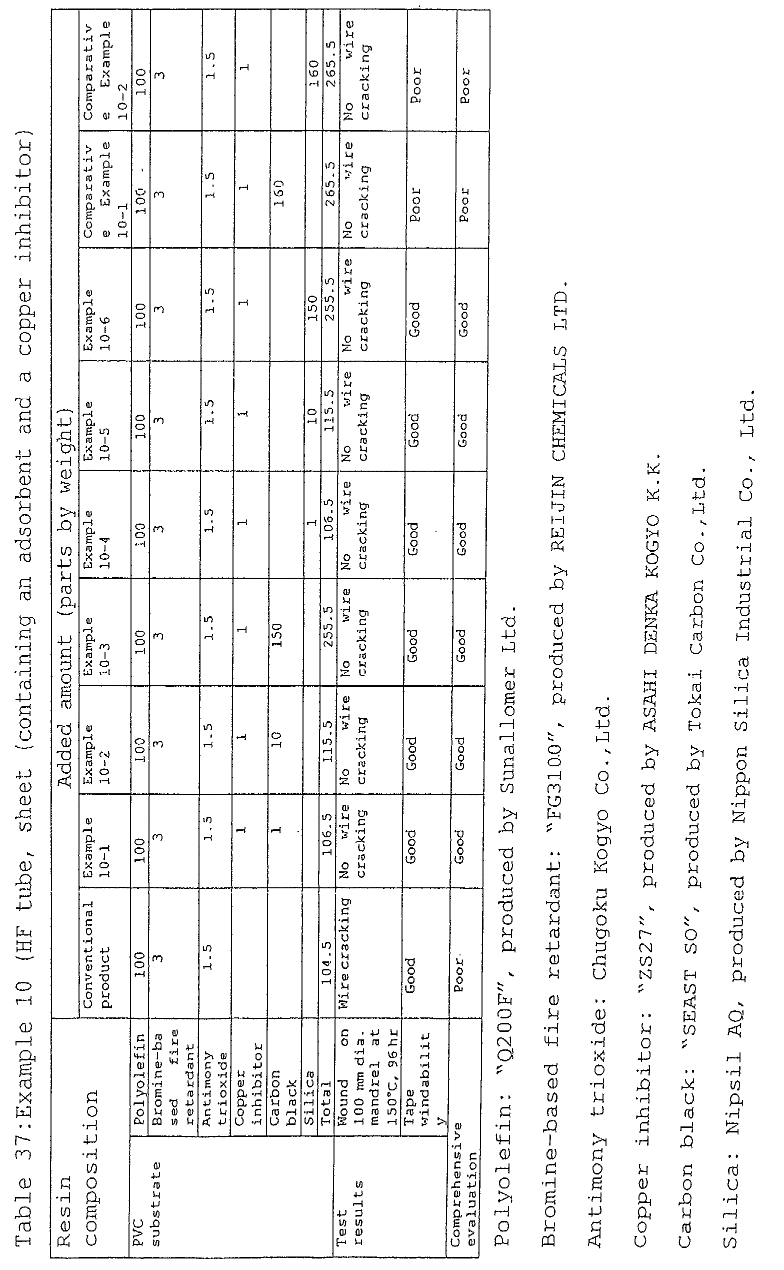

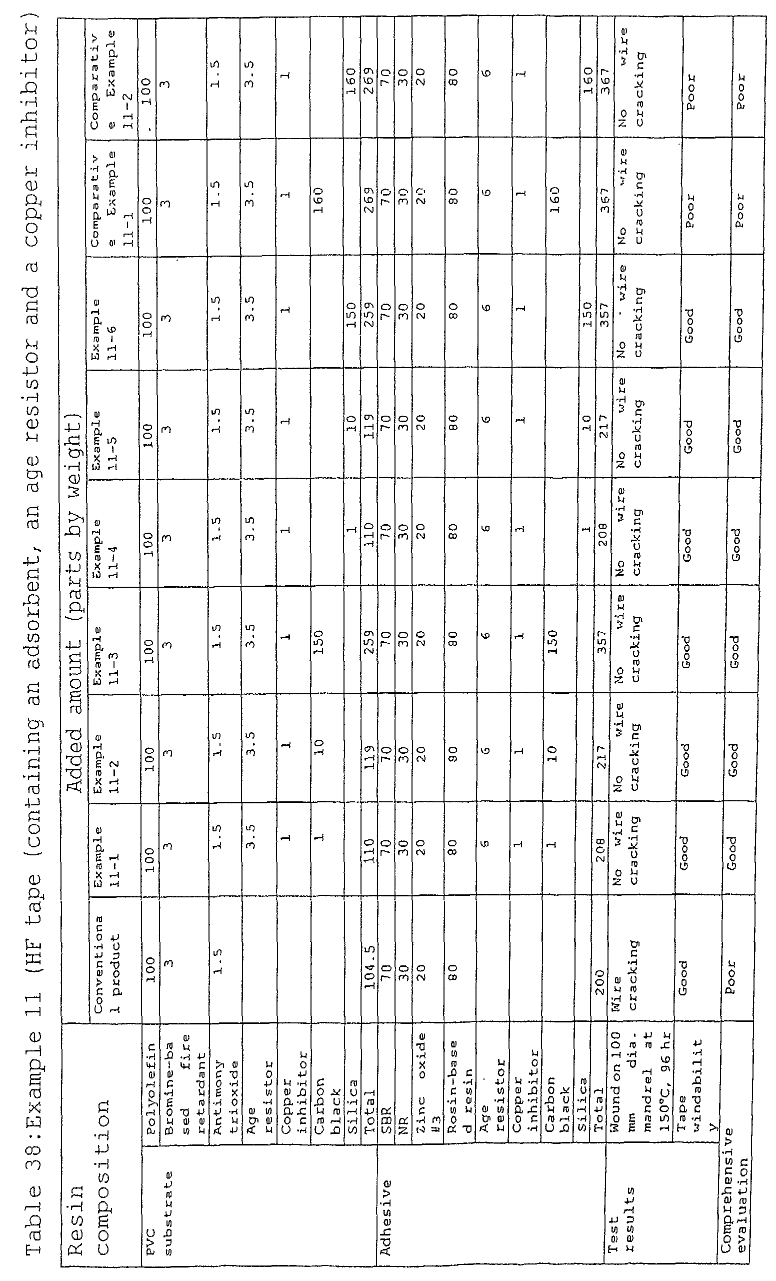

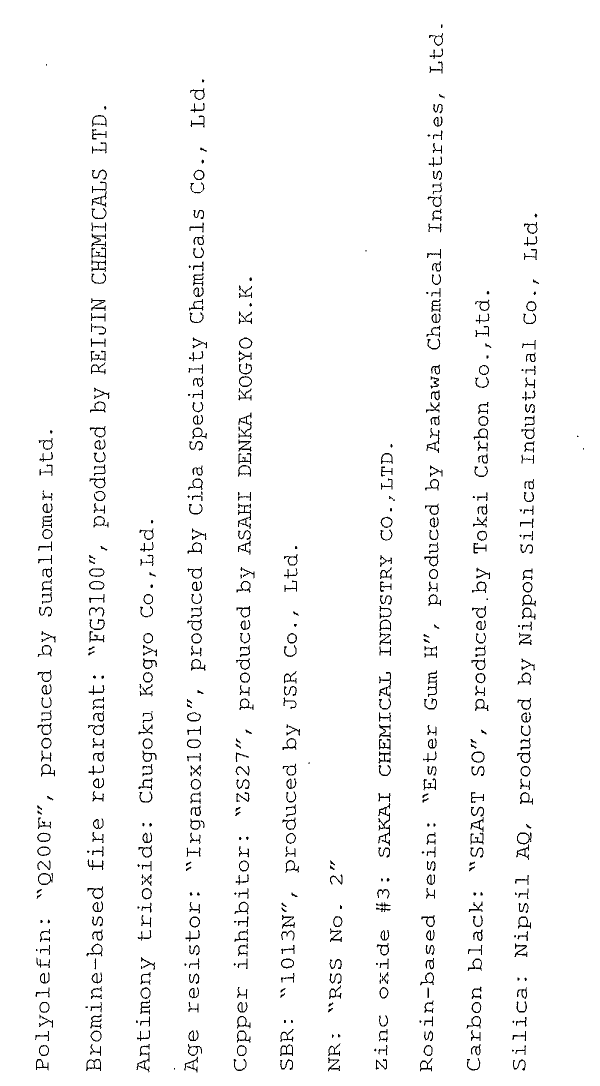

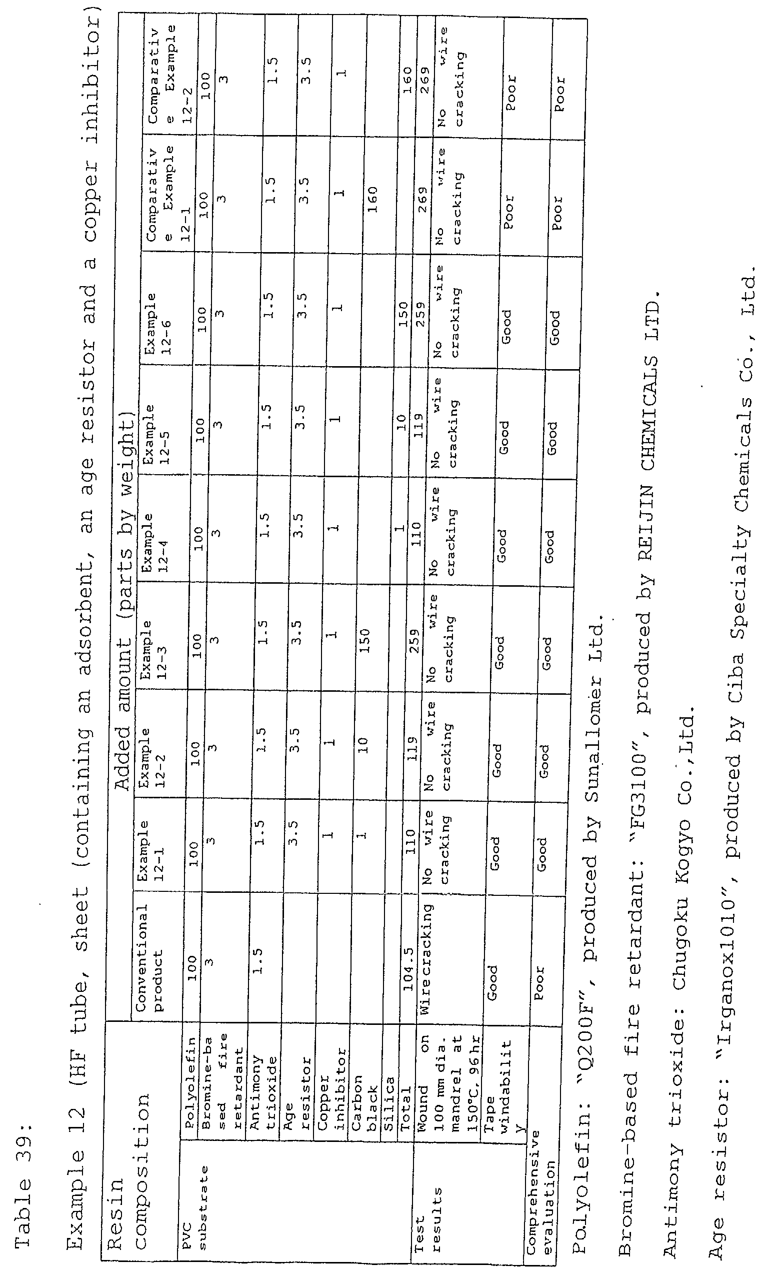

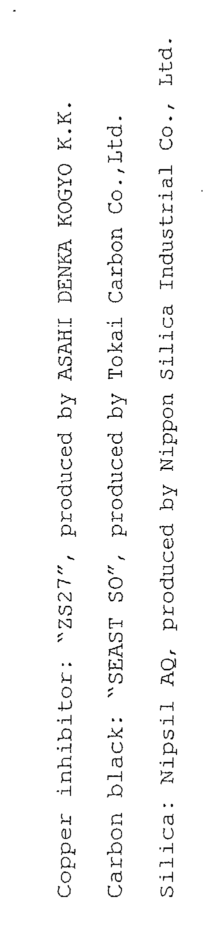

The various compositions will be described hereinafter. The tape, tube and sheet with HF adhesive of Examples 7 to 12 set forth in Tables 34 to 39 each comprise a substrate comprising a polyolefin-based resin as a base polymer. The substrate comprises a bromine-based fire retardant, and antimony trioxide in an amount of 3 parts by weight and 1.5 parts by weight, respectively, based on 100 parts by weight of the polyolefin-based resin. The compounds set forth in Tables 34 and 35 include the same compound as mentioned above (conventional product), the same compound as mentioned above but comprising a proper amount of an adsorbent (carbon black or silica) and a predetermined amount of an age resistor (Examples 7-1 to 7-6 and 8-1 to 8-6) incorporated therein and the same compound as mentioned above but comprising an excessive amount of an adsorbent (carbon black or silica) and a predetermined amount of an age resistor incorporated therein (Comparative Examples 7-1 and 7-2 and 8-1 and 8-2). The compounds set forth in Tables 36 and 37 include the same compound as mentioned above (conventional product), the same compound as mentioned above but comprising a proper amount of an adsorbent (carbon black or silica) and a predetermined amount of a copper inhibitor (Examples 9-1 to 9-6 and 10-1 to 10-6) incorporated therein and the same compound as mentioned above but comprising an excessive amount of an adsorbent (carbon black or silica) and a predetermined amount of a copper inhibitor incorporated therein (Comparative Examples 9-1 and 9-2 and 9-1 and 9-2). The compounds set forth in Tables 38 and 39 include the same compound as mentioned above (conventional product), the same compound as mentioned above but comprising a proper amount of an adsorbent (carbon black or silica) and a predetermined amount of an age resistor and a copper inhibitor incorporated therein (Examples 11-1 to 11-6 and 12-1 to 12-6) and the same compound as mentioned above but comprising an excessive amount of an adsorbent (carbon black or silica) and a predetermined amount of an age resistor and a copper inhibitor incorporated therein (Comparative Examples 11-1 and 11-2 and 12-1 and 12-2).

In other words, Examples 7 to 12 set forth in Tables 34 to 39 are common in that the tape-like, tubular and sheet-like substrates with HF adhesive comprise an adsorbent incorporated therein. Examples 9 and 10 each correspond to Examples 7 and 8 except that the age resistor is replaced by a copper inhibitor. Examples 11 and 12 each correspond to Examples 7 and 8 (or Examples 9 and 10) except that the age resistor (copper inhibitor) is replaced by an age resistor and a copper inhibitor.

The proportion of the age resistor in the substrate of HF protective material is adjusted almost equal to the aforementioned proportion of the age resistor in HF wire, i.e., 3%. The proportion of the age resistor is defined to be content based on the organic polymer (polyolefin) The proportion is adjusted to 3.5% (3.5/100 x 100 = 3.5%). The proportion of the copper inhibitor in the substrate of HF protective material is adjusted almost equal to half the aforementioned proportion of the copper inhibitor in HF wire, i.e., 1%. The proportion of the copper inhibitor is defined to be content based on the organic polymer (polyolefin) . The proportion is adjusted to 1% (1/100 x 100 = 1%).

The tapes with HF adhesive of Examples 7, 9 and 11 set forth in Tables 34, 36 and 38 each comprise the aforementioned substrate having an adhesive comprising a rubber-based material such as styrene butadiene rubber (SBR) and NR provided on the entire one side thereof. As the adhesive to be provided on the surface of the substrate there was used a compound comprising SBR (styrene butadiene rubber), NR (natural rubber), zinc oxide and a rosin-based resin in an amount of 70 parts by weight, 30 parts by weight, 20 parts by weight and 80 parts by weight, respectively. Those set forth in Table 34 include the same compound as mentioned above (conventional product), the same compound as mentioned above but comprising a proper amount of an adsorbent (carbon black and silica) and a predetermined amount of an age resistor incorporated therein (Examples 7-1 to 7-6), and the same compound as mentioned above but comprising an excessive amount of an adsorbent (carbon black and silica) and a predetermined amount of an age resistor incorporated therein (Comparative Examples 7-1 to 7-2). Those set forth in Table 36 include the same compound as mentioned above (conventional product), the same compound as mentioned above but comprising a proper amount of an adsorbent (carbon black and silica) and a predetermined amount of a copper inhibitor incorporated therein (Examples 9-1 to 9-6), and the same compound as mentioned above but comprising an excessive amount of an adsorbent (carbon black and silica) and a predetermined amount of a copper inhibitor incorporated therein (Comparative Examples 9-1 to 9-2). Those set forth in Table 38 include the same compound as mentioned above (conventional product), the same compound as mentioned above but comprising a proper amount of an adsorbent (carbon black and silica) and a predetermined amount of an age resistor and a copper inhibitor incorporated therein (Examples 11-1 to 11-6), and the same compound as mentioned above but comprising an excessive amount of an adsorbent (carbon black and silica) and a predetermined amount of an age resistor and a copper inhibitor incorporated therein (Comparative Examples 11-1 to 11-2). The thickness of the adhesive layer was 0.02 mm, and the total thickness of the substrate and the adhesive layer was 0.13 mm.

In other words, Examples 7, 9. and 11 set forth in Tables 34, 36 and 38 are common in that the adhesive to be provided on the surface of the substrate of tape with PVC adhesive, too, comprises an adsorbent incorporated therein. Example 9 corresponds to Example 7 except that the age resistor is replaced by a copper inhibitor. Examples 11 corresponds to Example 7 (or Example 9) except that the age resistor (copper inhibitor) is replaced by an age resistor and a copper inhibitor.

The proportion of the age resistor in the adhesive of the tape with HF adhesive is adjusted almost equal to the proportion of the age resistor in HF wire, i.e., 3%. The proportion of the age resistor is defined to be content based on the organic polymer (SBR, NR and rosin-based resin) . The proportion is adjusted to 3.3% (6/180 x 100 = 3.3%). The proportion of the copper inhibitor in the substrate of the tape with HF adhesive is adjusted almost equal to half the aforementioned proportion of the copper inhibitor in HF wire, i.e., 1%. The proportion of the copper inhibitor is defined to be content based on the organic polymer (SBR, NR and rosin-based resin). The proportion is adjusted to 0.56% (1/180 x 100 = 0.56%).

The conventional products, inventive products and comparative products set forth in Tables 34 to 39 thus prepared were tested and evaluated. The testing methods will be described. As samples there were used those obtained by winding the tapes, tubes and sheets with HF adhesive on the periphery of the aforementioned 5 kinds of bundles of HF wires and bundles of mixed wires, respectively (see Figs. 1 to 3B). The testing was conducted as follows. In some detail, these samples were each allowed to stand in a 150°C constant temperature tank for 96 hours. Thereafter, HF wires were withdrawn, and then wound on a mandrel having a diameter of 10 mm These HF wires were then visually confirmed to see if the covered portion underwent cracking and for windability

The results of test will be described hereinafter. The test results of Tables 34 to 39 give only distinction by the added amount of the resin composition but don't refer to the kind of the bundles of wires. This is because the difference in the kind of the bundles of wires or mixing proportion has no effect on the results of test. Accordingly, referring to the results of test on tape, tube and sheet with HF adhesive, the various products were judged good in the windability test but underwent cracking on HF wire and judged poor (P). Further, Comparative Examples 7-1 to 7-2, 8-1 to 8-2, 9-1 to 9-2, 10-1 to 10-2, 11-1 to 11-2 and 12-1 to 12-2 underwent no cracking in wires but exhibited deteriorated windability and thus were judged poor (P). Examples 7-1 to 7-6, 8-1 to 8-6, 9-1 to 9-6, 10-1 to 10-6, 11-1 to 11-6 and 12-1 to 12-6 showed no cracking, a good windability and hence a good comprehensive evaluation result.

The foregoing results show that when a wire harness protective material (tape-like material, tubular material and sheet-like material with adhesive) comprising as a main component a polyolefin-based halogen-free resin material comprising a proper amount of an adsorbent (carbon black or silica) and a predetermined amount of an age resistor and/or copper inhibitor incorporated therein is wound on the periphery of a bundle of HF coated soft copper wires or a bundle of mixed coated soft copper wires, HF wires undergo no cracking and the deterioration of thermal aging resistance of HF wires can be prevented.

The reason for this phenomenon can be thought as follows. Firstly, it is thought that the incorporation of an adsorbent in HF protective material makes it possible to enhance the thermal aging resistance of HF protective material itself. This is because carbon black and silica which are used as adsorbent act to enhance durability and enhance heat resistance and acid resistance, respectively, making it possible to protect HF wire and hence prevent the deterioration of thermal aging resistance of HF wire.

Secondly, this can be thought because HF protective material comprises an adsorbent incorporated therein, preventing the migration of the plasticizer in PVC wire particularly in a bundle of mixed wires into HF protective material.

Thirdly, this can be thought because HV protective material (HF protective material and adhesive in the case of tape) comprises an age resistor and a copper inhibitor incorporated therein, making it possible for HF protective material to act as a barrier that relaxes the effect of water content in the air or the adhesive on HF wire. In this arrangement, the deterioration of thermal aging resistance of HF wire can be prevented.

Fourthly, this can be thought because when HF protective material comprises an age resistor or a copper inhibitor incorporated therein in a predetermined proportion, there occurs a predetermined relationship between the proportion of the age resistor or the copper inhibitor in HF protective material and the proportion of the age resistor and the copper inhibitor which have previously been contained in HF wire, substantially eliminating "concentration gradient causing diffusion" of the age resistor and/or the copper inhibitor between HF wire and HF protective material and hence preventing the diffusion of the age resistor and/or the copper inhibitor from HF wire into HF protective material particularly due to the action of the plasticizer in PVC wire as a carrier in the case of bundle of mixed wires.

Fifthly, this can be thought because the prevention of migration of plasticizer and the prevention of diffusion of the age resistor and/or the copper inhibitor make a synergistic effect.

The invention is not limited to the aforementioned embodiments of implementation of the invention. Various changes and modifications can be made therein without departing from the spirit and scope thereof. For example, while the aforementioned embodiments have bee described with reference to PVC resin-based and polyole fin-based wire harness protective materials, the composition of the wire harness protective material is not limited to the aforementioned embodiments. While the aforementioned embodiments have been described with reference to a polyolefin-based wire harness protective material having a small amount of a bromine-based fire retardant incorporated therein (low halogen wire harness protective material), a wire harness protective material totally free of halogen element may be used.

In other words, the essence of the invention lies in the incorporation of an adsorbent in these tape-like, tubular or sheet-like materials with adhesive as wire harness protective material that makes it possible to avoid any adverse effects between HF wire and wire harness protective material or FVC wire even in the case where the wire harness protective material is applied to a bundle of HF wires or a bundle of HF wires and PVC wires in admixture and hence attain stabilization of wire quality and prolongation of wire life leading to permanent use of wire harness.

### [Example]

Still further, preferred embodiments of implementation of the invention will be further described hereinafter.

Firstly, as insulating material-covered wires to be used in various bundles of wires to which the wire harness protective material according to the present example is applied there were prepared the following three kinds of insulating material-covered wires. The first kind of an insulating material-covered wire was HF wire comprising a wire covering material totally free of halogen element as set forth in Table 1A. The HF wire used comprises a wire covering material mainly composed of a polyolefinic polypropylene resin having magnesium hydroxide as a fire retardant, an age resistor (phenolic age resistor) and a copper inhibitor incorporated therein in an amount of 80 parts by weight, 3 parts by weight and 1 part by weight, respectively, based on 100 parts by weight of the polypropylene resin as set forth in Table 1A. The proportion of the age resistor is 1.63% by weight (3/184 x 100 = 1.63%) based on the total weight of the polymer, which is 3% (3/100 x 100 = 3%) based on the organic polymer (polypropylene) in the age resistor to be incorporated in HF wire.

**Table 40A:**

| HF(halogen-free) wire | | | |
|---|---|---|---|
| Wire covering material | Resin composition | Added amount (parts by weight) | Trade name/make |
| | Polypropylene | 100 | "RB610A", produced by Idemitsu Petrochemical Co., Ltd. |
| | Fire retardant (magnesium hydroxide) | 80 | "Kisuma5", produced by Kyowa Chemical Industry Co., Ltd. |
| | Age resistor | 3 | "Irganox1010" produced by Ciba Specialty Chemicals Co., Ltd. |
| | Copper inhibitor | 1 | "CDA-1", produced by ASAHI DENKA KOGYO K.K. |
| | Total | 184 | |
| Electrical conductor | Material | | |
| | Soft copper wire | | |

The second kind of an insulating material-covered wire was a PVC wire comprising a covering material totally free of age resistor as set forth in Table 40B. The PVC wire used comprises a wire covering material having DINP (diisononyl phthalate) as a plasticizer, calcium carbonate as a filler and a zinc/calcium-based stabilizer incorporated therein in an amount of 40 parts by weight, 20 parts by weight and 5 parts by weight, respectively, based on 100 parts by weight of polyvinyl chloride (polymerization degree P: 1,300) as set forth in Table 40B.

**Table 40B:**

| PVC (polyvinyl chloride) wire | | | |
|---|---|---|---|
| Wire covering material | Resin composition | Added amount (parts by weight) | Trade name/make |
| | PVC (P = 1,300) | 100 | TOSOH CORPORATION |
| | DINP (plasticizer) | 40 | DAIHACHI CHEMICAL INDUSTRY CO., LTD. |
| | Filler (calcium carbonate) | 20 | "Super #1700", produced by MARUO CALCIUM CO., LTD. |
| | Stabilizer | 5 | "Rup110", produced by ASAH I DENKA KOGYO K.K. |
| | Total | 165 | |
| Electrical conductor | Material | | |
| | Soft copper wire | | |

The third kind of an insulating material-covered wire was a PVC wire comprising a covering material having an age resistor incorporated therein (hereinafter simply referred to as "PVC age resistant wire") as set forth in Table 40C. The PVC age resistant wire used comprises a wire covering material having DINP (diisononyl phthalate) as a plasticizer, calcium carbonate as a filler, a zinc/calcium-based stabilizer and an age resistor incorporated therein in an amount of 40 parts by weight, 20 parts by weight, 5 parts by weight and 4.5 parts by weight, respectively, based on 100 parts by weight of polyvinyl chloride (polymerizationdegreep: 1,300) as set forth in Table 40C. The proportion of the age resistor is 2.65% by weight (4.5/169.5 x 100 = 2.65%) based on the total weight of the polymer, which is 3.21% (4.5/140 x 100 = 3.21%) based on the organic polymer (PVC and DINP) in the age resistor to be incorporated in PVC wire.

**Table 40C:**

| PVC age-resistant wire | | | |
|---|---|---|---|
| Wire covering material | Resin composition | Added amount (parts by weight) | Trade name/make |
| | PVC (P = 1,300) | 100 | TOSOH CORPORATION |
| | DINP (plasticizer) | 40 | DAIHACHI CHEMICAL INDUSTRY CO., LTD. |
| | Filler (calcium carbonate) | 20 | "Super #1700", produced by MARUO CALCIUM CO., LTD. |
| | Stabilizer | 5 | "Rup110", produced by ASAHI DENKA KOGYO K.K. |
| | Age resistor | 4.5 | "Irganox1010" produced by Ciba Specialty Chemicals Co., Ltd. |
| | Total | 169.5 | |
| Electrical conductor | Material | | |
| | Soft copper wire | | |

The three kinds of insulated wires each were obtained by twisting 7 soft copper wires having a diameter of 0.32 mm to a twisted copper wire having an outer diameter of 1.0 mm as an electrical conductor, and then covering the periphery of the electrical conductor by the respective insulating material set forth in Tables 40A to 40C. For example, the HF wire as the first kind of insulated wire was obtained by mixing the resin composition set forth in Table 40A in a twin-screw kneader at amixing temperature of 250°C, pelletizing the mixture in a pelletizer to obtain a pelletized composition, and then extruding the composition through an extruder into a sheet having a thickness of 0.3 mm which is then formed as a covering material layer on the periphery of the electrical conductor comprising twisted 7 wires. The extrusion temperature was 250°C. The PVC wires as the second and third kinds of insulated wires were each obtained by mixing the resin composition set forth in Table 40B or 40C in a twin-screw kneader at a mixing temperature of 180°C, pelletizing the mixture in a pelletizer to obtain a pelletized composition, and then extruding the composition through an extruder into a sheet having a thickness of 0.3 mm which is then formed as a covering material layer on the periphery of the electrical conductor comprising twisted 7 wires. The extrusion temperature was 180°C.

As various bundles of wires to which the wire harness protective material according to the present example is applied there were prepared the following 5 kinds of bundles of wires. One of the 5 kinds of bundles of wires was a bundle of 30 HF wires set forth in Table 40A. The remaining four bundles of wires each were a bundle of HF wires set forth in Table 40A and PVC wires set forth in Table 40B or 40C in admixture. The various bundles of wires each had 30 wires in total. In the bundles of mixed wires, PVC wires or PVC age resistant wires and HF wires were mixed at a ratio of 25 : 5, 20 : 10, 10 : 20 and 5 : 25 by the number of wires.

The composition and test results of the wire harness protective materials prepared in the examples will be described hereinafter. Tables 41 to 44 show the composition and test results of tape, tube and sheet with PVC adhesive as wire harness protective material. Tables 41 and 42 show the composition and tests results of PVC protective material comprising an age resistor incorporated therein. Tables 43 and 44 show the composition and tests results of PVC protective material comprising a copper inhibitor and an age resistor incorporated therein.

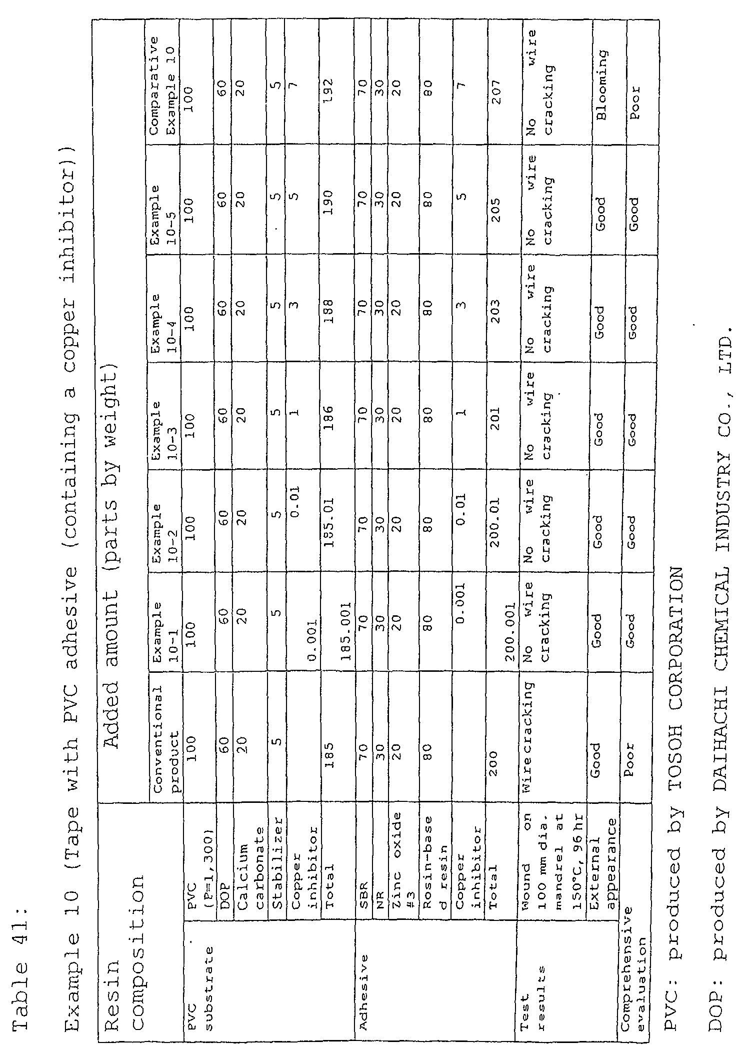

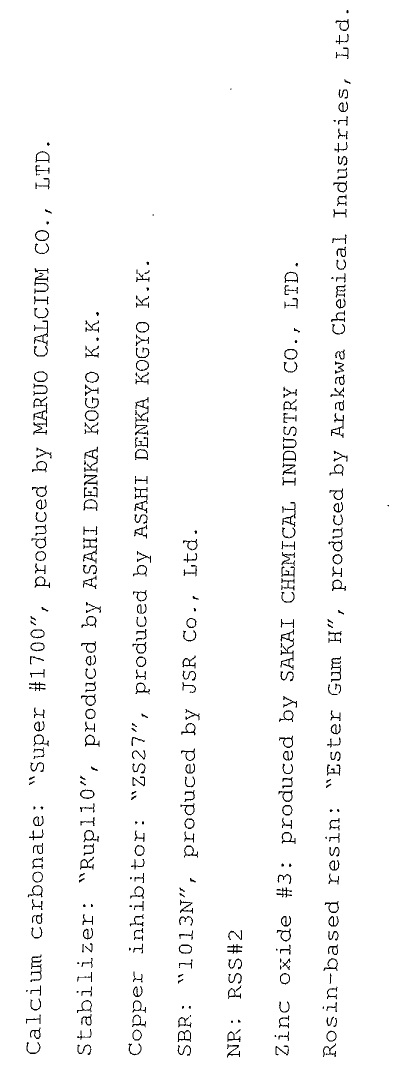

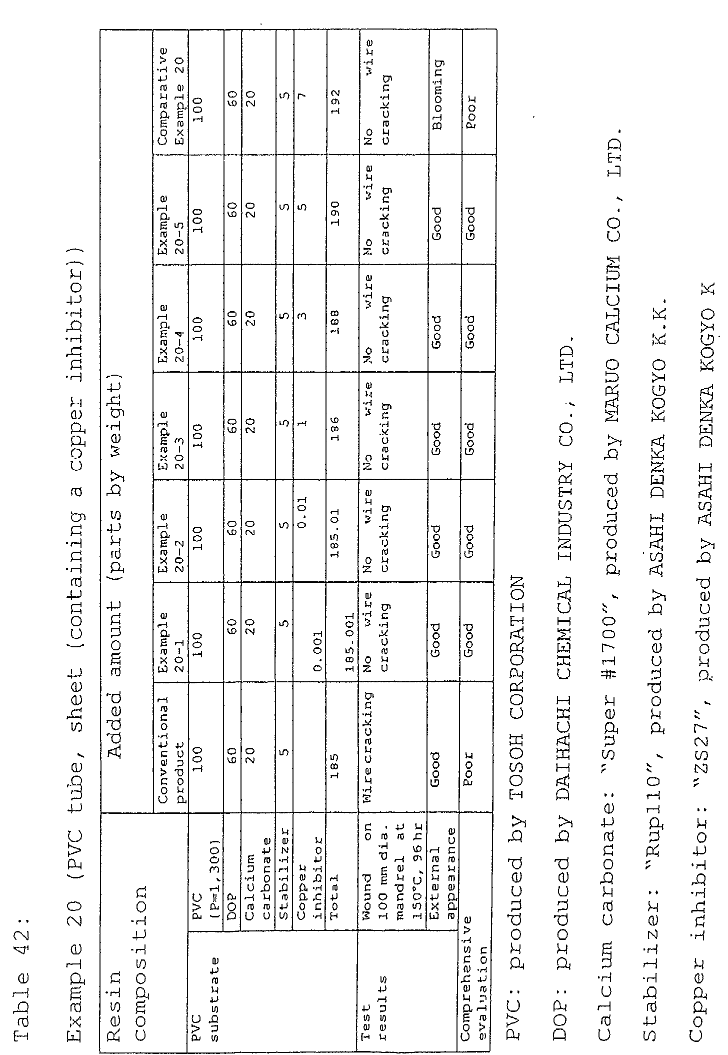

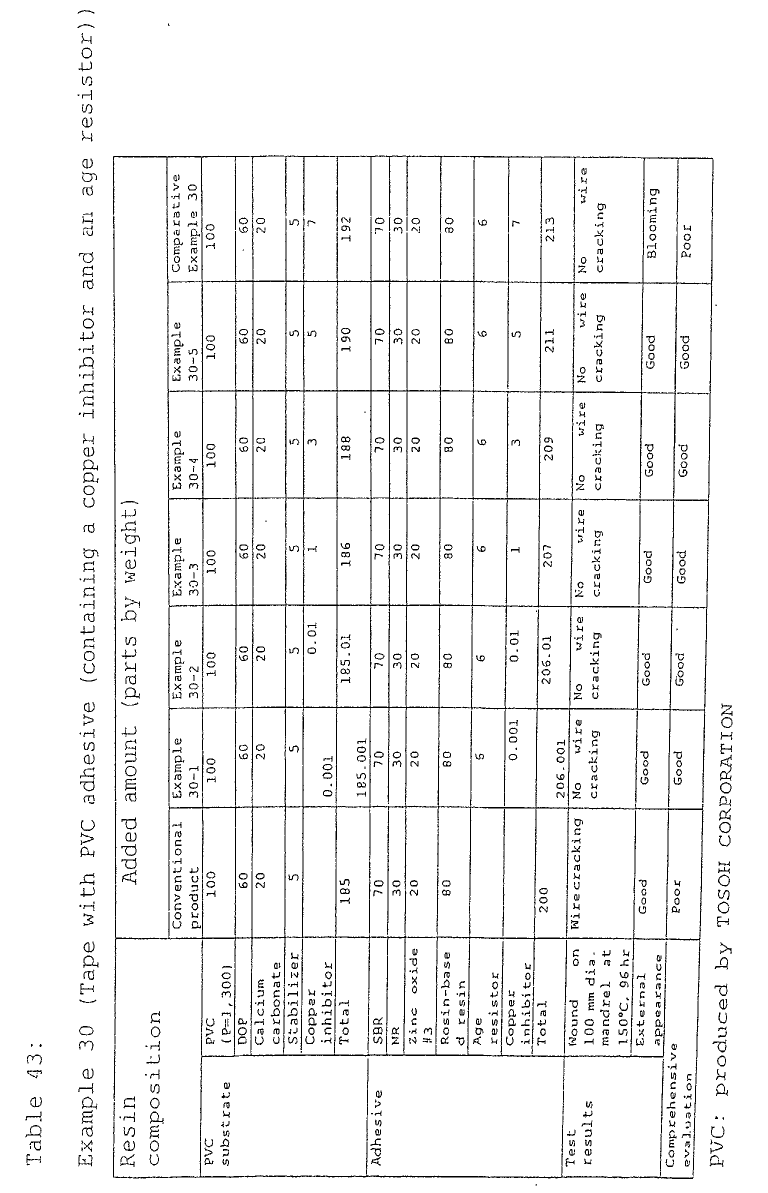

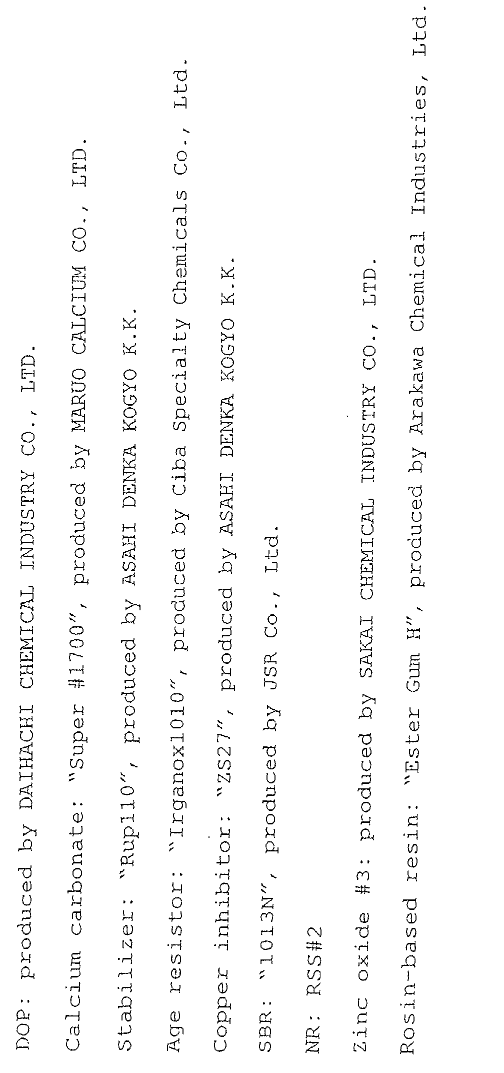

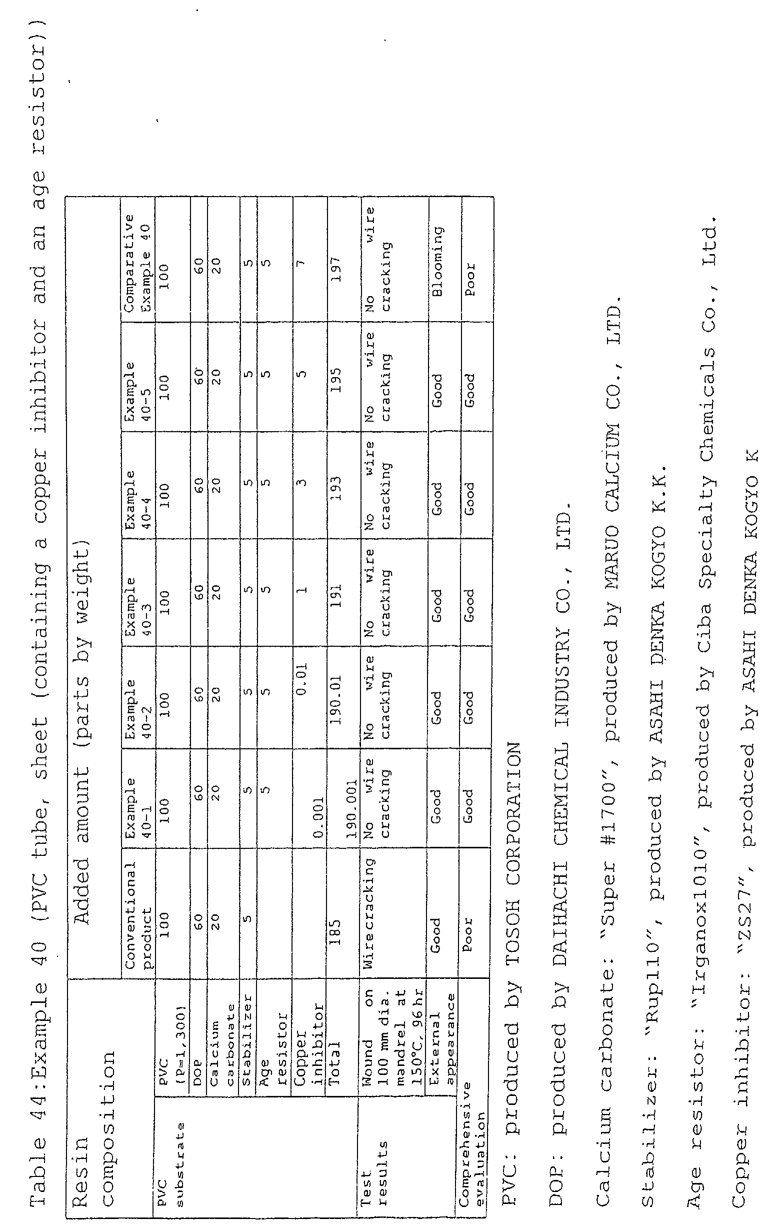

The various compositions will be described hereinafter. The tape, tube and sheet with PVC adhesive set forth in Tables 41 to 44 each comprise a substrate comprising a polyvinyl chloride (PVC) resin (polymerization degree P = 1,300) as a base polymer. The substrate comprises DOP (dioctyl phthalate) as a plasticizer, calcium carbonate as a filler and a zinc/calcium-basedstabilizerinanamountof 60 parts by weight, 20 parts by weight and 5 parts by weight, respectively, based on 100 parts by weight of PVC resin. The compositions set forth in Tables 41 and 42 include the same composition as mentioned above totally free of copper inhibitor (conventional product), the same composition as mentioned above but comprising a proper amount of a copper inhibitor incorporated therein (Examples 10-1 to 10-5 and 20-1 to 20-5) and the same composition as mentioned above but comprising an excessive amount of a copper inhibitor (Comparative Examples 10 and 20). The compositions set forth in Tables 43 and 44 include the same composition as mentioned above totally free of copper inhibitor and age resistor (conventional product), the same composition as mentioned above but comprising a proper amount of a copper inhibitor and an age resistor incorporated therein (Examples 30-1 to 30-5 and 40-1 to 40-5) and the same composition as mentioned above but comprising an excessive amount of a copper inhibitor incorporated therein (Comparative Examples 30 and 40). The proportion of the age resistor In the substrate of PVC protective material is adjusted almost equal to the aforementioned proportion of the age resistor in HF wire, i.e., 3%. The proportion of the age resistor is defined to be content based on the organic polymer (PVC and DOP). The proportion is adjusted to 3.12% (5/160 x 100 = 3.12%).

The tapes with PVC adhesive of Examples 1, 3 and 5 set forth in Tables 41 and 43 each comprise the aforementioned substrate having an adhesive comprising a rubber-basedmaterial such as styrene butadiene rubber (SBR) and NR provided on the entire one side thereof. As the adhesive to be provided on the surface of the substrate there was used a compound comprising SBR (styrene butadiene rubber), NR (natural rubber), zinc oxide and a rosin-based resin in an amount of 70 parts by weight, 30 parts by weight, 20 parts by weight and 80 parts by weight, respectively. Those set forth in Table 41 include the same compound as mentioned above totally free of copper inhibitor (conventional product) , the same compound as mentioned above but comprising a proper amount of a copper inhibitor incorporated therein (Examples 10-1 to 10-5), and the same compound as mentioned above but comprising an excessive amount of a copper inhibitor incorporated therein (Comparative Example 10). Those set forth in Table 43 include the same compound as mentioned above totally free of copper inhibitor and age resistor (conventional product), the same compound as mentioned above but comprising a proper amount of a copper inhibitor and an age resistor incorporated therein (Examples 30-1 to 30-5), and the same compound as mentioned above but comprising an excessive amount of a copper inhibitor incorporated therein (Comparative Example 30). The thickness of the adhesive layer was 0.02 mm, and the total thickness of the substrate and the adhesive layer was 0.13 mm. The proportion of the age resistor in the substrate of PVC tube, tape and sheet is adjusted almost equal to the a forementioned proportion of the age resistor in HF wire, i.e., 3%. The proportion of the age resistor is defined to be content based on the organic polymer (SBR, NR and rosin-based resin) . The proportion is adjusted to 3.3% (6/180 x 100 = 3.3%).

In other words, PVC tape, tube and sheet with adhesive comprising the copper inhibitor and age resistor set forth in Tables 43 and 44 incorporated therein correspond to those comprising its substrate or optionally its adhesive layer having the compound set forth in Tables 41 and 42 mixed with an age resistor incorporated therein.

The conventional products, inventive products and comparative products set forth in Tables 41 to 44 thus prepared were tested and evaluated. The testing methods will be described. As samples there were used those obtained by winding the tapes, tubes and sheets with PVC adhesive set forth in these tables on the periphery of the aforementioned 5 kinds of bundles of HF wires and bundles of mixed wires, respectively. The testing was conducted as follows. In some detail, these samples were each allowed to stand in a 150°C constant temperature tank for 96 hours. Thereafter, HF wires were withdrawn, and then wound on a mandrel having a diameter of 10 mm. These HF wires were then visually confirmed to see if the covered portion underwent cracking.

The results of test will be described hereinafter. The test results of Tables 41 to 44 give only distinction by the added amount of the copper inhibitor but don't refer to the kind of the bundles of wires. This is because the difference in the kind of the bundles of wires or mixing proportion has no effect on the results of test. After all, referring to the results of test on tape, tube and sheet with PVC adhesive, the conventional products were judged good in external appearance but underwent cracking on HF wire and judged poor (P). Further, Comparative Examples 10, 20, 30 and 40 underwent no cracking in wires but showed blooming in tape, tube and sheet with PVC adhesive and thus were judged poor (P). Examples 10-1 to 10-5, 20-1 to 20-5, 30-1 to 30-5 and 40-1 to 40-5 showed no cracking in wire, a good external appearance and hence a good comprehensive evaluation result.

The foregoing results show that when a wire harness protective material (tape-like material, tubular material and sheet-like material with adhesive) comprising as a main component a PVC resin material comprising a proper amount of a copper inhibitor incorporated therein is wound on the periphery of a bundle of HF coated soft copper wires or a bundle of mixed coated soft copper wires, the thermal aging resistance of HF wires is good. This is thought because even when the copper inhibitor contained in HF wire is consumed, the copper inhibitor contained in the wire harness protective material diffuses into HF wire while being carried on the plasticizer, causing the copper inhibitor to be supplied into HF wire.

Further, when the wire harness protective material comprises an age resistor incorporated therein in almost the same amount as incorporated in HF wire, the age resistor in HF wire cannot be extracted due to the effect of the plasticizer. This is thought because the proportion of the age resistor in the wire harness protective material is predetermined to be almost equal to the proportion of the age resistor in HF wire, making it possible to establish a gradient of concentration (of the age resistor) that can prevent the extraction of the age resistor in HF wire even if the plasticizer migrates into HF wire.

Tables 45 to 48 show the composition and test results of tape, tube and sheet with HF adhesive as wire harness protective materials. Tables 45 and 46 show the composition and test results of those comprising a copper inhibitor incorporated therein. Tables 47 and 48 show the composition and test results of those comprising a copper inhibitor and an age resistor incorporated therein.

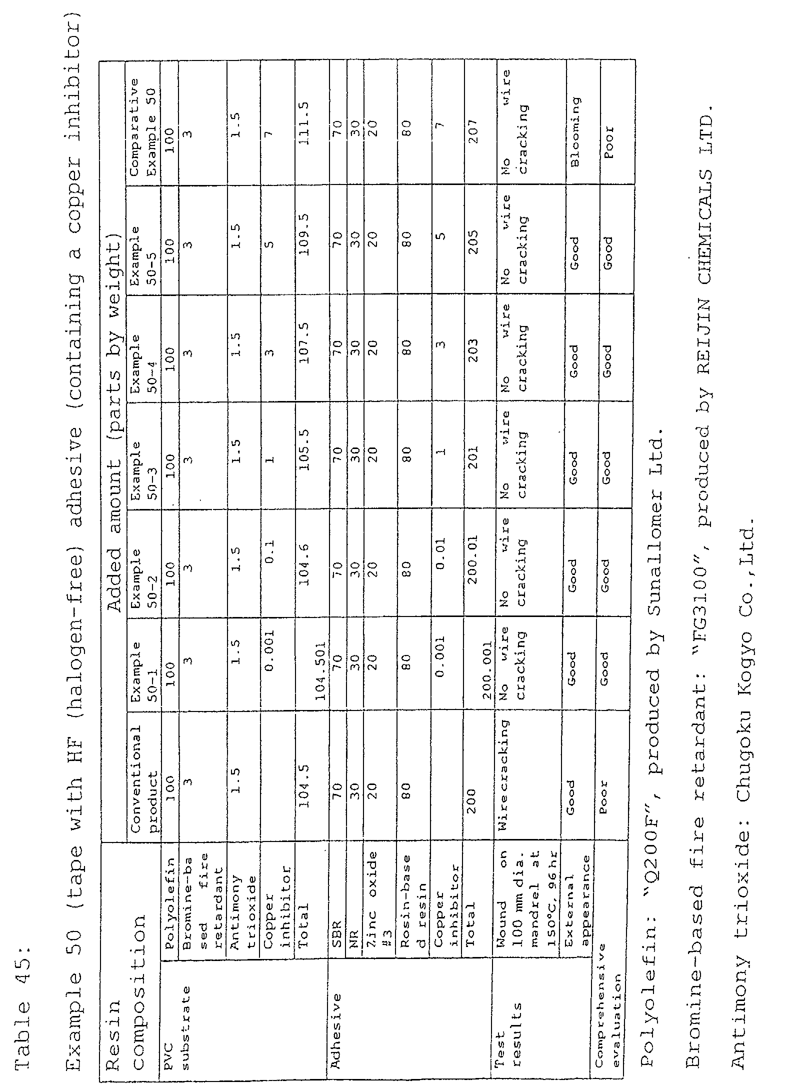

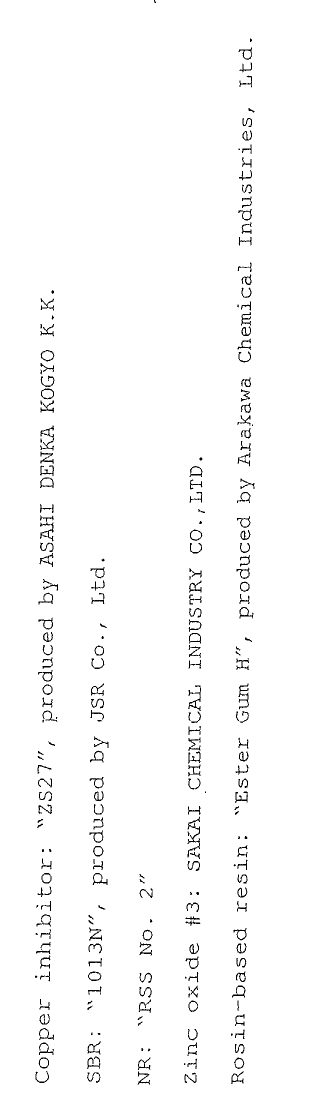

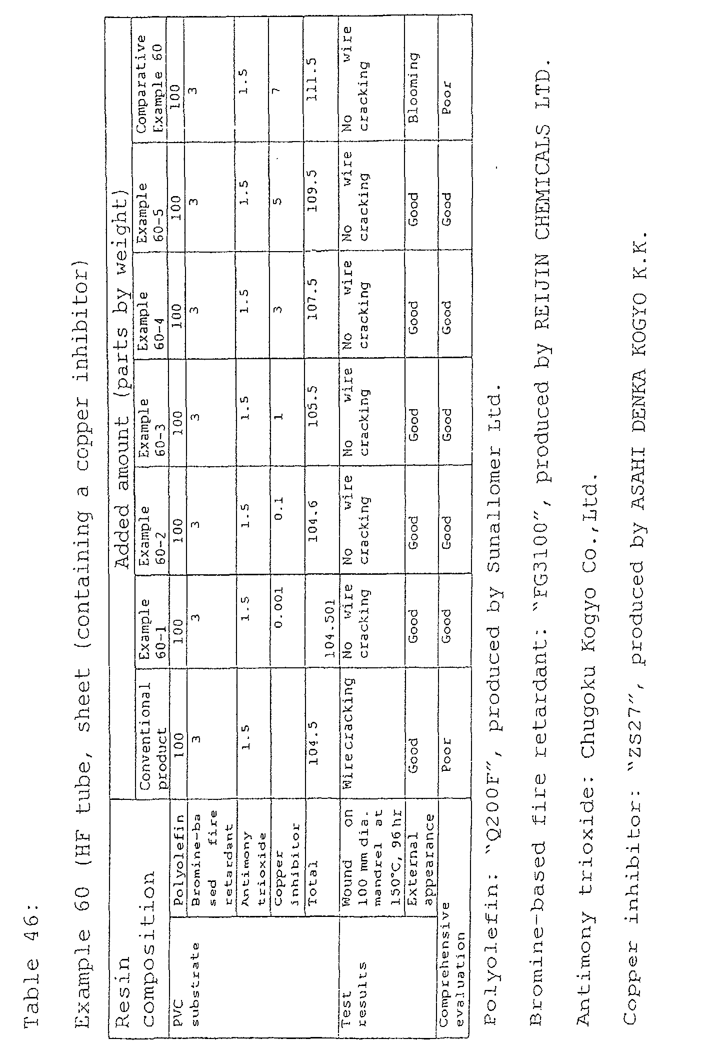

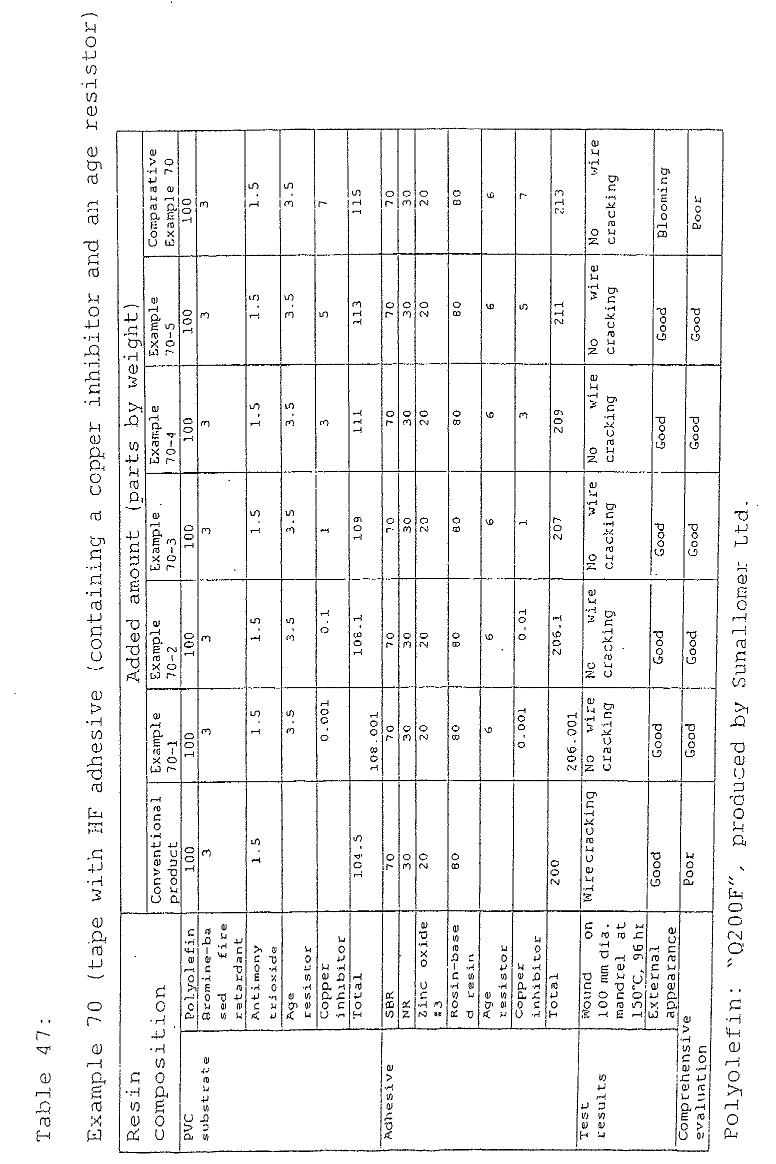

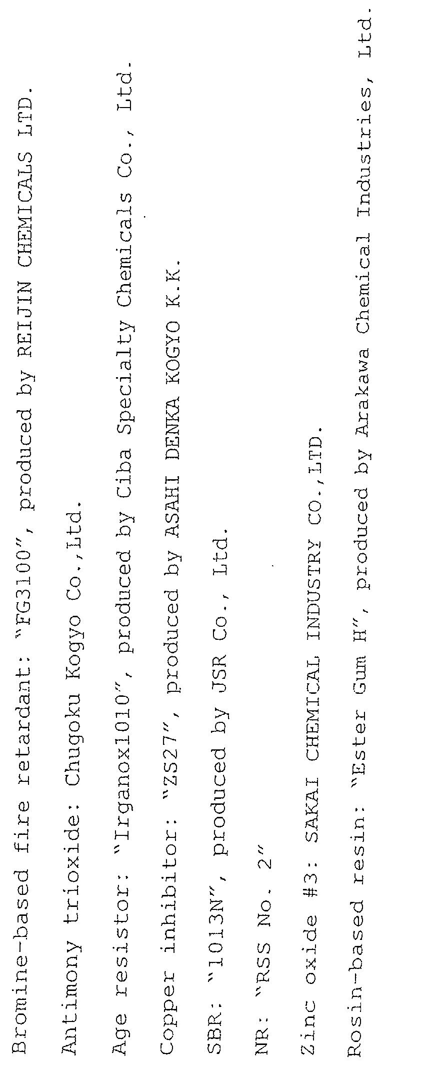

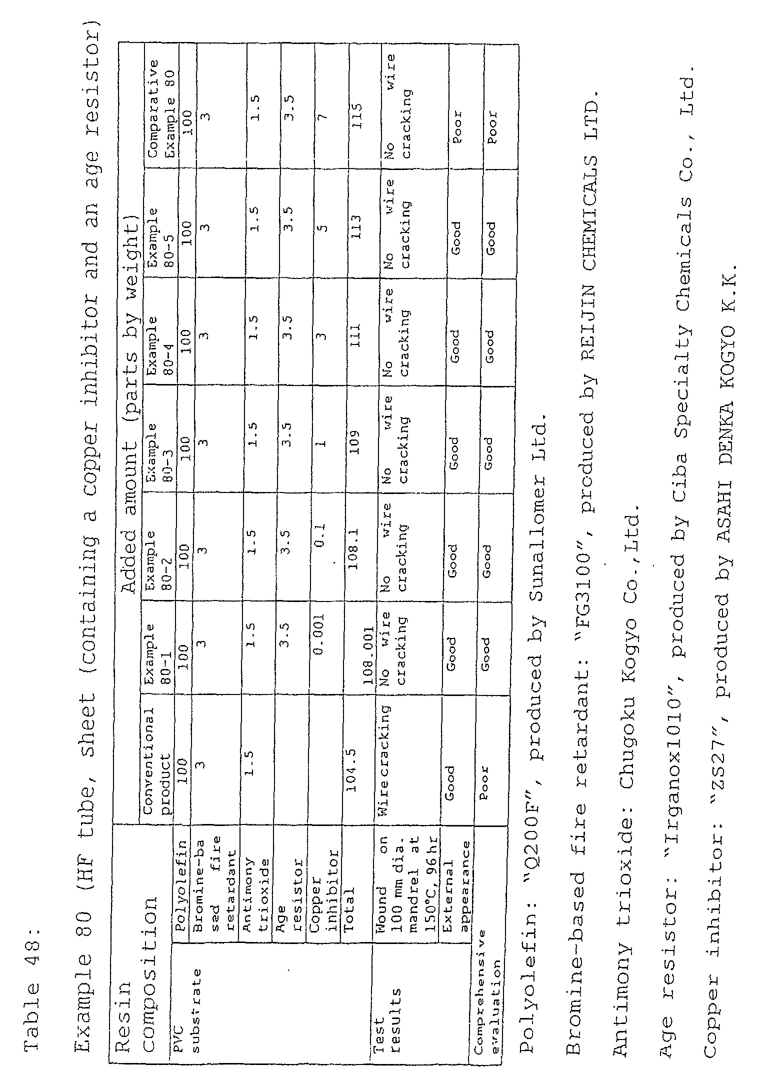

The various compositions will be described hereinafter. The tape, tube and sheet with HF adhesive set forth in Tables 45 to 48 each comprise a substrate comprising a polyolef in-based resin as a base polymer. The substrate comprises a bromine-based fire retardant, and antimony trioxide in an amount of 3 parts by weight and 1.5 parts by weight, respectively, based on 100 parts by weight of the polyolefin-based resin. The compounds set forth in Tables 45 and 46 include the same compound as mentioned above totally free of copper inhibitor (conventional product), the same compound as mentioned above but comprising a proper amount of a copper inhibitor incorporated therein (Examples 50-1 to 50-5 and 60-1 to 60-5) and the same compound as mentioned above but comprising an excessive amount of a copper inhibitor incorporated therein (Comparative Examples 50 and 60). The compounds set forth in Tables 47 and 48 include the same compound as mentioned above totally free of copper inhibitor and age resistor (conventional product), the same compound as mentioned above but comprising a proper amount of a copper inhibitor and an age resistor incorporated therein (Examples 70-1 to 70-5 and 80-1 to 80-5) and the same compound as mentioned above but comprising an excessive amount of a copper inhibitor incorporated therein (Comparative Examples 70 and 80). The proportion of the age resistor in the substrate of HF tube, tape and sheet is adjusted almost equal to the aforementioned proportion of the age resistor in HF wire, i.e., 3%. The proportion of the age resistor is defined to be content based on the organic polymer (polyolefin) . The proportion is adjusted to 3.5% (3.5/100 x 100 = 3.5%).

The tapes with HF adhesive set forth in Tables 45 and 47 each have the same composition as tape with PVC adhesive, i.e., the aforementioned substrate having an adhesive comprising a rubber-based material such as styrene butadiene rubber (SBR) and NR provided on the entire one side thereof. As the adhesive to be provided on the surface of the substrate there was used a compound comprising SBR (styrene butadiene rubber), NR (natural rubber) , zinc oxide and a rosin-based resin in an amount of 70 parts by weight, 30 parts by weight, 20 parts by weight and 80 parts by weight, respectively. Those set forth in Table 45 include the same compound as mentioned above totally free of copper inhibitor(conventional product), the same compound as mentioned above but comprising a proper amount of a copper inhibitor incorporated therein (Examples 50-1 to 50-5) , and the same compound as mentioned above but comprising an excessive amount of a copper inhibitor incorporated therein (Comparative Example 50). Those set forth in Table 47 include the same compound as mentioned above totally free of copper inhibitor and age resistor (conventional product), the same compound as mentioned above but comprising a proper amount of a copper inhibitor and an age resistor incorporated therein (Examples 70-1 to 70-5), and the same compound as mentioned above but comprising an excessive amount of a copper inhibitor incorporated therein (Comparative Example 70). The thickness of the adhesive layer was 0.02 mm, and the total thickness of the substrate and the adhesive layer was 0.13mm. The proportion of the age resistor in the substrate of HF tube, tape and sheet is adjusted almost equal to the aforementioned proportion of the age resistor in HF wire, i.e., 3%. The proportion of the age resistor is defined to be content based on the organic polymer (SBR, NR and rosin-based resin). The proportion is adjusted to 3.3% (6/180 x 100 = 3.3%).

In other words, PVC tape, tube and sheet with adhesive comprising the copper inhibitor and age resistor set forth in Tables 47 and 48 incorporated therein correspond to those comprising its substrate or optionally its adhesive layer having the compound set forth in Tables 45 and 46 mixed with an age resistor incorporated therein.

The conventional products, inventive products and comparative products set forth in Tables 45 to 48 thus prepared were tested and evaluated. The testing methods will be described. As samples there were used those obtained by winding the tapes, tubes and sheets with HF adhesive set forth in these tables on the periphery of the aforementioned 5 kinds of bundles of HF wires and bundles of mixed wires, respectively. The testing was conducted as follows, In some detail, these samples were each allowed to stand in a 150°C constant temperature tank for 96 hours. Thereafter, HF wires were withdrawn, and then wound on a mandrel having a diameter of 10 mm. These HF wires were then visually confirmed to see if the covered portion underwent cracking.

The results of test will be described hereinafter. The test results of Tables 45 to 48 give only distinction by the added amount of the copper inhibitor but don't refer to the kind of the bundles of wires. This is because the difference in the kind of the bundles of wires or mixing proportion has no effect on the results of test. After all, referring to the results of test on tape, tube and sheet with HF adhesive, the conventional products were judged good in external appearance but underwent cracking on HF wire and judged poor (P). Further, Comparative Examples 50, 60, 70 and 80 underwent no cracking in wires but showed blooming in tape, tube and sheet with HF adhesive and thus were judged poor (P). Examples 50-1 to 50-5, 60-1 to 60-5, 70-1 to 70-5 and 80-1 to 80-5 showed no cracking in wire, a good external appearance and hence a good comprehensive evaluation result.

The foregoing results show that when a wire harness protective material (tape-like material, tubular material and sheet-like material with adhesive) comprising as a main component a bromine-based polyolefinic resin material comprising a proper amount or a copper inhibitor incorporated therein is wound on the periphery of a bundle or HF coated soft copper wires or a bundle of mixed coated soft copper wires, the thermal aging resistance of HF wires is good. This is thought because copper damage due to the effect of water content in the air or the adhesive can be inhibited also by the wire harness protective material.

Further, when the wire harness protective material comprises an age resistor incorporated therein in almost the same amount as incorporated in HF wire, the age resistor in HF wire can be prevented from migrating to the wire harness protective material . This is thought because the predetermination of the proportion of the age resistor in the wire harness protective material almost equal to the proportion of the age resistor in HF wire makes it possible to keep the concentration gradient equilibrated therebetween.

The invention is not limited to the aforementioned embodiments of implementation of the invention. Various changes and modifications can be made therein without departing from the spirit and scope thereof. For example, while the aforementioned embodiments have bee described with reference to PVC resin-based and polyolefin-based wire harness protective materials, the composition of the wire harness protective material is not limited to the aforementioned embodiments. While the aforementioned embodiments have been described with reference to a polyolefin-based wire harness protective material having a small amount of a bromine-based fire retardant incorporated therein (low halogen wire harness protective material), a wire harness protective material totally free of halogen element may be used.

In other words, the essence of the invention lies in the incorporation of a copper inhibitor in these tape-like, tubular or sheet-like materials with adhesive as wire harness protective material that makes it possible to supply the copper inhibitor into HF wire covering material or makes an arrangement such that the copper inhibitor can be supplied into HF wire covering material. In this arrangement, any adverse effects between HF wire and wire harness protective material or PVC wire can be avoided even in the case where the wire harness protective material is applied to a bundle of HF wires or a bundle of HF wires and PVC wires in admixture, making it possible to attain stabilization of wire quality and prolongation of wire life leading to permanent use of wire harness.

### [Advantage of the Invention]

In accordance with the wire harness protective material according to the invention, a tape-like wire harness protective material which doesn't remarkably accelerate the deterioration of the wire in the bundle of wires in wire harness, particularly wire coated with a nonhalogen-based resin, can be obtained. Further, in accordance with the wire harness comprising this wire harness protective material, a wire harness which can maintain its desired quality over an extended period of time can be obtained.

Accordingly, when such a wire harness protective material and wire harness are used in severe working atmospheres as in the surrounding of automobile engine, extremely great industrial advantages can be given such as extremely excellent reliability.

The wire harness protective material defined in Aspect 7 according to the invention comprises a tape-like, tubular or sheet-like substrate with adhesive having an adsorbent incorporated therein, making it possible to exert an effect of maintaining the excellent thermal aging resistance thereof. In this arrangement, the halogen-free insulated wire can be protected, making it possible to prevent the deterioration of thermal aging resistance of the halogen-free insulated wire

The wire harness protective material defined in Aspect 8 comprises the substrate made of a vinyl chloride resin material having an adsorbent incorporated therein, making it possible to exert an effect of preventing the migration of the plasticizer into the halogen-free insulated wire. In this arrangement, the deterioration of thermal aging resistance of the halogen-free insulated wire can be prevented.

The wire harness protective material defined in Aspect 9 comprises the substrate made of a halogen-free resin material having an adsorbent incorporated therein, making it possible to exert an effect of enhance the thermal aging resistance of the tape-like, tubular and sheet-like substrates with adhesive. In this arrangement, the halogen-free insulated wire can be protected, making it possible to prevent the deterioration of thermal aging resistance of the halogen-free insulated wire.

The wire harness protective material defined in Aspect 10 comprises the substrate having carbon black or silica incorporated therein, making it possible to exert an effect of enhance the durability of at least the substrate, if carbon black is incorporated, or enhance the heat resistance and acid resistance of at least the substrate, if silica is incorporated. Accordingly, an effect of maintaining the excellent thermal aging resistance of the wire harness protective material can be exerted. In this arrangement, the halogen-free insulated wire can be protected, making it possible to prevent the deterioration of thermal aging resistance of the halogen-free insulated wire.

The wire harness protective material defined in Aspect 11 comprises the substrate having an adsorbent incorporated therein in an amount of from 1 to 150 parts by weight based on 100 parts by weight of the base polymer of the substrate, making it possible to certainly exert the effect of the invention according to Aspect 10.

The wire harness protective material defined in Aspect 12 comprises the substrate having an age resistor and/or copper inhibitor incorporated therein, making it possible to prevent the diffusion of the age resistor and/or copper inhibitor in the covering material for halogen-free insulated wire into the wire harness protective material. In this arrangement, the halogen-free insulated wire can be protected, making it possible to prevent the deterioration of thermal aging resistance of the halogen-free insulated wire.

The wire harness protective material defined in Aspect 13 is arranged such that the content of the age resistor in the substrate is such that the proportion of the age resistor in the substrate based on the organic polymer is almost equal to the proportion of the age resistor in the halogen-free insulated wire based on the organic polymer and/or the content of the copper inhibitor in the substrate is such that the proportion of the copper inhibitor in the substrate is such that the proportion of the copper inhibitor in the substrate based on the organic polymer is equal to or half the proportion of the copper inhibitor in the halogen-free insulated wire based on the organic polymer, making it possible to substantially eliminate "concentration gradient causing diffusion" of age resistor and/or copper inhibitor between the halogen-free insulated wire and the wire harness protective material. In this arrangement, an effect of preventing the diffusion of the age resistor and/or copper inhibitor in the covering material for halogen-free insulated wire into the wire harness protective material can be exerted. In this arrangement, the halogen-free insulated wire can be protected, making it possible to prevent the deterioration of thermal aging resistance of the halogen-free insulated wire.

The wire harness protective material defined in Aspect 14 comprises the substrate and/or adhesive made of a vinyl chloride resin material or halogen-free resin material having carbon black or silica as an adsorbent incorporated therein in an amount of from 1 to 150 parts by weight based on 100 parts by weight of the base polymer of the substrate, making it possible to exert an effect of maintaining the thermal aging resistance of the wire harness protective material. In this arrangement, the halogen-free insulated wire can be protected, making it possible to prevent the deterioration of thermal aging resistance of the halogen-free insulated wire.

The wire harness protective material defined in Aspect 15 comprises the substrate and/oradhesivehavingan age resistor and/or copper inhibitor incorporated therein in an amount such that the content of the age resistor in the substrate is such that the proportion of the age resistor in the substrate based on the organic polymer is almost equal to the proportion of the age resistor in the halogen-free insulated wire based on the organic polymer and/or the content of the copper inhibitor in the substrate is such that the proportion of the copper inhibitor in the substrate is such that the proportion of the copper inhibitor in the substrate based on the organic polymer is equal to or half the proportion of the copper inhibitor in the halogen-free insulated wire based on the organic polymer, making it possible to substantially eliminate "concentration gradient causing diffusion" of age resistor and/or copper inhibitor between the halogen-free insulated wire and the wire harness protective material. In this arrangement, an effect of preventing the diffusion of the age resistor and/or copper inhibitor in the covering material for halogen-free insulated wire into the wire harness protective material can be exerted. In this arrangement, the halogen-free insulated wire can be protected, making it possible to prevent the deterioration of thermal aging resistance of the halogen-free insulated wire.

The wire harness defined in Aspect 16 comprises a bundle of halogen-free insulated wires comprising an electrical conductor coated with a halogen-free resin material totally free of halogen element or having a lower content of halogen element than at least vinyl chloride resin or the same bundle of halogen-free insulated wires as mentioned above except that some of the wires are replaced by PVC-insulated wires comprising an electrical conductor coated with a vinyl chloride resin material covered by a wire harness protective material defined in Aspects 7 to 15 on the periphery thereof. In this arrangement, an effect of maintaining an excellent thermal aging resistance and hence prolonging the durability life can be exerted.

The wire harness defined in Aspect 17 comprises a copper inhibitor and/or age resistor incorporated in the covering material for various wires. In this arrangement, an effect of preventing the diffusion of the copper inhibitor and/or age resistor from the halogen-free insulated wire into the vinyl chloride-insulated wire or wire harness protective material can be exerted.

The wire harness protective material defined in Aspect 18 according to the invention comprises a copper inhibitor incorporated in its tape-like, tubular or sheet-like material with adhesive. In this arrangement, copper damage on a bundle of halogen-free insulated wires of electrical conductor containing copper can be inhibited.

The wire harness protective material defined in Aspect 19 comprises a tape-like, tubular or sheet-like substrate with adhesive made of a vinyl chloride resin material. In this arrangement, even when the copper inhibitor is consumed in the halogen-free insulated wire, the copper inhibitor can be supplied from the substrate into the halogen-free insulated wire.

The wire harness protective material defined in Aspect 20 comprises a tape-like, tubular or sheet-like substrate with adhesive made of a halogen-free resin material, In this arrangement, copper damage due to the effect of water content in the air or the adhesive can be inhibited.

The wire harness protective material defined in Aspect 21 comprises a copper inhibitor incorporated in its tape-like, tubular or sheet-like substrate with adhesive in an amount of from 0.001 to 5 parts by weight based on 100 parts by weight of the base polymer of the substrate. In this arrangement, the deterioration of thermal aging resistance of the wire harness protective material can be prevented.

The wire harness protective material defined in Aspect 22 comprises an age resistor incorporated in its tape-like, tubular or sheet-like substrate with adhesive. In this arrangement, the deterioration of the wire can be prevented.

The wire harness protective material defined in Aspect 23 comprises an age resistor incorporated in its tape-like, tubular or sheet-like substrate with adhesive in an amount such that the proportion of the age resistor in the substrate is almost equal to the proportion of the age resistor in the wire. In this arrangement, the diffusion of the age resistor from the halogen-free insulated wire into the wire harness protective material can be prevented.

The wire harness protective material defined in Aspect 24 comprises a copper inhibitor incorporated in the substrate and/or adhesive of the tape-like material with adhesive. In this arrangement, copper damage on a bundle of halogen-free insulated wires of electrical conductor containing copper coated with a halogen-free resin material can be inhibited. Further, since the content of the copper inhibitor in the substrate and/or adhesive is from 0.001 to 5 parts by weight based on 100 parts by weight of the base polymer of the substrate, an effect of preventing the deterioration of thermal aging resistance of the wire harness protective material can be exerted.

The wire harness protective material defined in Aspect 25 comprises an age resistor incorporated in the substrate and/or adhesive of the tape-like material with adhesive. In this arrangement, the deterioration of the wire can be prevented. Further, since the proportion of the age resistor in the substrate and/or adhesive is predetermined almost equal to the proportion of the age resistor in the wire, an effect of preventing the diffusion of the age resistor from the halogen-free insulated wire into the wire harness protective material can be exerted.

The wire harness defined in Aspect 9 comprises a bundle of halogen-free insulated wires comprising an electrical conductor containing copper coated with a halogen-free resin material or the same bundle of halogen-free insulated wires as mentioned above except that some of the wires are replaced by PVC-insulated wires comprising an electrical conductor coated with a vinyl chloride resin material coated with a wire harness protective material defined in Aspects 18 to 25 on the periphery thereof. In this arrangement, the deterioration of thermal aging resistance of the wire harness can be prevented, making it possible to prolong the life thereof.

In accordance with the wire harness defined in Aspect 27, the covering material for the various wires in the bundle of halogen-free insulated wires comprising a halogen-free resin material or the same bundle of wires as mentioned above except that some of the wires are replaced by the insulated wires comprising a vinyl chloride resin material comprises a copper inhibitor and/or an age resistor incorporated therein. In this arrangement, the copper inhibitor can be supplied from PVC age-resistant wire into HF wire. At the same time, an effect of inhibiting the diffusion of the age resistor from HF wire into PVC age-resistant wire can be exerted.

## Claims

1. A wire harness protective material comprising:
a tape-like substrate made of a nonhalogen-based resin or vinyl chloride resin having a smaller content of halogen element than vinyl chloride resin compound or free of halogen element coated with an adhesive comprising an acrylic resin as a main component on at least one side thereof.

2. The wire harness protective material as defined in Claim 1, wherein
the adhesive and/or the substrate comprises an age resistor and/or copper inhibitor incorporated therein.

3. The wire harness protective material as defined in Claim 2, wherein
the content of the age resistor in the adhesive and/or the substrate falls within the range of from 10% to 500% based on the content of the age resistor in the covering material for the wire coated with the nonhalogen-based resin containing an age resistor in the bundle of wires wound by the wire harness protective material,
the content of the copper inhibitor in the adhesive falls within the range of from 0.001 to 5 parts by weight based on 100 parts by weight of the adhesive resin component and
the content of the copper inhibitor in the substrate falls within the range of from 0.001 to 5 parts by weight based on 100 parts by weight of the substrate resin component.

4. The wire harness protective material as defined in Claim 3, wherein
the age resistor incorporated in the adhesive and/or the substrate is of the same kind as that of the age resistor incorporated in the covering material for wire.

5. A wire harness comprising:
the wire harness protective material as defined in Claim 1 wound on a bundle of wires.

6. A wire harness comprising:
the wire harness protective material as defined in Claim 1 wound on a bundle of wires having at least a wire coated with a nonhalogen-based resin containing an age resistor and having a smaller content of halogen element than vinyl chloride resin compound or free of halogen element.

7. A tape-like, tubular or sheet-like wire harness protective material which is adapted to cover the periphery of a bundle of halogen-free insulated wires comprising:
an electrical conductor coated with a halogen-free resin material totally free of halogen element or having a lower content of halogen element than at least vinyl chloride resin or the same bundle of halogen-free insulated wires as mentioned above except that some of the wires are replaced by PVC-insulated wires comprising an electrical conductor coated with a vinyl chloride resin material, wherein
the tape-like, tubular and sheet-like substrates with an adhesive comprise an adsorbent incorporated therein.

8. The wire harness protective material as defined in Claim 7, wherein
the substrate is made of a vinyl chloride resin material.

9. The wire harness protective material as defined in Claim 7, wherein
the substrate is made of a halogen-free resin material totally free of halogen element or having a lower content of halogen element than at least vinyl chloride resin.

10. The wire harness protective material as defined in Claim 7, wherein
the adsorbent is carbon black or silica.

11. The wire harness protective material as defined in Claim 10, wherein
the content of the adsorbent is from 1 to 150 parts by weight based on 100 parts by weight of the base polymer of the substrate,

12. The wire harness protective material as defined in Claim 7, wherein
the substrate comprises an age resistor and/or a copper inhibitor incorporated therein.

13. The wire harness protective material as defined in Claim 12, wherein
the content of the age resistor in the substrate is such that the proportion of the age resistor in the substrate based on the organic polymer is almost equal to the proportion of the age resistor in the halogen-free insulated wire based on the organic polymer, and/or
the content of the copper inhibitor in the substrate is such that the proportion of the copper inhibitor In the Substrate is such that the proportion of the copper inhibitor in the substrate based on the organic polymer is equal to or half the proportion of the copper inhibitor in the halogen-free insulated wire based on the organic polymer.

14. A wire harness comprising a bundle of halogen-free insulated wires comprising:
an electrical conductor coated with a halogen-free resin material totally free or halogen element or having a lower content of halogen element than at least vinyl chloride resin or the same bundle of halogen-free insulated wires as mentioned above except that some of the wires are replacedby PVC-insulated wires comprising an electrical conductor coated with a vinyl chloride resin material covered by the wire harness protective material defined in Claim 7 on the periphery thereof,

15. The wire harness as defined in Claim 14, wherein the covering material for the various wires in the bundle of halogen-free insulated wires or the same bundle of wires as mentioned above except that some of the wires are replaced by the PVC-insulated wires comprises a copper inhibitor and/or an age resistor incorporated therein.

16. A tape-like, tubular or sheet-like wire harness protective material which is adapted to cover the periphery of a bundle of halogen-free insulated wires comprising;
an electrical conductor coated with a halogen-free resin material totally free of halogen element or having a lower content of halogen element than at least vinyl chloride resin or the same bundle of halogen-free insulated wires as mentioned above except that some of the wires are replaced by PVC-insulated wires comprising an electrical conductor coated with a vinyl chloride resin material, wherein
the tape-like substrate with an adhesive comprises a substrate made of a vinyl chloride resin or a halogen-free resin material totally free of halogen element or having a lower content of halogen element than at least vinyl chloride resin and the substrate, and/or
the adhesive comprises carbon or silica incorporated therein as an adsorbent in an amount of from 1 to 150 parts by weight based on 100 parts by weight of the base polymer of the substrate.

17. The wire harness protective material as defined in Claim 16, wherein
the tape-like material with an adhesive is arranged such that the content of the age resistor in the substrate is such that the proportion of the age resistor in the substrate based on the organic polymer is almost equal to the proportion of the age resistor in the halogen-free insulated wire based on the organic polymer, and/or
the content of the copper inhibitor in the substrate is such that the proportion of the copper inhibitor in the substrate is such that the proportion of the copper inhibitor in the substrate based on the organic polymer is equal to or half the proportion of the copper inhibitor in the halogen-free insulated wire based on the organic polymer.

18. A wire harness comprising a bundle of halogen-free insulated wires comprising;
an electrical conductor coated with a halogen-free resin material totally free of halogen element or having a lower content of halogen element than at least vinyl chloride resin or the same bundle of halogen-free insulated wires as mentioned above except that some of the wires are replaced by PVC-insulated wires comprising an electrical conductor coated with a vinyl chloride resin material covered by the wire harness protective material defined in Claim 16 on the periphery thereof.

19. The wire harness as defined in Claim 18, wherein the covering material for the various wires in the bundle of halogen-free insulated wires or the same bundle of wires as mentioned above except that some of the wires are replaced by the PVC-insulated wires comprises a copper inhibitor and/or an age resistor incorporated therein.

20. A tape-like, tubular or sheet-like wire harness protective material which is adapted to cover the periphery of a bundle of halogen-free insulated wires comprising:
an electrical conductor containing copper coated with a halogen-free resin material totally free of halogen element or having a lower content of halogen element than at least vinyl chloride resin or the same bundle of halogen-free insulated wires as mentioned above except that some of the wires are replaced by PVC-insulated wires comprising an electrical conductor coated with a vinyl chloride resin material, wherein
the tape-like, tubular and sheet-like materials with an adhesive comprises a copper inhibitor incorporated therein.

21. The wire harness protective material as defined in Claim 20, wherein
the tape-like, tubular and sheet-like substrates are made of vinyl chloride resin material.

22. The wire harness protective material as defined in Claim 20, wherein
the tape-like, tubular and sheet-like substrates are-made of a halogen-free resin material totally free of halogen element or having a lower content of halogen element than at least vinyl chloride resin.

23. The wire harness protective material as defined in Claim 21, wherein
the content of the copper inhibitor in the tape-like, tubular or sheet-like material with adhesive is from 0.001 to 5 parts by weight based on 100 parts by weight of the base polymer of the substrate.

24. The wire harness protective material as defined in Claim 23, wherein
the tape-like, tubular or sheet-like material with adhesive comprises an age resistor incorporated therein.

25. The wire harness protective material as defined in Claim 24, wherein
the content of the age resistor in the tape-like, tubular or sheet-like material with adhesive is such that the proportion of the age resistor in the substrate is almost equal to the proportion of the age resistor in the wire.

26. The wire harness protective material as defined in Claim 22, wherein
the content of the copper inhibitor in the tape-like, tubular or sheet-like material with adhesive is from 0.001 to 5 parts by weight based on 100 parts by weight of the base polymer of the substrate.

27. The wire harness protective material as defined in Claim 26, wherein
the tape-like, tubular or sheet-like material with adhesive comprises an age resistor incorporated therein.

28. The wire harness protective material as defined in Claim 27, wherein
the content of the age resistor in the tape-like, tubular or sheet-like material with adhesive is such that the proportion of the age resistor in the substrate is almost equal to the proportion of the age resistor in the wire.

29. A wire harness comprising a bundle of halogen-free insulated wires comprising:
an electrical conductor containing copper coated with a halogen-free resin material totally free of halogen element or having a lower content of halogen element than at least vinyl chloride resin or the same bundle of halogen-free insulated wires as mentioned above except that some of the wires are replaced by PVC-insulated wires comprising an electrical conductor coated with a vinyl chloride resin material coated with a wire harness protective material defined in Claim 20 on the periphery thereof.

30. The wire harness as defined in Claim 29, wherein the covering material for the various wires in the bundle of halogen-free insulated wires or the same bundle of wires as mentioned above except that some of the wires are replaced by the PVC-insulated wires comprises a copper inhibitor and/or an age resistor incorporated therein.

31. A wire harness protective material which is adapted to cover the periphery of a bundle of halogen-free insulated wires comprising:
an electrical conductor containing copper coated with a halogen-free resin material totally free of halogen element or having a lower content of halogen element than at least vinyl chloride resin or the same bundle of halogen-free insulated wires as mentioned above except that some of the wires are replaced by PVC-insulated wires comprising an electrical conductor coated with a vinyl chloride resin material, wherein
the tape-like material with adhesive comprises a copper inhibitor incorporated therein in an amount of from 0.001 to 5 parts by weight based on 100 parts by weight of the base polymer of the substrate.

32. The wire harness protective material as defined in Claim 31, wherein
the tape-like material with adhesive comprises an age resistor incorporated in the substrate and/or adhesive and the content of the age resistor in the substrate and/or adhesive is such that the proportion of the age resistor in the substrate is almost equal to the proportion of the age resistor in the wire.

33. A wire harness comprising a bundle of halogen-free insulated wires comprising:
an electrical conductor containing copper coated with a halogen-free resin material totally free of halogen element or having a lower content of halogen element than at least vinyl chloride resin or the same bundle of halogen-free insulated wires as mentioned above except that some of the wires are replaced by PVC-insulated wires comprising an electrical conductor coated with a vinyl chloride resin material coated with a wire harness protective material defined in Claim 31 on the periphery thereof.

34. The wire harness as defined in Claim 33, wherein the covering material for the various wires in the bundle of halogen-free insulated wires or the same bundle of wires as mentioned above except that some of the wires are replaced by the PVC-insulated wires comprises a copper inhibitor and/or an age resistor incorporated therein,
